# EUROPEAN PATENT APPLICATION

(11) **EP 4 231 379 A1**
(43) Date of publication of application: **23.08.2023**
(21) Application number: 22827657.2
(22) Date of filing: 23.06.2022
(51) Int. Cl.: H01M 4/134

(54) **SILICON-OXYGEN MATERIAL, NEGATIVE ELECTRODE MATERIAL AND PREPARATION METHOD THEREFOR, AND LITHIUM ION BATTERY**

(30) Priority: 25.06.2021 CN 202110711962
(71) Applicant: BTR NEW MATERIAL GROUP CO., LTD., Shenzhen, Guangdong 518106 (CN); Dingyuan New Energy Technology Co., Ltd., Huizhou, Guangdong 516227 (CN)
(72) Inventor: CHEN, Xi, Shenzhen, Guangdong 518106 (CN); PANG, Chunlei, Shenzhen, Guangdong 518106 (CN); DENG, Zhiqiang, Shenzhen, Guangdong 518106 (CN); LIANG, Tengyu, Shenzhen, Guangdong 518106 (CN); REN, Jianguo, Shenzhen, Guangdong 518106 (CN); HE, Xueqin, Shenzhen, Guangdong 518106 (CN)
(74) Representative: advotec.
(86) International application number: PCT/CN2022/100781
(87) International publication number: WO 2022/268165

(57) **Abstract**

The present application provides a silicon oxygen material, a negative electrode material, and its preparation method, and a lithium ion battery. The silicon oxygen material includes a silicon oxide having a chemical formula SiOₓ, where 0<x<2, wherein the silicon oxygen material is primary particles having a Wadell sphericity greater than 0.92. The negative electrode material provided by the present disclosure includes the silicon oxide having a high sphericity, the silicon oxide has a more stable structure during a cycling process, so that it is capable of avoiding the problem of cracking of particles of the material due to repeated generation of the SEI film, thereby improving cycling performance of the material and reducing the volume expansion due to SEI film generation.

## Description

### CROSS-REFERENCE TO RELATED APPLICATION

The present application claims priority of Chinese Patent Application No. 2021107119628 filed with China Patent Office on June 25, 2021, entitled "SILICON OXIDE, NEGATIVE ELECTRODE MATERIAL, METHOD FOR PREPARING THE SAME, AND APPLICATION", the content of which is hereby incorporated by reference in its entirety.

### TECHNICAL FIELD

The present disclosure relates to the field of negative electrode materials and, in particular, to a silicon oxygen material, a negative electrode material, a method for preparing the negative electrode material, and a lithium ion battery.

### BACKGROUND

A SiOₓ (0<x<2) negative electrode material is a most potential negative electrode material for lithium ion batteries, which simultaneously overcomes drawbacks of low specific capacity of graphite, a high lithium-storage voltage plateau of elementary substance silicon, relatively poor cycle and rate performances, while having good safety and a wide source of raw materials. However, the SiOₓ negative electrode material has a volume expansion rate of about 200% during a cycling process, so that how to reduce the volume expansion of the SiOₓ negative electrode material is always a research hot spot in the industry.

### SUMMARY

In view of this, the present disclosure provides a silicon oxygen material, a negative electrode material, a method for preparing the negative electrode material, and a lithium ion battery, which are capable of improving the initial Coulombic efficiency of the silicon negative electrode material and reducing production costs.

In a first aspect, the present disclosure provides a silicon oxygen material. The silicon oxygen material includes a silicon oxide having a chemical formula SiOₓ in which 0<x<2. The silicon oxygen material is primary particle having a Wadell sphericity greater than 0.92.

The silicon oxygen material provided by the present disclosure includes silicon oxide, the silicon oxide is primary particles of the spherical silicon oxide having a Wadell sphericity greater than 0.92. The spherical particles have an isotropic feature so that they are uniformly contract and expand outward along a radial direction during a cycling process. Due to the isotropic stresses, stability of the structure can be maintained, and "weak spots" suffered from stress due to non-uniform shape do not occur. Therefore, it greatly reduces the possibility of electrolyte permeating into the interior of the material due to collapse of particle structure and fracture of SEI film, effectively avoids infiltration of electrolyte into the interior of the material to generate new SEI films continuously, avoids repeated crushing and generation of SEI films, reduces volume expansion of the materials, and improves cycling performance of the material. Moreover, the specific surface area of the spherical particles in a same volume of particles is smallest, the SEI film generated during the cycling process is minimized, so that irreversible charge capacity is effectively reduced, thereby further reducing irreversible capacity loss during the cycling process.

In some embodiments, the silicon oxygen material further includes at least one of a reducing metal and a reducing metal compound.

The silicon oxygen material provided by the present disclosure includes a silicon oxide, a reducing metal and/or a reducing metal compound. Si, O and reducing metals are uniformly distributed in primary particles of the silicon oxide. The silicon oxide is primary particles of the spherical silicon oxide having a Wadell sphericity greater than 0.92. The spherical particles have an isotropic feature so that they are uniformly contract and expand outward along a radial direction during a cycling process. Due to the isotropic stresses, stability of the structure can be maintained, and "weak spots" suffered from stress due to non-uniform shape do not occur. Therefore, it greatly reduces the possibility of electrolyte permeating into the interior of the material due to collapse of particle structure and fracture of SEI film, effectively avoids infiltration of electrolyte into the interior of the material to generate new SEI films continuously, avoids repeated crushing and generation of SEI films, reduces volume expansion of the materials, and improves cycling performance of the material. Moreover, the specific surface area of the spherical particles in a same volume of particles is smallest, the SEI film generated during the cycling process is minimized, so that irreversible charge capacity is effectively reduced, thereby further reducing irreversible capacity loss during the cycling process.

In some feasible embodiments, the reducing metal includes at least one of an alkali metal, an alkaline earth metal, and a transition metal.

In some feasible embodiments, the reducing metal element includes at least one of Li, K, Mg, Al, Ca, Zn, Na, and Ti.

In some feasible embodiments, the oxygen element in the silicon oxygen material has a mass content of 10% to 50%.

In some feasible embodiments, the reducing metal element in the silicon oxygen material has a mass content of 0.5% to 50%.

In some feasible embodiments, distributed faces of Si, O, and reducing metal elements have a uniformly dispersion state in an elemental distribution spectrum obtained by scanning SEM facets of the primary particles of the silicon oxygen material with X-rays.

In some feasible embodiments, the reducing metal compound includes at least one of a reducing metal oxide, a reducing metal silicide, and a reducing metal silicate.

In some feasible embodiments, the reducing metal compound includes a reducing metal silicate uniformly distributed within the primary particles.

In some feasible embodiments, the reducing metal compound includes a reducing metal silicate, a mass content of the reducing metal silicate in the silicon oxygen material is 10% to 80%.

In some feasible embodiments, the reducing metal compound includes a reducing metal silicate including lithium silicate.

In some feasible embodiments, the reducing metal compound includes a reducing metal silicate including a lithium silicate. The lithium silicate includes at least one of Li₂SiO₃, Li₄SiO₄, Li₂Si₂O₅, and Li₂Si₃O₇.

In some feasible embodiments, the reducing metal compound includes a reducing metal silicate including a lithium silicate. The lithium silicate is Li₂Si₂O₅.

In some feasible embodiments, the reducing metal compound includes a reducing metal silicate including a crystalline Li₂Si₂O₅, the crystalline Li₂Si₂O₅ has a crystal grain size smaller than 20 nm.

In some feasible embodiments, the reducing metal compound includes a reducing metal silicate including a crystalline Li₂Si₂O₅, and a mass content of Li₂Si₂O₅ in the silicon oxygen material is 20% to 80%.

In some feasible embodiments, the reducing metal compound includes a reducing metal silicate including a lithium silicate, a molar ratio of Si to Li in the silicon oxygen material is (1 to 50): 1.

In some feasible embodiments, the Wadell sphericity of the primary particles is greater than 0.95.

In some feasible embodiments, the Si microcrystalline size in the silicon oxygen material is smaller than or equal to 20 nm.

In some feasible embodiments, the Si microcrystalline size in the silicon oxygen material is smaller than or equal to 10 nm.

In some feasible embodiments, a D₅₀ of the silicon oxygen material is smaller than or equal to 50 µm.

In some feasible embodiments, a particle size distribution of the silicon oxygen material satisfies: 3 µm<D₅₀<10 µm, 2 µm≤D₁₀≤5 µm, and 0.8≤(D₉₀-D₁₀)/D₅₀≤1.2.

In some feasible embodiments, the silicon oxygen material has a specific surface area smaller than 10 m²/g.

In some feasible embodiments, the silicon oxygen material further includes a non-metal doping element.

In a second aspect, the present disclosure provides a negative electrode material including the aforementioned silicon oxygen material.

In some feasible embodiments, the negative electrode material further includes a carbon layer coated on a surface of the silicon oxygen material.

In the above solution, by forming a carbon layer on the surface of the silicon oxygen material primary particles, it is possible to effectively inhibit fracture and pulverization of primary particles during a charging and discharging cycle, and alleviate the volume expansion of the silicon oxygen material, thereby achieving structural stability of primary particles inside the negative electrode material. After coating with the carbon layer, better electrical conductivity and stability can be achieved, it can effectively avoid filling internal pores of the material by carbon, and improve first effect of the material, so that the negative electrode material can exhibit characteristics of high capacity, long cycle life, high rate performance, and low expansion, etc.

In some feasible embodiments, a difference between a maximum value and a minimum value of a thickness of the carbon layer is smaller than the minimum value.

In some feasible embodiments, the carbon layer has a thickness of 10 nm to 500 nm.

In some feasible embodiments, a D₅₀ of the negative electrode material is smaller than or equal to 100 µm.

In some feasible embodiments, the negative electrode material further includes a metal compound including at least one of a metal oxide, a metal silicide, and a metal silicate.

In some feasible embodiments, the negative electrode material further includes a carbon material. The silicon oxygen material is dispersed in the carbon material. The negative electrode material is spherical particles and has a Wadell sphericity greater than 0.3.

In some feasible embodiments, the negative electrode material has a Wadell sphericity greater than 0.5.

In some feasible embodiments, the negative electrode material has a Wadell sphericity greater than 0.92.

In some feasible embodiments, in the silicon oxygen material, a mass of the oxygen element accounts for 0% to 67% of a total mass of the silicon element and the oxygen element, and 0% is excluded.

In some feasible embodiments, a D₅₀ of the negative electrode material is smaller than or equal to 40 µm.

In some feasible embodiments, the negative electrode material has a porosity smaller than 20%.

In some feasible embodiments, the silicon oxygen material accounts for 40% to 95% of the mass of the negative electrode material.

In some feasible embodiments, the negative electrode material further includes a carbon material, the silicon oxygen material dispersed in the carbon material, and the carbon material includes amorphous carbon.

In some feasible embodiments, the negative electrode material further includes a graphite.

In some feasible embodiments, the negative electrode material further includes a graphite including at least one of natural graphite, artificial graphite, and mesocarbon microbeads.

In some feasible embodiments, the negative electrode material further includes a graphite, the graphite has a mass fraction of 0% to 40%, the silicon oxygen material has a mass fraction of 40% to 95%, the carbon material has a mass fraction of 5% to 60%, based on a total mass 100% of the negative electrode material.

In some feasible embodiments, the negative electrode material further includes a carbon material grown in-situ on the surface of the silicon oxygen material, and the carbon material has a graphene structure.

In some feasible embodiments, in a Raman spectrum, the negative electrode material has a carbon characteristic peak D, a carbon characteristic peak G, a silicon characteristic peak A, and a graphene characteristic peak B.

In some feasible embodiments, a ratio I_{A}/I_{B} of a peak intensity I_{A} of the silicon characteristic peak A to a peak intensity I_{B} of the graphene characteristic peak B is 0.1 to 50, and a ratio I_{D}/I_{G} of a peak intensity In of the carbon characteristic peak D to a peak intensity I_{G} of the carbon characteristic peak G is 0.5 to 2.0, and a ratio I_{B}/I_{D} of the peak intensity I_{B} of the graphene characteristic peak B to the peak intensity I_{D} of the carbon characteristic peak D is 0 to 1.

In some feasible embodiments, the negative electrode material further includes a carbon material, the silicon oxygen material is dispersed in the carbon material, the negative electrode material is secondary particles, and the negative electrode material has a Wadell sphericity greater than 0.91.

In the above solution, the negative electrode material is secondary particles, the silicon oxygen material primary particles are dispersed in the carbon material, and the carbon layer in secondary particles not only plays a role of coating the surface of the silicon oxide particles, but also plays a role of connecting the silicon oxygen materials together to form secondary particles, so that it has good electrochemical properties. The porous structure inside the secondary particles can absorb partial volume expansion to synergistically improve the cycling performance of the materials. Moreover, the carbon filled between primary particles can provide good electrical contact between the particles, reduce direct contact between the electrolyte and the active material, avoiding cycling degradation due to loss of electrical contact between active materials when the particles are pulverized. The synergistic effect between it and the spherical structural stability achieves excellent electrochemical performance.

In some feasible embodiments, the silicon oxygen material is silicon oxide primary particles.

In some feasible embodiments, a volume of powders of the silicon oxide having a particle size below 1.0 µm accounts for below 15% of a total volume of the silicon oxide.

In some feasible embodiments, the silicon oxide has particle sizes of D₉₀<25.0 µm, D₁₀>0.5 µm, and 1 µm≤D₅₀≤10 µm.

In some feasible embodiments, the silicon oxide has a Si microcrystalline size of 1.0 nm to 20 nm.

In some feasible embodiments, the negative electrode material has a specific surface area of 0.5 m²/g to 50 m²/g.

In some feasible embodiments, the negative electrode material has a compaction density of 0.5 g/cm³ to 5.0 g/cm³.

In some feasible embodiments, the particle size D₅₀ of the negative electrode material is 2 to 10 times as big as a particle size D₅₀ of the silicon oxide.

In some feasible embodiments, a particle size of the negative electrode material satisfies a relationship followed: 20 µm≤D₉₀≤50 µm, 5 µm<D₅₀<20 µm, and 2 µm≤D₁₀≤5 µm.

In some feasible embodiments, the carbon element in the negative electrode material has a mass content of 2% to 20%.

In some feasible embodiments, the negative electrode material has a porosity of 1% to 50%.

In some feasible embodiments, the negative electrode material further includes a coating layer located on a surface of the silicon oxygen material, and the coating layer includes a flexible polymer.

In the above solution, the coating layer is coated on the surface of the silicon oxygen material primary particles. The flexible polymer with a high strength is coated on the surface of the silicon oxygen material, so that the expansion of the silicon oxygen material can be more effectively inhibited, and the negative electrode material obtained by coating has high conductivity, stable conductivity and excellent cycling expansion performance.

In some feasible embodiments, the flexible polymer includes a natural flexible polymer and/or a synthetic flexible polymer.

In some feasible embodiments, the flexible polymer includes at least one of a polyolefin and its derivatives, a polyvinyl alcohol and its derivatives, a polyacrylic acid and its derivatives, a polyamide and its derivatives, a carboxymethyl cellulose and its derivatives, or alginic acid and its derivatives.

In some feasible embodiments, the flexible polymer has a weight average molecular weight of 2000 to 1000000.

In some feasible embodiments, the flexible polymer includes a thermally crosslinking functional group comprising at least one of an epoxy group, a carboxyl group, a hydroxyl group, an amino group, a double bond, or an triple bond.

In some feasible embodiments, the coating layer further includes a conductive material.

In some feasible embodiments, the conductive material includes a flake graphite and a carbon nanomaterial.

In some feasible embodiments, the flake graphite includes a natural flake graphite and/or an artificial flake graphite.

In some feasible embodiments, the carbon nanomaterial includes at least one of conductive graphite, graphene, carbon nanotubes, and carbon nanofibers.

In some feasible embodiments, the coating layer further includes a non-water-soluble lithium silicate.

In some feasible embodiments, the non-water-soluble lithium silicate includes at least one of Li₂SiO₃ and Li₂Si₂O₅.

In some feasible embodiments, a mass percentage of the flexible polymer is 0 to 10%, in which 0 is excluded, based on the total mass 100% of the silicon oxygen material.

In some feasible embodiments, the mass percentage of the flake graphite is 0 to 20%, in which 0 is excluded, based on the total mass 100% of the silicon oxygen material.

In some feasible embodiments, the mass percentage of the carbon nanomaterial is 0 to 5%, in which 0 is excluded, based on a total mass 100% of the silicon oxygen material.

In some feasible embodiments, the flexible polymer includes a polycarbonate.

In some feasible embodiments, the coating layer has a thickness of 10 nm to 5000 nm.

In some feasible embodiments, the coating layer in the negative electrode material has a mass percentage of 0% to 20% where 0 is excluded.

In some feasible embodiments, a mass percentage of the coating layer in the negative electrode material is 2% to 10%.

In a sixth aspect, the present disclosure provides a method for preparing a negative electrode material. The method includes following steps:
feeding raw materials for preparing a silicon oxygen material into a plasma stream to react; and
cooling the reacted product to obtain a silicon oxygen material including silicon oxide, in which the silicon oxygen material is primary particles, the silicon oxide has a chemical formula of SiOₓ, where 0<x<2, the primary particles have a Wadell sphericity greater than 0.92.

In the above solution, the raw materials enters the plasma stream to react at high temperatures, while generating silicon oxide droplets. The silicon oxide droplets are cooled to automatically become spheres under surface tension, and harden into spherical silicon oxide particles. The spherical silicon oxide particles can maintain structural stability during a cycling process, so that the material has a lower expansion rate and excellent cycling performance.

In a third aspect, the present disclosure provides a method for preparing a negative electrode material. The method includes following steps:

heat treating raw materials for preparing a silicon oxygen material, and cooling to obtain a silicon oxygen material comprising a silicon oxide, wherein the silicon oxide has a chemical formula of SiOₓ, where 0<x<2, and the silicon oxygen material has a Wadell sphericity of 0.92.

In the above solution, raw materials are heat treated to generate silicon oxide droplets at high temperatures. The silicon oxide droplets are cooled to automatically become spheres under surface tension, and harden into spherical silicon oxide particles. The spherical silicon oxide particles can maintain structural stability during a cycling process, so that the material has a lower expansion rate and excellent cycling performance.

In some feasible embodiments, the step of heat treating the raw materials for preparing the silicon oxygen material includes: plasma-reacting the raw materials for preparing the silicon oxygen material.

In some feasible embodiments, the step of heat treating the raw materials for preparing the silicon oxygen material includes: feeding raw materials for preparing the silicon oxygen material to a plasma stream for a plasma-reaction.

In some feasible embodiments, the raw materials for preparing the silicon oxygen material include at least one of a mixture of Si, SiO_{y} and SiO₂; a mixture of SiO_{y} and Si; and a mixture of Si and SiO₂, where 0<y<2.

In some feasible embodiments, the raw materials for preparing the silicon oxygen material include SiH₄ and O₂.

In some feasible embodiments, the step of heat treating the raw materials for preparing the silicon oxygen material includes: feeding raw materials for preparing the silicon oxygen material to a plasma stream for a plasma-reaction, the temperature of the plasma stream is 1400°C to 2400°C.

In some feasible embodiments, the step of heat treating the raw materials for preparing the silicon oxygen material includes: feeding raw materials for preparing the silicon oxygen material to a plasma stream for a plasma-reaction, the raw materials have a feeding rate of 2.0 g/min to 80 g/min.

In some feasible embodiments, the step of heat treating the raw materials for preparing the silicon oxygen material includes: using a carrier gas to feed raw materials for preparing the silicon oxide to a plasma stream for a plasma-reaction.

In some feasible embodiments, the step of heat treating the raw materials for preparing the silicon oxygen material includes: using a carrier gas to feed raw materials for preparing the silicon oxide to the plasma stream for a plasma-reaction and feeding a reducing gas.

In some feasible embodiments, the step of heat treating the raw materials for preparing the silicon oxygen material includes: using a carrier gas to feed raw materials for preparing the silicon oxide to a plasma stream for a plasma-reaction while feeding a reducing gas, the reducing gas includes at least one of methane and hydrogen.

In some feasible embodiments, the step of heat treating the raw materials for preparing the silicon oxygen material includes: using a carrier gas to feed raw materials for preparing the silicon oxide to the plasma stream for a plasma-reaction and feeding a reducing gas, a molar ratio of the reducing gas to the silicon oxide is from 0 to 0.25, in which 0 is excluded.

In some feasible embodiments, the step of heat treating the raw materials for preparing the silicon oxygen material includes: using a carrier gas to feed raw materials for preparing the silicon oxide to the plasma stream for a plasma-reaction and feeding a reducing gas, and the reducing gas has a radial velocity ranging from 1m³/h to 10m³/h.

In some feasible embodiments, the raw materials for preparing the silicon oxygen material further include a reducing metal.

In some feasible embodiments, the raw materials for preparing the silicon oxygen material further includes a reducing metal, the reducing metal includes at least one of an alkali metal, an alkaline earth metal, and a transition metal.

In some feasible embodiments, the raw materials for preparing the silicon oxygen material further includes a reducing metal including at least one of Li, K, Mg, Al, Ca, Zn, Na, and Ti.

In some feasible embodiments, the raw materials for preparing the silicon oxygen material further includes a reducing metal including Li, a molar ratio of Si to Li in the raw materials for preparing the silicon oxide is (1 to 50):1.

In some feasible embodiments, the raw materials for preparing the silicon oxygen material further includes a reducing metal including Mg, a molar ratio of Si to Mg in the raw materials for preparing the silicon oxide is (5 to 50):1.

In some feasible embodiments, the method further includes water-washing and/or acid-washing the heat treated product to be neutral, and performing solid-liquid separation and drying.

In some feasible embodiments, the step of heat treating the raw materials for preparing the silicon oxygen material includes: atomizing the molten raw materials of the silicon oxygen material.

In some feasible embodiments, the step of heat treating the raw materials for preparing the silicon oxygen material includes: atomizing the molten raw materials of the silicon oxygen material by using a pressurized gas.

In some feasible embodiments, the step of heat treating the raw materials for preparing the silicon oxygen material includes: atomizing the molten raw materials of the silicon oxygen material by using a pressurized gas, in which the pressurized gas is a protective gas, and the protective gas includes at least one of nitrogen, argon, neon, krypton, and helium.

In some feasible embodiments, the step of heat treating the raw materials of produce the silicon oxygen material includes: atomizing the molten raw materials of the silicon oxygen material by using a pressurized gas. The pressurized gas has a pressure of 0.2 MPa to 100 Mpa.

In some feasible embodiments, the step of cooling is to cool droplets of the raw materials of the silicon oxide to below 100°C.

In some feasible embodiments, a cooling rate is from 1°C/s to 100°C/s.

In some feasible embodiments, the cooling is performed by using a protective gas, wherein the protective gas includes at least one of nitrogen, argon, neon, krypton, and helium.

In some feasible embodiments, the silicon oxide raw material is SiOz, where 0<z<2.

In some feasible embodiments, the silicon oxide raw materials include at least one of a mixture of SiO, Si and SiO₂; a mixture of Si and SiO₂; and a mixture of SiO and SiO₂.

In some feasible embodiments, the step of heat treating the raw materials for preparing the silicon oxygen material includes: heat treating raw materials containing a silicon oxygen material and an organic carbon source, so that the organic carbon source is melted and atomized.

In some feasible embodiments, the step of heat treating the raw materials for preparing the silicon oxygen material includes: heat treating raw materials containing a silicon oxygen material and an organic carbon source, so that the organic carbon source is melted and atomized, wherein the organic carbon source comprises at least one of a saccharide, an ester, a hydrocarbon, an organic acid, and a high-molecular polymer.

In some feasible embodiments, the step of heat treating the raw materials for preparing the silicon oxygen material includes: heat treating raw materials containing a silicon oxygen material and an organic carbon source, so that the organic carbon source is melted and atomized, wherein the organic carbon source comprises at least one of polyvinyl chloride, polyvinyl butyral, polyacrylonitrile, polyacrylic acid, citric acid, polyethylene glycol, polypyrrole, polyaniline, sucrose, glucose, maltose, citric acid, asphalt, furfural resin, epoxy resin, and phenolic resin.

In some feasible embodiments, the step of heat treating raw materials including a silicon oxygen material includes: heat treating raw materials containing a silicon oxygen material and an organic carbon source, so that the organic carbon source is melted and atomized, wherein a mass ratio of the organic carbon source to the silicon oxide is 5:(5 to 95).

In some feasible embodiments, the step of heat treating raw materials including a silicon oxygen material includes: heat treating raw materials containing a silicon oxygen material and an organic carbon source, so that the organic carbon source is melted and atomized, wherein the raw materials containing the silicon oxygen material and the organic carbon source further comprises graphite.

In some feasible embodiments, the method further includes: carbonizing the cooled product to obtain a negative electrode material.

In some feasible embodiments, the method further includes: carbonizing the cooled product to obtain a negative electrode material, in which a temperature of carbonization treatment is 600°C and 1000°C.

In some feasible embodiments, the method further includes: feeding a carbon source gas and silicon oxygen material into the plasma stream to perform secondary granulation and cooled to obtain a negative electrode material containing silicon oxide and the carbon material, wherein the negative electrode material is secondary particles, the silicon oxide has a chemical formula of SiOₓ, 0 < x < 2, and the negative electrode material has a Wadell sphericity greater than 0.91.

In some feasible embodiments, the silicon oxygen material is silicon oxide primary particles.

In some feasible embodiments, a volume of powders of the silicon oxide having a particle size below 1.0 µm accounts for below 15% of a total of the silicon oxide.

In some feasible embodiments, the silicon oxide has a particle size of D₉₀<25.0 µm, D₁₀>0.5 µm, and 1 µm≤D₅₀≤10 µm.

In some feasible embodiments, the silicon oxide has a Si microcrystalline size of 1.0 nm to 20 nm.

In some feasible embodiments, the carbon source gas includes a hydrocarbon.

In some feasible embodiments, the carbon source gas includes at least one of methane, acetylene, ethylene, ethane, propane, propylene, methylacetylene, acetone, and benzene.

In some feasible embodiments, a volume ratio of the carrier gas to the carbon source gas is 10:(0.5 to 10).

In some feasible embodiments, the step of feeding a carbon source gas and silicon oxygen material into the plasma stream to perform secondary granulation further includes: adding a carbonaceous binder to the plasma stream.

In some feasible embodiments, the step of feeding a carbon source gas and silicon oxygen material into the plasma stream to perform secondary granulation further includes: adding a carbonaceous binder to the plasma stream, wherein the carbonaceous binder comprises at least one of a saccharide, an ester, a hydrocarbon, an organic acid, and a high-molecular polymer.

In some feasible embodiments, the step of feeding a carbon source gas and silicon oxygen material into the plasma stream to perform secondary granulation further includes: adding a carbonaceous binder to the plasma stream, wherein the carbonaceous binder comprises at least one of polyvinyl chloride, polyvinyl butyral, polyacrylonitrile, polyacrylic acid, polyethylene glycol, polypyrrole, polyaniline, sucrose, glucose, maltose, citric acid, asphalt, furfural resin, epoxy resin, and phenolic resin.

In some feasible embodiments, the step of feeding a carbon source gas and silicon oxygen material into the plasma stream to perform secondary granulation further includes: adding a carbonaceous binder to the plasma stream, wherein a mass ratio of the carbonaceous binder to the silicon oxide is 5:95 to 50:50.

In some feasible embodiments, the particle size D₅₀ of the negative electrode material is 2 to 10 times as big as the particle size D₅₀ of the silicon oxide.

In some feasible embodiments, the particle size of the negative electrode material satisfies a relationship followed: 20 µm≤D₉₀≤50 µm, 5 µm<D₅₀<20 µm, and 2 µm≤D₁₀≤5 µm.

In some feasible embodiments, the carbon element in the negative electrode material has a mass content of 2% to 20%.

In some feasible embodiments, the negative electrode material has a porosity of 1% to 50%.

In some feasible embodiments, the negative electrode material has a specific surface area of 0.5m²/g to 50m²/g.

In some feasible embodiments, the negative electrode material has a compaction density of 0.5g/cm³ to 5.0g/cm³.

In some feasible embodiments, the method further includes: carbon-coating the silicon oxygen material to obtain the negative electrode material.

In some feasible embodiments, the method further includes carbon-coating the silicon oxygen material to obtain the negative electrode material, the carbon-coating comprises at least one of a solid phase carbon-coating, a liquid phase carbon-coating, and a vapor phase carbon coating.

In some feasible embodiments, the method further includes: after heating the silicon oxygen material, feeding a protective gas and a carbon source gas, thermally cracking the carbon source gas to obtain the negative electrode material.

In some feasible embodiments, the method further includes: after heating the silicon oxygen material, feeding a protective gas and a carbon source gas, thermally cracking the carbon source gas to obtain the negative electrode material, wherein the carbon source gas is a hydrocarbon.

In some feasible embodiments, the method further includes: after heating the silicon oxygen material, feeding a protective gas and a carbon source gas, thermally cracking the carbon source gas to obtain the negative electrode material, wherein at least one of methane, ethylene, acetylene, methylacetylene, propylene, propane, toluene, benzene, styrene, or phenol.

In some feasible embodiments, the method further includes: after heating the silicon oxygen material, feeding a protective gas and a carbon source gas, thermally cracking the carbon source gas to obtain the negative electrode material, wherein the temperature of thermal cracking is 600°C to 1000°C.

In some feasible embodiments, the method further includes: after heating the silicon oxygen material, feeding a protective gas and a carbon source gas, thermally cracking the carbon source gas to obtain the negative electrode material, wherein the silicon oxygen material has a heating temperature between 500°C and 1200°C and a heat preservation period between 0.5 hour and 20 hours.

In some feasible embodiments, the method further includes: after heating the silicon oxygen material, feeding a protective gas and a carbon source gas, thermally cracking the carbon source gas to obtain the negative electrode material, wherein a reaction gas pressure of the thermal cracking is from 1.0 atm to 10.0 atm.

In some feasible embodiments, the method further includes: after heating the silicon oxygen material, feeding a protective gas, a carbon source gas and an auxiliary gas, thermally cracking the carbon source gas to obtain the negative electrode material, wherein the auxiliary gas comprises H₂.

In some feasible embodiments, the method further includes: after heating the silicon oxygen material, feeding a protective gas, a carbon source gas, and an auxiliary gas, thermally cracking the carbon source gas to obtain the negative electrode material, wherein a molar ratio of the carbon source gas to the auxiliary gas is (2 to 10):1.

In some feasible embodiments, the method further includes: carbonizing a mixture obtained by mixing the silicon oxygen material and a solid carbon source to obtain the negative electrode material.

In some feasible embodiments, the method further includes: carbonizing a mixture obtained by mixing the silicon oxygen material and a solid carbon source to obtain the negative electrode material, wherein the carbonizing is performed at a temperature of 500°C to 1000°C for 2 hours to 20 hours.

In some feasible embodiments, the method further includes: carbonizing a mixture obtained by mixing the silicon oxygen material and a solid carbon source to obtain the negative electrode material, wherein the solid carbon source comprises at least one of a saccharide, an ester, a hydrocarbon, an organic acid or a high-molecular polymer.

In some feasible embodiments, the method further includes: carbonizing a mixture obtained by mixing the silicon oxygen material and a solid carbon source to obtain the negative electrode material, wherein the solid carbon source comprises at least one of polyvinyl chloride, polyvinyl butyral, polyacrylonitrile, polyacrylic acid, polyethylene glycol, polypyrrole, polyaniline, sucrose, glucose, maltose, citric acid, asphalt, furfural resin, epoxy resin or phenolic resin.

In some feasible embodiments, the method further includes: carbonizing a mixture obtained by mixing the silicon oxygen material and a solid carbon source to obtain the negative electrode material, wherein a mass ratio of the solid carbon source to the silicon oxygen material is 5:(5 to 95).

In some feasible embodiments, the method further includes: coating the silicon oxygen material with a flexible polymer-containing coating liquid to obtain a negative electrode material.

In some feasible embodiments, the flexible polymer includes a natural flexible polymer and/or a synthetic flexible polymer.

In some feasible embodiments, the flexible polymer includes at least one of a polyolefin and its derivatives, a polyvinyl alcohol and its derivatives, a polyacrylic acid and its derivatives, a polyamide and its derivatives, a carboxymethyl cellulose and its derivatives, and alginic acid and its derivatives.

In some feasible embodiments, the flexible polymer has a weight average molecular weight of 2000 to 1000000.

In some feasible embodiments, the flexible polymer includes a thermally crosslinking functional group comprising at least one of an epoxy group, carboxyl group, a hydroxyl group, an amino group, a double bond, or an triple bond.

In some feasible embodiments, the flexible polymer is a combination of a polyolefin and its derivatives, and a polyolefin and derivatives with alginic acid and its derivatives.

In some feasible embodiments, the coating includes a solvent, the solvent is at least one of water, methanol, ethanol, polypyrrolidone, isopropanol, acetone, petroleum ether, tetrahydrofuran, ethyl acetate, N,N-dimethylacetamide, N,N-dimethylformamide, n-hexane, or a halogenated hydrocarbon.

In some feasible embodiments, the coating liquid includes an anti-solvent which is a poor solvent for the flexible polymer.

In some feasible embodiments, the coating liquid includes an anti-solvent, the anti-solvent is at least one of methanol, ethanol, polypyrrolidone, isopropanol, acetone, petroleum ether, tetrahydrofuran, ethyl acetate, N,N-dimethylacetamide, N,N-dimethylformamide, n-hexane, or a halogenated hydrocarbon.

In some feasible embodiments, the steps for coating the silicon oxygen material with the flexible polymer-containing coating liquid includes: adding the silicon oxygen material to the flexible polymer-containing coating liquid, stirring, separating to obtain a negative electrode material precursor, and heat treating the negative electrode material precursor.

In some feasible embodiments, the steps for coating the silicon oxygen material with the flexible polymer-containing coating liquid includes: adding a silicon oxygen material to the flexible polymer-containing coating liquid, stirring, separating to obtain a negative electrode material precursor, and heat treating the negative electrode material precursor; wherein the temperature of the heat treatment is 100°C to 400°C and a duration of the heat treatment is 2 hours to 12 hours.

In some feasible embodiments, the steps for coating the silicon oxygen material with the flexible polymer-containing coating liquid includes: adding the silicon oxygen material to the flexible polymer-containing coating liquid, stirring, separating to obtain a negative electrode material precursor, and heat treating the negative electrode material precursor; wherein a stirring temperature is 20°C to 100°C and a stirring time is 1 hour to 24 hours.

In some feasible embodiments, the coating liquid further includes a conductive material.

In some feasible embodiments, the coating liquid further includes a conductive material including flake graphite and a carbon nanomaterial.

In some feasible embodiments, the coating fluid further includes non-water-soluble lithium silicate.

In some feasible embodiments, the coating further includes a non-water-soluble lithium silicate, the non-water-soluble lithium silicate includes at least one of Li₂SiO₃ and Li₂Si₂O₅.

In a fourth aspect, the present disclosure provides a lithium ion battery including a negative electrode material as described above or a negative electrode material obtained by the preparation methods above.

The technical solutions of the present disclosure have at least following beneficial effects:
the silicon oxygen material provided by the present disclosure includes silicon oxide, the silicon oxide is primary particles of the spherical silicon oxide having a Wadell sphericity greater than 0.92. The spherical particles have an isotropic feature so that they are uniformly contract and expand outward along a radial direction during a cycling process. Due to the isotropic stresses, stability of the structure can be maintained, and "weak spots" suffered from stress due to non-uniform shape do not occur. Therefore, it greatly reduces the possibility of electrolyte permeating into the interior of the material due to collapse of particle structure and fracture of SEI film, effectively avoids infiltration of electrolyte into the interior of the material to generate new SEI films continuously, avoids repeated crushing and generation of SEI films, reduces volume expansion of the materials, and improves cycling performance of the material. Moreover, the specific surface area of the spherical particles in a same volume of particles is smallest, the SEI film generated during the cycling process is minimized, so that irreversible charge capacity is effectively reduced, thereby further reducing irreversible capacity loss during the cycling process.

The present disclosure uses a plasma process or an atomization process to prepare a silicon oxygen material or negative electrode material, the raw materials are melted to obtain droplet-like product, thereby forming silicon oxygen material primary particles with high sphericity during the cooling process, so that the technical problem of volume expansion of the silicon oxide is addressed, and the preparation method is easy to operate for quantitative production.

### BRIEF DESCRIPTION OF DRAWINGS

FIG. 1 is a flow chart of a method for preparing a negative electrode material according to an embodiment of the present disclosure;
FIG. 2a is a scanning electron microscope image of a silicon oxygen material prepared by Example 1 of the present disclosure;
FIG. 2b is a scanning electron microscope image of a section of a silicon oxygen material prepared by Example 1 of the present disclosure;
FIG. 3 is a scanning electron microscope image of a silicon oxygen material prepared by Example 1 of the present disclosure;
FIG. 4a is a scanning electron microscope image of a silicon oxygen material prepared by Example 3 of the present disclosure;
FIG. 4b is a scanning electron microscope image of a section of a silicon oxygen material prepared by Example 3 of the present disclosure;
FIG. 5a is a scanning electron microscope image of a silicon oxygen material prepared by Example 4 of the present disclosure;
FIG. 5b is a scanning electron microscope image of a section of a silicon oxygen material prepared by Example 4 of the present disclosure;
FIG. 6 is a scanning electron microscope image of a negative electrode material prepared by Example 10 of the present disclosure;
FIG. 7a is a sectional scanning electron microscope image of silicon oxygen material primary particles prepared by Example 12 of the present disclosure;
FIG. 7b is a distribution map of Si element in the silicon oxygen material primary particles prepared by Example 12 of the present disclosure;
FIG. 7c is a distribution map of O element in the silicon oxygen material primary particles prepared by Example 12 of the present disclosure; and
FIG. 7d is a distribution map of Mg element in the silicon oxygen material primary particles prepared by Example 12 of the present disclosure.

### DESCRIPTION OF EMBODIMENTS

Preferred embodiments of the present disclosure are described as follows. It should be noted that many improvements and modifications can be made to those skilled in the art without departing from principles of the embodiments of the present disclosure, which are also considered to be within the scope of the embodiments of the present disclosure.

### [First Aspect]

Embodiments of the present disclosure provide a silicon oxygen material. The silicon oxygen material includes a silicon oxide having a chemical formula SiOₓ in which 0<x<2. The silicon oxygen material is primary particle having a Wadell sphericity greater than 0.92.

The silicon oxygen material of this embodiment is silicon oxide primary particles with a Wadell sphericity greater than 0.92. Its structure is more stable in the cycling process when using for negative electrode material, which can avoid the problem of fracture of particles of the material caused by repeated generation of the SEI film, it is beneficial to improve the cycling performance of the material and reduce the volume expansion due to the generation of SEI film. In the related art, only elemental silicon or silicon dioxide are subjected to the spherical treatment, the technique for spherizing silicon monoxide is difficult to achieve currently, and high spherizing (sphericity is greater than 0.92) the silicon monoxide is more difficult to achieve. In the present disclosure, the researcher obtain the silicon monoxide with a sphericity greater than 0.92 by a number of tests and optimized processes, which has a more stable structure during the cycling process, the problem of fracture of particles of the material caused by repeated generation of the SEI film can be avoided with unexpected effects.

Specifically, the Wadell sphericity of the silicon oxide primary particles can be 0.925, 0.93, 0.94, 0.95, 0.96, 0.97, 0.98, 0.99, and the like. It should be understood that the Wadell sphericity of the silicon oxide primary particles is not limited to only the enumerated values, and other un-enumerated values within the numerical range are equally applicable.

Embodiments of the present disclosure provide that the silicon oxygen material further includes at least one of a reducing metal and a reducing metal compound.

In the above solution, compared to pure silicon oxide primary particles, the reducing metal and/or the reducing metal compound in the silicon oxygen material can reduce the consumption of lithium extracted from positive electrode material when the silicon oxygen material is initially charged, and the lithium ion battery prepared by the silicon oxygen material can greatly reduce the consumption of irreversible charging lithium, have a higher charge and discharge spefic capacity, and excellent first Coulombic efficiency. For example, when the reducing metal is a lithium element, the pre-lithiating material can cause the crystal grain size of silicon in the material to be significantly larger than conventional silicon-based materials due to pre-lithiation of the silicon-based material, resulting in degradation of cycling performance. A material with a high sphericity can improve cycling performance by improving the structural stability. The combined result of the above two makes the material have high initial effect excellent while balancing the cycling performance, thereby achieving excellent overall performance of the material.

Specifically, the Wadell sphericity of primary particles can be 0.925, 0.93, 0.94, 0.95, 0.96, 0.97, 0.98, 0.99, and the like. It should be understood that the Wadell sphericity of primary particles is not limited to only the enumerated values, and other un-enumerated values within that numerical range are equally applicable.

In some embodiments, the silicon oxygen material primary particles have a Wadell sphericity greater than 0.95.

In some embodiments, the reducing metal includes at least one of an alkali metal, an alkaline earth metal, and a transition metal.

Specifically, the reducing metal element is selected from at least one of Li, K, Mg, Al, Ca, Zn, Na, and Ti.

In some embodiments, the oxygen element in the silicon oxygen material has a mass content of 10% to 50%, specifically, 10%, 15%, 20%, 25%, 30%, 35%, 40%, 48%, or 50%, etc., which are not limited herein.

In some embodiments, the reducing metal element in the silicon oxygen material has a mass content of 0.5% to 50%, specifically, 0.5%, 1%, 3%, 5%, 7%, 9%, 10%, 15%, 20%, 25%, 30%, 35%, 40%, 45%, or 50%, etc., which are not limited herein.

In some embodiments, the silicate in the silicon oxygen material has a mass content of 10% to 80%, specifically, 10%, 15%, 18%, 20%, 25%, 30%, 35%, 40%, 45%, 50%, 60%, 70%, or 80%, etc., which are not limited herein.

In some embodiments, distributed faces of Si, O, and reducing metal elements have a uniformly dispersion state in an elemental distribution spectrum obtained by scanning SEM facets of the primary particles of the silicon oxygen material with X-rays. In silicon oxygen materials, Si, O and reducing metal elements are uniformly distributed within primary particles, so that constituents such as air can be effectively prevented from permeating into the primary particles to cause the failure of the active ingredients, the structure and properties are not degraded after long term storage, which are well suited for lithium ion batteries. The main advantage of uniform dispersion is to ensure that similar physical and chemical state (i.e., silicate concentration, silicon crystal grain size, etc.) throughout the interior of the material, so that the expansion shrinkage everywhere is at the same level in a process of lithium de-intercalation and lithium intercalation, without stress weak point due to excessively large locale expansion, thereby making the material have excellent performance.

In some embodiments, the reducing metal compound includes at least one of a reducing metal oxide, a reducing metal silicide, and a reducing metal silicate.

In some embodiments, the reducing metal compound includes a reducing metal silicate uniformly distributed within primary particles.

In some embodiments, the silicate includes lithium silicate, that is, the reducing metal element is Li.

In some embodiments, lithium silicate includes at least one of Li₂SiO₃, Li₄SiO₄, Li₂Si₂O₅, and Li₂Si₃O₇. Preferably, the lithium silicate is Li₂Si₂O₅.

In some embodiments, the silicate includes a crystalline Li₂Si₂O₅ having a crystal grain size smaller than 20 nm. The cycling performance of the material is improved by controlling crystal grain size of the silicate generated, while achieving a high initial Coulombic efficiency of the silicon oxygen material. In addition, silicates, especially lithium silicate, have good conduction property of lithium ion, in conjunction with their smaller crystal grain size, better ensuring that lithium ion can smoothly complete the lithium intercalation/de-intercalation reaction, exhibiting good rate performance and high safety.

In some embodiments, the silicate includes a crystalline Li₂Si₂O₅. Li₂Si₂O₅ in the silicon oxygen material has a mass content of 20% to 80%, specifically 20%, 25%, 30%, 35%, 40%, 45%, 50%, 60%, 70% or 80%, etc., which are not limited herein.

In some embodiments, a molar ratio of Si to Li in the silicon oxygen material is (1 to 50):1, specifically 1:1, 5:1, 10:1, 15:1, 20:1, 25:1, 30:1, 35:1, 40:1, 45:1, or 50:1, etc., which are not limited herein.

In some embodiments, silicate is uniformly distributed in silicon oxide, which can mitigate the volume expansion problem of silicon when charging and discharging. The spherical structure can further improve the structural stability of the material, so that it has excellent cycling performance and has a small volume effect, thereby having excellent electrochemical performance.

In some embodiments, the silicon oxygen material further includes non-metal doping elements, such as N, S, P, and the like.

In some embodiments, the primary particles have a Wadell sphericity greater than 0.95.

In some embodiments, the silicon oxygen material has a D₅₀ smaller than or equal to 50 µm. Specifically, D₅₀ can be 50 µm, 45 µm, 40 µm, 38 µm, 35 µm, 33 µm, 30 µm, 25 µm, 20 µm, 15 µm, 10 µm, 8 µm, or 6 µm, etc., but is not limited to the enumerated values, and other un-enumerated values within the numerical range are equally applicable.

In some embodiments, the particle size distribution of the silicon oxygen material satisfies: 3 µm<D₅₀<10 µm, 2 µm≤D₁₀≤5 µm, and 0.8≤(D₉₀-D₁₀)/D₅₀≤1.2. Controlling particle size of the silicon oxygen material primary particles within a suitable micron range can prevent the larger specific surface area caused by excessively small particle size and the oxidation problem of the silicon oxygen material, both of which will reduce the capacity and first effect. (D₉₀₋D₁₀ )/D₅₀ represents the particle size distribution of the material, the narrower particle size distribution greatly reduces the proportions of micro powder and large particles in the material, so that the process of removing micro powder during subsequent reprocessing is avoided, thereby improving cycling performance of the product, expansion rate, high temperature storage and high temperature cycling performance. Specifically, D₅₀ can be 3.5 µm, 4 µm, 6 µm, 8 µm or 9.5 µm, D₁₀ can be 2 µm, 4 µm or 5 µm; (D₉₀-D₁₀ )/D₅₀ can be 0.8, 0.9, 1.0, 1.1 or 1.2, which are not limited to the enumerated values, and other un-enumerated values within the numerical range are equally applicable.

In some embodiments, the silicon oxygen material has a specific surface area smaller than 10 m²/g. If the specific surface area is greater than 10 m²/g, the capacity and first effect will be reduced, and the performance of the battery is affected. The specific surface area of silicon oxide can be specifically 0.2 m²/g, 0.6 m²/g, 1.0 m²/g, 1.5 m²/g, 1.8 m²/g, 2.0 m²/g, 2.5 m²/g, 3.0 m²/g, 3.6 m²/g, 4.0 m²/g, 4.2 m²/g, 4.6 m²/g, 5 m²/g, 5.2 m²/g, 5.5 m²/g, 5.8 m²/g, 6.0 m²/g, 6.2 m²/g, 6.8 m²/g, 7.0 m²/g, 7.4 m²/g, 8.0 m²/g, 8.5 m²/g, 9.2 m²/g or 9.8 m²/g, which are not limited to the enumerated values, and other un-enumerated values within the numerical range are equally applicable.

In some embodiments, the Si microcrystalline size in the silicon oxygen material is smaller than or equal to 20 nm. Specifically, the Si microcrystalline size in silicon oxide can be 20 nm, 18 nm, 15 nm, 12 nm, 10 nm, 9.2 nm, 8 nm, 6.7 nm, 6 nm, 5 nm, or 3 nm, etc., which are not limited to the enumerated values, and other un-enumerated values within the numerical range are equally applicable.

In some embodiments, the Si microcrystalline size in the silicon oxide is smaller than or equal to 10 nm. The size of the Si crystal grain reflects disproportionation degree of silicon oxide. The greater the Si crystal grain size, the higher the disproportionation degree, a large number of Si crystal grain and SiO₂ can be generated, resulting in a greater volume expansion due to elemental Si and a reduced capacity due to free capacity of SiO₂, which is not conducive to exhibiting superior performance of the SiO itself.

It should be noted that the silicon oxygen materials of the various embodiments described above can be combined in any combination without contradiction, such as combing specific surface area with Si microcrystalline size, and so on.

### [Second Aspect]

The present disclosure provides a negative electrode material which includes a silicon oxygen material of the first aspect.

When the above silicon oxygen material is used for the negative electrode material, its structure is more stable during a cycling process, which can avoid the problem of fracture of particles of the material caused by repeated generation of the SEI film, it is beneficial to improve the cycling performance of the negative electrode material and reduce the volume expansion due to the generation of SEI film.

It should be noted that the negative electrode material is not limited to only include the aforementioned silicon oxygen material. In some preferred embodiments, other materials can be added to cooperate with the silicon oxide to optimize various performances of the negative electrode material according to the design of the composition of the negative electrode material.

In some embodiments, the negative electrode material further includes a carbon layer coated on a surface of the silicon oxygen material.

It can be appreciated that the silicon oxygen material core in the negative electrode material has a high sphericity, the carbon material can be coated more uniform when performing carbon coating, so that the thickness of the carbon layer can be more uniform, there are less the exposed silicon oxygen material primary particles and weak spots of the carbon layer, and it is beneficial to improve the cycling stability of the negative electrode material.

In some embodiments, a difference between a maximum value and a minimum value of a thickness of the carbon layer is smaller than the minimum value.

In some embodiments, the carbon layer has a thickness of 10 nm to 500 nm, further preferably 50 nm to 200 nm. Specifically, the carbon layer can have a thickness of 10 nm, 50 nm, 80 nm, 100 nm, 120 nm, 150 nm, 200 nm, 300 nm, 400 nm, or 500 nm, which are not limited to the enumerated values, and other un-enumerated values within the numerical range are equally applicable.

In some embodiments, the D₅₀ of the negative electrode material is smaller than or equal to 100 µm. In particular, the D₅₀ of the negative electrode material can be 100 µm, 90 µm, 80 µm, 70 µm, 65 µm, 60 µm, 58 µm, 55 µm, 50 µm, 48 µm, 40 µm, 35 µm, 30 µm, 25 µm, 20 µm, 15 µm, or 10 µm, etc., which are not limited to the enumerated values, and other un-enumerated values within the numerical range are equally applicable.

In some embodiments, the negative electrode material can further include silicon.

In some embodiments, the negative electrode material can further include silicon and lithium-containing compound.

In some embodiments, the negative electrode material further includes silicon and lithium silicate. Further, lithium silicate includes at least one of Li₂SiO₃, Li₄SiO₄, Li₂Si₂O₅, and Li₂Si₃O₇.

In some embodiments, when the silicon oxygen material is applied to negative electrode material, the negative electrode material further include a metal compound, in which the metal compound includes at least one of a metal oxide, a metal silicide, and a metal silicate.

In some embodiments, the negative electrode material further includes a carbon material, and the silicon oxygen material is dispersed in the carbon material.

The silicon oxygen material is dispersed in the carbon material, the carbon material builds a conductive network for the silicon oxygen material, so that the disadvantage of poor electrical conductivity of the silicon oxygen material is overcome, facilitating the capacity and cycling stability of the silicon oxygen material.

In another embodiment, the negative electrode material includes a silicon oxygen material and a carbon material, the silicon oxygen material is dispersed in the carbon material, the negative electrode material is spherical particles, and the negative electrode material has a Wadell sphericity greater than 0.3.

The negative electrode material has a high overall sphericity, the silicon oxygen material can be uniformly expanded toward all directions during an expansion process, the expansion stress is uniformly distributed while the spherical structure is stable, so that the particles are not easily broken during a long cycling process. The protrusion portion of the particle is a weak spot that is prone to fracture, the spherical structure avoids the presence of such a structure, so that SEI film grows slowly and has a low expansion rate during the long cycling process, and the carbon material overcomes the disadvantage of poor electrical conductivity of the silicon oxygen material, facilitating the capacity and cycling stability of the silicon oxygen material.

Specifically, the Wadell sphericity of a negative electrode material can be 0.31, 0.35, 0.40, 0.42, 0.45, 0.5, 0.55, 0.6, 0.7, 0.8, 0.9, 0.95, etc. It can be understood that the Wadell sphericity of the negative electrode material is not limited to only the enumerated values, and other un-enumerated values within the numerical range are equally applicable.

In some embodiments, the silicon oxygen material is uniformly dispersed in the carbon material.

In some embodiments, the carbon material coats the silicon oxygen material.

In some embodiments, the negative electrode material has a Wadell sphericity greater than 0.5.

In some embodiments, the negative electrode material has a Wadell sphericity greater than 0.92. In particular, the Wadell sphericity of the negative electrode material can be 0.925, 0.93, 0.94, 0.95, 0.96, 0.97, etc. With such a range of the sphericity of the negative electrode material, it can ensure that the SiOₓ can be uniformly expanded toward all directions during an expansion process, and the expansion stress is uniformly distributed. Meanwhile, the spherical structure is stable, so that the particles are not easily broken during a long cycling process. The protrusion portion of the particle is a weak spot that is prone to fracture, the spherical structure avoids the presence of such a structure, so that the repeated growth and fracture of SEI film are effectively avoided during the long cycling process.

In some embodiments, in the silicon oxygen material, the mass of the oxygen element accounts for 0% to 67% of a total of silicon element and the oxygen element, where 0% is excluded. Specifically, the mass of the oxygen element accounts for the total of silicon element and the oxygen element can be 0.5%, 1%, 5%, 10%, 15%, 18%, 21%, 28%, 30%, 37%, 42%, 47%, 50%, 55%, 60%, or 67%. It can be understood that the mass of the oxygen element accounted for the total of silicon element and the oxygen element is not limited to the enumerated values, and other un-enumerated values within the numerical range are equally applicable.

In some embodiments, the D₅₀ of silicon oxide is smaller than or equal to 1.5 µm in the negative electrode material spherical particles. The smaller particle size of silicon oxide, the higher dispersion degree of the carbon material. Specifically, the D₅₀ of silicon oxide can be 1.5 µm, 1.2 µm, 1 µm, 0.8 µm, 0.5 µm, 0.4 µm, 0.2 µm, or 0.1 µm. It should be understood that the D50 of silicon oxide is not limited to the enumerated values, and other un-enumerated values within the numerical range are equally applicable.

In some embodiments, the Si microcrystalline size in silicon oxide is smaller than or equal to 50 nm. The smaller the size of Si microcrystalline, the better the cycling performance of silicon oxide and the lower the expansion rate. Specifically, the Si microcrystalline size in silicon oxide can be 50 nm, 46 nm, 40 nm, 38 nm, 34 nm, 30 nm, 28 nm, 25 nm, 23 nm, 20 nm, 16 nm, 13 nm, 10 nm, 7 nm, 5 nm, or 3.8 nm, etc. It can be understood that the Si microcrystalline size in silicon oxide is not limited to the enumerated values, and other un-enumerated values within the numerical range are equally applicable. Preferably, the Si microcrystalline size in silicon oxide is smaller than or equal to 20 nm, more preferably, the Si microcrystalline size in silicon oxide is smaller than or equal to 10 nm.

In some embodiments, D₅₀ of the negative electrode material is smaller than or equal to 40 µm. The smaller particle size of the negative electrode material, the fracture is more difficult to occur, and the expansion rate is lower. In particular, the D₅₀ of the negative electrode material can be 40 µm, 35 µm, 33 µm, 30 µm, 27 µm, 24 µm, 21 µm, 18 µm, 15 µm, 13 µm, 10 µm, 7 µm, 5 µm, 3 µm or 1.5 µm, etc. It should be understood that the D₅₀ of the negative electrode material is not limited to the enumerated values, and other un-enumerated values within the numerical range are equally applicable.

In some embodiments, the negative electrode material has a porosity smaller than 20%. The smaller porosity means that, the contact between the carbon material and silicon oxide is the tighter, so that it is conductive to maintain structural stability, facilitating the capacity and cycling stability of the negative electrode material. Specifically, the porosity of the negative electrode material can be 19.2%, 18%, 15%, 13%, 10%, 8%, 5%, 3%, or 2%, etc. It should be understood that the porosity of the negative electrode material is not limited to only the enumerated values, and other un-enumerated values within the numerical range are equally applicable.

In some embodiments, the silicon oxygen material accounts for 40% to 95% by mass of the negative electrode material. Specifically, the mass fraction of the silicon oxide in the negative electrode material can be 40%, 45%, 50%, 58%, 60%, 63%, 67%, 70%, 74%, 78%, 80%, 85%, 90%, 93%, or 95%. It should be understood that the mass fraction of the silicon oxide in the negative electrode material is not limited to the enumerated values, and other un-enumerated values within the numerical range are equally applicable.

In some embodiments, the carbon material includes amorphous carbon.

In some embodiments, the above negative electrode material also includes graphite dispersed in the carbon material. The addition of graphite is conductive to increase the electrical conductivity and initial Coulombic efficiency of the system.

In some embodiments, the mass fraction of graphite is 0% to 40%, the mass fraction of silicon oxide is 40% to 95%, and the mass fraction of carbon material is 5% to 60%, based on a total mass 100% of the negative electrode material.

Further, the graphite includes at least one of natural graphite, artificial graphite, and mesocarbon microbeads.

In another embodiment of the negative electrode material, the negative electrode material includes a silicon oxygen material and a carbon material. The carbon material is grown in situ on the surface of the silicon oxygen material, and the carbon material has a graphene structure, the silicon oxygen material is uniformly dispersed in the carbon material having the graphene structure.

In some embodiments, in a Raman spectrum, the negative electrode material has a carbon characteristic peak D, a carbon characteristic peak G, a silicon characteristic peak A, and a graphene characteristic peak B.

In some embodiments, a ratio I_{A}/I_{B} of a peak intensity I_{A} of the silicon characteristic peak A to a peak intensity I_{B} of the graphene characteristic peak B is 0.1 to 50, specifically 0.1, 0.5, 0.8, 1, 5, 8, 10, 15, 20, 25, 30, 35, 40, 45, or 50, etc. If the I_{A}/I_{B} ratio is excessively large, excessive SiO is exposed to the surface of primary particles, the carbon coats incompletely, the conductivity of the negative electrode material decreases, it is difficult to implement electrochemical properties. If the ratio of I_{A}/I_{B} is excessively small, the carbon coating layer is excessively thick, and the specific capacity of the material decreases.

In some embodiments, a ratio I_{D}/I_{G} of a peak intensity In of the carbon characteristic peak D to a peak intensity I_{G} of the carbon characteristic peak G is 0.5 to 2.0, specifically 0.5, 0.8, 1.0, 1.2, 1.5, 1.8, or 2.0, etc. The first efficiency of composite negative electrode material decreases when the I_{D}/I_{G} ratio is excessively large; and the rate performance of composite negative electrode material decreases when the I_{D}/I_{G} ratio is excessively small.

In some embodiments, a ratio I_{B}/I_{D} of the peak intensity I_{B} of the graphene characteristic peak B to the peak intensity I_{D} of the carbon characteristic peak D is 0 to 1, specifically 0.1, 0.2, 0.3, 0.4, 0.5, 0.6, 0.7, 0.8, 0.9 or 1.0, etc.

In another embodiment of the negative electrode material, the negative electrode material includes a silicon oxygen material and a carbon material, in which the silicon oxygen material is dispersed in the carbon material, and the negative electrode material is secondary particles, the negative electrode material has a Wadell sphericity greater than 0.91. The high sphericity of the silicon oxygen material is conductive to a more stable structure when the secondary particle is formed, and the sphericity of both secondary particle and the silicon oxygen material is high to ensure stability of the structure of overall negative electrode material of secondary particle.

In some embodiments, the silicon oxygen material is silicon oxide primary particles.

In some embodiments, a volume of powders of the silicon oxide having a particle size below 1.0 µm accounts for below 15% of a total volume of the silicon oxide.

In some embodiments, the particle size distribution of silicon oxide is satisfied: D₉₀<25.0 µm, D₁₀>0.5 µm, and 1 µm≤D₅₀≤10 µm. Controlling particle size of primary particles of the silicon oxygen material within a suitable micron range can avoid a larger specific surface area and the oxidation problem of the silicon oxygen materials caused by excessively small particle size, which can result in a decrease in capacity and the first effect. Specifically, D₉₀ can be 3.5 µm, 4 µm, 6 µm, 8 µm, 9.5 µm, 15 µm, 19.5 µm, 20.5 µm, 23.5 µm, or 24.5 µm, etc., D₁₀ can be 0.5 µm, 0.8 µm, 1.0 µm, 2 µm, 4 µm, 5 µm; D₅₀ can be 1.0 µm, 1.2 µm, 2.0 µm, 4.5 µm, 5.5 µm, 7.5 µm, 8.5 µm, or 10 µm, which are not limited to the enumerated values, and other un-enumerated values within the numerical range are equally applicable.

In some embodiments, the silicon oxide has a Si microcrystalline size of 1.0 nm to 20 nm. Specifically, the Si microcrystalline size of the silicon oxide can be 20 nm, 18 nm, 15 nm, 12 nm, 10 nm, 9.2 nm, 8 nm, 6.7 nm, 6 nm, 5 nm, 3 nm, or 1.0 nm, etc., which are not limited to the enumerated values, and other un-enumerated values within the numerical range are equally applicable.

In some embodiments, the negative electrode material has a specific surface area of 0.5m²/g to 50m²/g. Specifically the specific surface area the negative electrode material can be 0.5m²/g, 0.6m²/g, 1.0m²/g, 1.5m²/g, 2.0m²/g, 2.5m²/g, 3.0m²/g, 3.6m²/g, 4.0m²/g, 4.6m²/g, 5m²/g, 5.5m²/g, 5.8m²/g, 6.0m²/g, 6.8m²/g, 7.0m²/g, 7.4m²/g, 8.0m²/g, 8.5m²/g, 9.8m²/g, 15m²/g, or 50m²/g, which are not limited to the enumerated values, and other un-enumerated numbers within the numerical range are equally applicable.

In some embodiments, the negative electrode material has a compaction density of 0.5g/cm³ to 5.0g/cm³, specifically, 0.5g/cm³, 0.8g/cm³, 1.0g/cm³, 1.2g/cm³, 1.5g/cm³, 2.0g/cm³, 2.5g/cm³, 3.0g/cm³, 3.5g/cm³, 4.0g/cm³, or 5.0g/cm³, etc. Of course, it can also be any other value in the above range, which are not limited here. It is to be appreciated that the compaction density of the negative electrode material is controlled within the aforementioned range, so that it is beneficial to increasing the energy density of the material.

In some embodiments, the particle size D₅₀ of the negative electrode material is 2 to 10 times as big as a particle size D₅₀ of the silicon oxide. Specifically, the particle size D₅₀ of the negative electrode material is 2 times, 3 times, 5 times, 7 times, 8 times, or 10 times, etc. as big as a particle size D₅₀ of the silicon oxide. Preferably, the particle size D₅₀ of the negative electrode material is 2 to 5 times as big as a particle size D₅₀ of the silicon oxide.

In some embodiments, a particle size of the negative electrode material satisfies a relationship followed: 20 µm≤D₉₀≤50 µm, 5 µm<D₅₀<20 µm, and 2 µm≤D₁₀≤5 µm. Specifically, D₉₀ can be 20 µm, 25 µm, 30 µm, 35 µm, 40 µm, 45 µm, or 50 µm, etc., D₁₀ can be 2 µm, 2.5 µm, 3 µm, 4 µm, or 5 µm; and D₅₀ can be 5 µm, 8 µm, 10 µm, 12 µm, 15 µm, 18 µm, or 20 µm, which are not limited to the enumerated values, and other un-enumerated values within the numerical range are equally applicable.

In some embodiments, the carbon element in the negative electrode material has a mass content of 2% to 20%, specifically, 2%, 5%, 8%, 10%, 12%, 15%, 18%, or 20%, etc. Of course, it can also be any other value in the above range, which is not limited herein.

In some embodiments, the negative electrode material has a porosity of 1% to 50%. The porosity of the negative electrode material specifically can be 1%, 5%, 10%, 20%, 35%, 48%, or 50%, etc., of course, it can also be any other value in the above range, which is not limited herein. It can be appreciated that an appropriate porosity is beneficial to alleviate volume expansion of the negative electrode material. If the porosity is excessively high, it can significantly reduce the volumetric energy density of the material. Preferably, the porosity of the negative electrode material is 2% to 20%.

The preset disclosure provides a negative electrode material. The negative electrode material includes a silicon oxygen material of the first aspect and a coating layer on a surface of the silicon oxygen material. The coating layer includes a flexible polymer.

In the above solution, the coating layer is coated on the surface of the silicon oxygen material, the flexible polymer can effectively prevent moisture in the electrolyte from contacting the silicon oxygen material to generate basicity, so that the processing stability issues of the silicon oxygen material are improved without affecting the water processing performance of the material. Moreover, the flexible polymer can more effectively inhibit the expansion of the silicon-based material, so that the negative electrode material has high conductivity and conductive stability. Therefore, the silicon-based negative electrode material provided herein are well suited for lithium ion battery, and has excellent cycling expansion properties.

In some embodiments, the flexible polymer includes a natural flexible polymer and/or a synthetic flexible polymer.

In some embodiments, the flexible polymer includes at least one of a polyolefin and its derivatives, a polyvinyl alcohol and its derivatives, a polyacrylic acid and its derivatives, a polyamide and its derivatives, a carboxymethyl cellulose and its derivatives, or alginic acid and its derivatives.

The "natural flexible polymer and/or synthetic flexible polymer" of the present disclosure can be a natural flexible polymer, a synthetic flexible polymer, or a mixture of the natural flexible polymer and the synthetic flexible polymer.

Typical but non-limiting examples of combination of flexible polymers are: a combination of a polyolefin and polyvinyl alcohol; a combination of polyvinyl alcohol and carboxymethyl cellulose; a combination of carboxymethyl cellulose and alginic acid; a combination of a polyamide and a derivative of carboxymethyl cellulose; a combination of a polyolefin, a derivative of the polyolefin and a polyacrylic acid; a combination of a polyvinyl alcohol, a derivative of a polyamide, and alginic acid; a combination of a polyolefin, a polyvinyl alcohol, a derivative of a polyacrylic acid, a polyamide and alginic acid, and the like.

In some embodiments, the flexible polymer includes a polyolefin and its derivatives, and a combination of the polyolefin and its derivatives with alginic acid and its derivatives.

In some embodiments, the flexible polymer includes a polycarbonate.

In some embodiments, the flexible polymer has a weight average molecular weight of 2000 to 1000000, e. g., 2000, 5000, 10000, 15000, 20000, 30000, 40000, 50000, 60000, 75000, 100000, 200000, 300000, 350000, 400000, 500000, 600000, 650000, 700000, 800000, 900000, or 1000000, etc., preferably 100000 to 500000.

In some embodiments, the flexible polymer contains thermally crosslinking functional groups (also known as thermally cross-linkable functional groups). The thermally crosslinking functional group includes at least one of an epoxy group, a carboxyl group, a hydroxyl group, an amino group, a double bond, or an triple bond. It will be appreciated that the thermally crosslinking functional group performs a cross-linking reaction upon heating to a certain temperature. It can be understood that crosslinking (which can also be referred to as a crosslinking reaction) refers to two or more molecules are bonded with one another to crosslink into a more stable molecule (three-dimensional molecule) with a network structure, the crosslinking reaction can be classified as physical crosslinking, chemical crosslinking, and the like, depending on the triggering factors, which are not limited herein.

In some embodiments, the coating layer further includes a conductive material.

In some embodiments, the conductive material includes a flake graphite and a carbon nanomaterial.

In some embodiments, the flake graphite is attached to the surface of the silicon oxygen material; the flexible polymer is coated on the surfaces of the silicon oxygen material and flake graphite; the carbon nanomaterial is filled in a region where the surface of the silicon oxygen material is not attached by flake graphite, and/or the carbon nanomaterial is filled in a region where the surface of the silicon oxygen material is not coated by the flexible polymer. In a combined action of the flake graphite attached to the surface of the silicon oxygen material, the flexible polymer and the lithium silicate coated on the surfaces of the silicon oxygen material and the flake graphite, and the carbon nanomaterial filled in the void region, the expansion of the silicon oxygen material can be effectively inhibited. Meanwhile, since the flake graphite is attached and the void region of the carbon nanomaterial is filled, the obtained negative electrode material coated has an excellent performance, can effectivly inhibit cycling expansion performance, and extend the service life of lithium ion battery.

In some embodiments, the flake graphene includes a natural flake graphite and/or an artificial flake graphite. The present disclosure "natural flake graphite and/or artificial flake graphite" refers to a natural flake graphite, an artificial flake graphite, or a mixture of the natural flake graphite and the artificial flake graphite.

In some embodiments, the conductive material includes a combination of flake graphite and a carbon nanomaterial. When the conductive material is just a mixture of these two materials, these two materials can better cooperate with silicon-based composite material to inhibit expansion of the silicon-based material, further improving conductivity and conductive stability.

In some embodiments, the carbon nanomaterial includes at least one of conductive graphite, graphene, carbon nanotubes, or carbon nanofibers.

In one feasible embodiment, the conductive material can also include a conductive metal, a conductive alloy, or the like. The conductive metal can be, for example, copper, aluminum, silver, gold, or the like. The conductive alloy can be, for example, a copper-zinc alloy, a copper-aluminum alloy, a titanium-zinc alloy, an aluminum-copper-zinc alloy, or the like. It can be understood that when these metals are included in the conductive material, the metals can also be doped within the coating layer of the surface of the silicon oxygen material, thereby further improving the conductivity.

In some embodiments, the coating layer further includes a non-water-soluble lithium silicate. The non-water-soluble lithium silicate can effectively prevent moisture in the electrolyte from contacting the silicon oxygen material to generate basicity, so that the coated silicon oxygen material does not affect the water processing performance of the material even if it is soluble in water or exhibits strong basicity.

In some embodiments, the non-water-soluble lithium silicate includes at least one of Li₂SiO₃ and Li₂Si₂O₅.

In some embodiments, the mass percentage of the flexible polymer is 0 to 10%, in which 0 is excluded, e.g., 0.5%, 1%, 1.5%, 2%, 3%, 4%, 5%, 6.5%, 8%, 9% or 10%, etc., preferably 3% to 7%, based on the total mass 100% of the silicon oxygen material.

In some embodiments, the mass percentage of flake graphite is 0 to 20%, in which 0 is excluded, e.g., 0.5%, 1%, 3%, 3.5%, 5%, 6%, 8%, 10%, 12%, 13%, 15%, 16%, 18% or 20%, etc., preferably 5% to 10%, based on the total mass 100% of the silicon oxygen material.

In some embodiments, the mass percentage of the carbon nanomaterial is 0 to 5%, and 0 is excluded, e.g., 0.5%, 1%, 2%, 2.5%, 3%, 4% or 5%, etc., preferably 1% to 3%, based on the total mass 100% of the silicon oxygen material.

In some embodiments, the thickness of the coating layer is between 10 nm and 5000 nm, and the thickness of the coating layer can be, for example, 10 nm, 20 nm, 30 nm, 50 nm, 60 nm, 70 nm, 80 nm, 100 nm, 200 nm, 300 nm, 500 nm, 1000 nm, or 5000 nm, etc., which are not limited herein.

In some embodiments, the coating layer in the negative electrode material has a mass proportion of 0% to 20%, in which 0 is excluded%; e. g., 0.5%, 1%, 3%, 3.5%, 5%, 6%, 8%, 10%, 12%, 13%, 15%, 16%, 18% or 20%, etc., preferably 2% to 10%.

### [Third Aspect 1

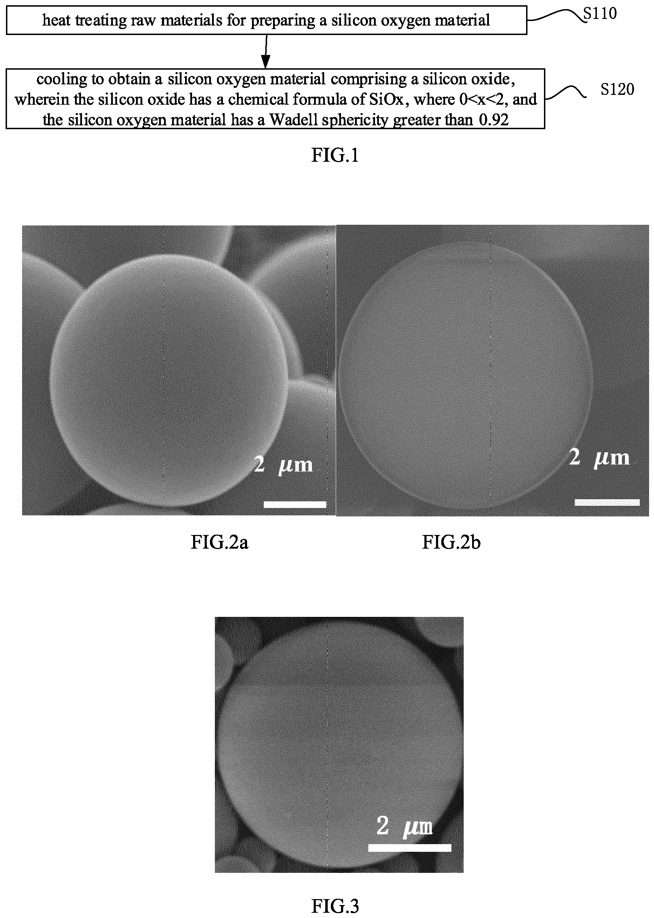

The present disclosure provides a method for preparing a negative electrode material. As shown in FIG. 1, the method includes following steps.

S110, raw materials of the silicon oxygen material is heat treated.

S120, the silicon oxygen material including silicon oxide is obtained after cooling, The silicon oxide has a chemical formula of SiOₓ, where 0<x<2, and a Wadell sphericity greater than 0.92.

In the above solution, the raw materials for preparing the silicon oxygen material is heat treated at high temperature, while silicon oxide droplets are generated. The silicon oxide droplets are cooled to automatically become spherical under the action of surface tension, and harden into the spherical silicon oxide. The spherical silicon oxide can maintain structural stability during the cycling process, so that the material has a lower expansion rate and excellent cycling performance.

In some embodiments of the present disclosure, the manners of heat treatment include: performing a plasma-reaction with the raw materials for preparing the silicon oxygen material, or atomizing the raw materials for preparing the silicon oxygen material after melting. These embodiments are described below, respectively.

Step S210: the raw materials for preparing the silicon oxygen material is plasma-reacted.

Step S220, the product reacted is cooled to to obtain a silicon oxygen material comprising a silicon oxide, wherein the silicon oxide has a chemical formula of SiOₓ, where 0<x<2, and the silicon oxygen material has a Wadell sphericity greater than 0.92.

In some embodiments, the step S210 specifically includes: feeding raw materials for preparing the silicon oxygen material to a plasma stream for a plasma-reaction.

In the above solution, the raw materials enters the plasma stream, reacts at high temperature, while generating silicon oxide droplets. The silicon oxide droplets are cooled to automatically become spheres under surface tension, and harden into spherical silicon oxide particles. The spherical silicon oxide particles can maintain structural stability during a cycling process, so that the material has a lower expansion rate and excellent cycling performance.

The preparation method provided by the present solutions S210 to S220 are described in detail below.

Prior to step S210, the method further includes:
step S200, generating a plasma stream by using a plasma generator.

The plasma generator is charged with a plasma-generating gas.

In some embodiments, the plasma generator has a RF power of 50 to 100,000 kW, which can produce plasma with low gas pressure and high density. In particular, the RF power of the plasma generator can be 50 kW, 70 kW, 100 kW, 150 kW, 200 kW, 250 kW, 500 kW, 1000 kW, 1500 kW, 2000 kW, 2500 kW, 3000 kW, 3500 kW, 4000 kW, 4500 kW, 5000 kW, 10000 kW, 20,000 kW, 30,000 kW, 40,000 kW, 50,000 kW, 60,000 kW, 70,000 kW, 80,000 kW, 90,000 kW, or 100,000 kW, etc. The RF power of the plasma generator is not limited to the enumerated values, and other un-enumerated values within the numerical range are equally applicable.

In some embodiments, the plasma generator has a DC (direct current) power of 2 kW to 3000 kW. Specifically, the DC power of the plasma generator can be 2 kW, 10 kW, 20 kW, 50 kW, 100 kW, 150 kW, 200 kW, 250 kW, 500 kW, 1000 kW, 1500 kW, 2000 kW, 2500 kW, 2800 kW, or 3000 kW. The DC power of the plasma generator is not limited to the enumerated values, and other un-enumerated values within the numerical range are equally applicable.

In some embodiments, the plasma-generating gas includes at least one of nitrogen and argon.

In some embodiments, the pressure of the plasma-generating gas is controlled at 100 torr to 10000 torr. Specifically, it can be 100 torr, 200 torr, 300 torr, 400 torr, 500 torr, 600 torr, 700 torr, 800 torr, 900 torr, 1000 torr, 2000 torr, 4000 torr, 6000 torr, 8000 torr, 10000 torr. However, it is not limited to the enumerated values, and other un-enumerated values within that numerical range are equally applicable. The pressure of the plasma-generating gas is controlled within the range described above, and a stable plasma can be obtained by controlling the probability of gas collision.

In some embodiments, the plasma-generating gas has a radial gas velocity of 0.8m³/h to 100m³/h. Radial gas is continuously fed to stabilize plasma jet.

In some embodiments, the plasma-generating gas has a tangential gas velocity of 1.0m³/h to 20m³/h. Tangential gas is used to protect the quartz tube at high discharge temperature.

It should be noted that the method for generating the plasma stream is not limited to employing the methods described above.

In step S210, raw materials for preparing the silicon oxygen material is fed to a plasma stream for a plasma-reaction.

In some embodiments, the raw materials for preparing the silicon oxygen material include at least one of a mixture of Si, SiO_{y} and SiO₂; a mixture of SiO_{y} and Si; and a mixture of Si and SiOz, where 0<y<2.

In some embodiments, when the silicon oxide prepared has a chemical formula of SiO, the raw materials for preparing the silicon oxygen material include SiH₄ and Oz.

The raw materials can be all materials that can generate silicon oxide in the plasma stream, and the above described embodiments are merely illustrative of some of the preferred technical solutions and are not limited to the technical solutions provided herein.

In some embodiments, the temperature of the plasma stream is 1400°C to 2400°C. Specifically, the plasma temperature can be 1400°C, 1450°C, 1500°C, 1550°C, 1575°C, 1600°C, 1650°C, 1700°C, 1764°C, 1800°C, 1850°C, 1900°C, 1950°C, 2000°C, 2150°C, 2200°C, 2270°C, 2300°C, or 2400°C. It can be understood that the temperature of the plasma stream is not limited to only the enumerated values, and other un-enumerated values within the numerical range are equally applicable.

In some embodiments, in the step of feeding the raw materials into the plasma stream for plasma-reaction, a feeding rate is 2.0 g/min to 80 g/min. Specifically, it can optionally be 2.0 g/min, 5.0 g/min, 10.0 g/min, 15 g/min, 17.5 g/min, 20.0 g/min, 30 g/min, 35 g/min, 40.0 g/min, 45 g/min, 50 g/min, 55 g/min, 60.0 g/min, 65 g/min, 75 g/min, 80.0 g/min. When particle size of the raw materials is constant, the residence time of the raw materials in the plasma stream is determined by the feeding rate. If the feeding rate is excessively large, the time during which the raw materials particles pass through the plasma stream is excessively short, and the energy absorbed by an individual particle is excessively low, so that the particles are melted insufficiently, thereby reducing the sphericity of the product. If the feeding rate is excessively small, excessively low rate may limit productivity although the sphericity of the particles can be increased. The proper feeding rate can be determined by comprehensively considering impact factors such as the sphericity and the productivity.

In some embodiments, the step of feeding the raw materials into the plasma stream for plasma-reaction is specifically that: using a carrier gas to feed raw materials for preparing the silicon oxide to the plasma stream for a plasma-reaction.

In some embodiments, the carrier gas includes at least one of nitrogen and argon.

In some embodiments, a flow rate of the carrier gas is 0.1 m³/h to 3 m³/h. Specifically, the flow rate of the carrier gas can be 0.1 m³/h, 0.5 m³/h, 0.8 m³/h, 1 m³/h, 1.2 m³/h, 1.5 m³/h, 1.75 m³/h, 2 m³/h, 2.2 m³/h, 2.6 m³/h, or 3 m³/h, etc. When the flow rate of the carrier gas is excessively large, the radial gas flow field in the plasma generation device causes the particles to fly away from a high temperature region while the axial gas flow causes the particles to "blend" back into a cold region, the collective action of both causes a significant decrease in the sphericity of the product. Meanwhile, excessively low flow rate of the carrier gas causes the raw materials to extremely clog the nozzle, the ejecting velocity of the raw materials is lowered, so that the residence time of the raw materials within the plasma torch is excessively long, resulting in a substantial amount of vaporization. Thus, a suitable flow rate of the carrier gas is beneficial to uniform dispersion of the raw materials within the plasma torch, increasing the sphericity.

In some embodiments, the step S210 includes: using a carrier gas to feed raw materials for preparing the silicon oxide to a plasma stream for a plasma-reaction, and feeding a reducing gas. The reducing gas can prompt reduction of SiOy and inhibit the generation of electrochemically inactive SiC.

In some embodiments, the reducing gas includes at least one of methane and hydrogen.

In some embodiments, a molar ratio of the reducing gas to silicon oxide is 0 to 0.25, and 0 is excluded.

In some embodiments, the reducing gas has a radial rate of 1 m³/h to 10 m³/h, specifically 1 m³/h, 2 m³/h, 4 m³/h, 5 m³/h, 7 m³/h, 9 m³/h, or 10 m³/h, etc., which are not limited herein.

In step S220, the product reacted is cooled to obtain a silicon oxygen material including the silicon oxide.

In this embodiment, the cooling is performed in a water-cooling device of the related art.

Further, after step S200, and prior to step S210, the method further includes:
sieving the raw materials for preparing the silicon oxygen material to a D₅₀ of 2 um to 10 um. Specifically, the value of D₅₀ of the raw materials can be 2 um, 3 um, 4 um, 5 um, 6 um, 7 um, 8 um, 9 um, 10 um, which are not limited to the enumerated values, and other un-enumerated values within the range of values are equally applicable.

In a specific embodiment, the sieving includes at least one of crushing, ball milling, screening or grading.

In a method for preparing a silicon oxygen material according to another embodiment, a suitable amount of a reducing metal is added to the raw materials for preparing the silicon oxygen material, the silicon oxygen material primary particles are prepared, and the primary particles have a Wadell sphericity greater than 0.92. The silicon oxide, the reducing metal, and/or the reducing metal compound are uniformly distributed within the primary particles. The silicon oxide has a chemical formula of SiOₓ, where 0<x<2.

In the above solution, a certain proportion of reducing metal is added to the raw materials for the preparing the silicon oxygen material, the reducing metal is vaporized under a plasma stream to form a gaseous reducing metal vapor, so that doping of the silicon oxygen material is achieved. The negative electrode material prepared by using the composite silicon oxygen material as raw materials has a stable structure, it is possible to effectively prevent the ingredients such as air from permeating into the interior of the particles which result in inactivation of the active ingredients, the structure and properties do not deteriorate after long term storage, which are well suited for lithium ion battery. In contrast to pure silicon oxygen materials, the reducing metals and/or reducing metal compounds (especially lithium silicate) in the composite silicon oxygen material can reduce the consumption of lithium from the positive electrode material when the silicon oxygen material is initially charged, the prepared lithium ion battery can greatly reduce the consumption of irreversible charge lithium, have a higher charge and discharge specific capacity, and excellent initial Coulombic efficiency, improve the cycling performance of the material.

In some embodiments, the reducing metal compound includes at least one of a reducing metal oxide, a reducing metal silicide, and a reducing metal silicate.

In some embodiments, the reducing metal compound includes a reducing metal silicate uniformly distributed within the primary particles.

In some embodiments, the silicate includes lithium silicate. Lithium silicate has good lithium ion conduction property. In conjunction with its smaller crystal grain size, Lithium silicate can better ensure that lithium ion smoothly complete the intercalation/ de-intercalation reaction, exhibiting good rate performance and high safety.

In some embodiments, silicate is diffusedly distributed in the silicon oxide, the problem of volume expansion of silicon can be mitigated when charging and discharging, while primary particles with the spherical structure can further improve the structural stability of the material, so that it has excellent cycling performance and small volume effect, thereby having excellent electrochemical performance.

In some embodiments, the reducing metal includes at least one of an alkali metal, an alkaline earth metal, or a transition metal.

In some embodiments, the reducing metal is at least one of Li, K, Mg, Al, Ca, Zn, Na, and Ti.

In some embodiments, the reducing metal includes Li. A molar ratio of Si to Li in the raw materials for preparing the silicon oxygen material is (1 to 50):1, specifically, 1:1, 5:1, 10:1, 15:1, 20:1, 25:1, 30:1, 35:1, 40:1, 45:1, or 50:1, etc., which are not limited herein.

In some embodiments, step S220 includes:
cooling the product reacted to obtain a silicon oxygen material, the silicon oxygen material includes a silicate excluding Li₂Si₂O₅ and a silicon oxide.

In some embodiments, the reducing metal includes Mg. A molar ratio of Si to Mg in the raw materials for preparing the silicon oxygen material is (5 to 50):1, specifically, 5:1, 10:1, 15:1, 20:1, 25:1, 30:1, 35:1, 40:1, 45:1, or 50:1, etc., which are not limited herein.

Step S220 includes: cooling the product reacted to obtain a silicon oxygen material, the silicon oxygen material includes a silicate MgSiO₃ and a silicon oxide.

In some embodiments, after step S220, the method further includes water-washing and/or acid-washing the heat treated product.

In some embodiments, the acid used in the acid-washing includes at least one of hydrochloric acid, sulfuric acid, nitric acid, perchloric acid, phosphoric acid, chromic acid, hydrofluoric acid, formic acid, and acetic acid.

In some embodiments, the acid used in the acid-washing includes a mixture of nitric acid and hydrofluoric acid.

In some embodiments, a mass ratio of nitric acid to hydrofluoric acid is 1 :(0.5 to 5), specifically, 1:0.5, 1:1, 1:1.5, 1:2, 1:3, 1:4, or 1:5, etc., which are not limited herein.

In some embodiments, a washing time of acid-washing is 10 min to 2000 min.

In some embodiments, after water-washing and/or acid-washing the heat treated product, the method further includes water-washing and/or acid-washing the heat treated product to be neutral, and performing solid-liquid separation and drying.

In some embodiments, the method of solid-liquid separation includes at least one of centrifugal separation and filtration separation.

In some embodiments, the manners of drying include at least one of high temperature baking and freeze drying.

In another embodiment, the method for preparing the silicon oxygen material includes following steps.

In step S310, the molten silicon oxide raw materials are atomized to obtain an atomized product.

In step S320, the atomized product is cooled to obtain a silicon oxygen material including silicon oxide.

The silicon oxide produced by this embodiment has a chemical formula SiOₓ, where 0<x<2. The silicon oxide is primary particles. The silicon oxide has a Wadell sphericity greater than 0.92.

In the above method, the molten silicon oxide raw materials are atomized into silicon oxide droplets. The droplets automatically become spheres under the action of surface tension, are cured to spherical silicon oxide after cooling. The spherical silicon oxide is capable of maintaining structural stability during a cycling process, so that the material has a lower expansion rate and excellent cycling performance.

This embodiment will be described in detail below.

Specifically, step S310 includes atomizing the molten raw materials of the silicon oxygen material by using a pressurized gas.

In some embodiments, the pressurized gas is a protective gas.

The protective gas includes at least one of nitrogen, argon, neon, krypton, and helium.

In some embodiments, the pressure of the pressurized gas is 0.2 MPa to 100 MPa. Specifically, the pressure can be 0.2 MPa, 1 MPa, 5 MPa, 8 MPa, 10 MPa, 12 MPa, 15 MPa, 20 MPa, 25 MPa, 35 MPa, 50 MPa, 60 MPa, 75 MPa, 85 MPa, or 100 MPa, which are not limited to the enumerated values, and other un-enumerated values within the range of values are equally applicable.

In some embodiments, before step S310, the method further includes: heat treating the raw materials of silicon oxide to melt.

In some embodiments, the raw materials of silicon oxide is SiOz, where 0<z<2.

In some embodiments, the raw materials of silicon oxide includes at least one of SiO, a mixture of Si and SiO₂, a mixture of Si and SiOz, a mixture of SiO and SiO₂.

In some embodiments, the temperature of the heat treatment is 1400°C to 2200°C. Specifically, the temperature of the heat treatment can be 1400°C, 1500°C, 1600°C, 1800°C, 2000°C, or 2200°C.

In step S320, the atomized product is cooled to obtain a silicon oxygen material containing silicon oxide.

In some embodiments, the step of cooling is to cool to below 100°C. Specifically, the step of cooling is to cool to 90°C, 80°C, 75°C, 65°C, 60°C, 50°C, etc.

In some embodiments, a cooling rate is 1°C/s to 100°C/s. This cooling rate can cause the silicon oxide droplets to cool abruptly, resulting in a smaller Si microcrystalline size. Specifically, the cooling rate can be 1°C/s, 10°C/s, 20°C/s, 35°C/s, 45°C/s, 60°C/s, 70°C/s, 80°C/s, 90°C/s, or 100°C/s.

In some embodiments, the method of cooling is cooled by using a gas.

In some embodiments, the gas used for cooling is a protective gas.

Specifically, the protective gas includes at least one of nitrogen, argon, neon, krypton, and helium.

In another embodiment of the method for preparing a negative electrode material, an organic carbon source is added in the raw materials for preparing the silicon oxide to obtain a composite material of the silicon-based material and the carbon material. The method specifically includes following steps:
Step S410: heat treating the raw materials including silicon oxide and the organic carbon source, so that the organic carbon source is melted.
Step S420, atomizing raw materials including silicon oxide and molten organic carbon source;
Step S430, cooling the atomized product to obtain a spherical intermediate;
Step S440, performing a carbonization treatment on the spherical intermediate to obtain a negative electrode material.

The negative electrode material produced by the method includes silicon oxide and carbon material. The silicon oxide has a chemical formula of SiOₓ, where 0<x<2. The negative electrode material is spherical particles, and the negative electrode material has a Wadell sphericity greater than 0.3.

In the above solution, the organic carbon source is melted to become a melt with good fluidity, while silicon oxide is still uniformly dispersed in the melt as a solid phase, the melt system uses a pressurized gas to disperse into mist droplets, the solid silicon oxide is dispersed in the droplets of organic carbon source, the droplets are automatically shrunk to spheres by surface tension and discharge air bubbles inside itself to form a dense structure, then becomes a solid spherical intermediate after cooling, the spherical intermediate is carbonized by carbonization treatment, the carbon source is converted to an amorphous carbon material, silicon oxide is dispersed in amorphous carbon material, a spherical negative electrode material is formed. The spherical negative electrode material maintains the morphology of the spherical intermediate, thereby having a higher sphericity.

In particular, SiO_{w} can be SiO_{0.5}, SiO_{1.0}, SiO_{1.2}, SiO_{1.5} or SiO_{1.8}, or the like.

In some embodiments, SiO_{w} includes at least one of SiO, a mixture of Si and SiO, a mixture of Si and SiO₂, or a mixture of SiO and SiO₂.

In some embodiments, the D50 of SiO_{w} is smaller than or equal to 1.5 µm.

In some embodiments, the raw materials of the silicon oxide further include a molten organic carbon source.

In some embodiments, the organic carbon source includes at least one of a saccharide, an ester, a hydrocarbon, an organic acid, and a high-molecular polymer.

In some embodiments, the organic carbon source includes at least one of polyvinyl chloride, polyvinyl butyral, polyacrylonitrile, polyacrylic acid, citric acid, polyethylene glycol, polypyrrole, polyaniline, sucrose, glucose, maltose, citric acid, asphalt, furfural resin, epoxy resin, and phenolic resin.

In some embodiments, the temperature of the heat treatment is 100°C to 600°C. In particular examples, the temperature of the heat treatment can be 100°C, 120°C, 150°C, 200°C, 250°C, 280°C, 300°C, 400°C, 450°C, 500°C, 550°C, or 600°C, etc. Since the melting point of the organic carbon source is much lower than silicon oxide, the temperature of this heat treatment reaches the melting temperature of the organic carbon source and does not need to rise to the melting point of silicon oxide to prepare the spherical negative electrode material, avoiding the increase in Si microcrystalline size of the silicon oxide caused by high temperature, keeping it within 50 nm.

Further, the raw materials further include graphite. Adding graphite is beneficial to increase the electrical conductivity and initial Coulombic efficiency of the system.

In some embodiments, the mass fraction of graphite is 0% to 40%, the mass fraction of SiO_{w} is 40% to 95%, the mass fraction of the organic carbon source is 5% to 60%, based on a total mass 100% of graphite, SiO_{w} and organic carbon source.

In some embodiments, the graphite includes at least one of natural graphite, artificial graphite, and mesocarbon microbeads.

In step S420, the raw materials including silicon oxide and the molten organic carbon source are atomized by using a pressurized gas.

The product atomized by the raw materials including silicon oxide and the molten organic carbon source is that silicon oxide particles are dispersed in the organic carbon source droplets.

In some embodiments, the pressure of the pressurized gas is 0.2 MPa to 100 MPa. The pressurized gas having a pressure within this range is capable of atomizing the raw materials including silicon oxide and the molten organic carbon source. In a specific example, the pressure of the pressurized gas can be 0.2 MPa, 10 MPa, 20 MPa, 30 MPa, 40 MPa, 50 MPa, 70 MPa, 80 MPa, 90 MPa, or 100 MPa.

In some embodiments, the pressurized gas includes a protective gas including at least one of nitrogen, argon, neon, krypton, and helium.

It is noted that the method of atomizing can use atomizing devices commonly used in the art so as to atomize the raw materials including silicon oxide and molten organic carbon source, so that silicon oxide particles are dispersed in the organic carbon source droplets.

In step S430, the atomized product is cooled to obtain a spherical intermediate.

In some embodiments, the cooling process is to cool the atomized product to a temperature below 100°C.

In some embodiments, the cooling rate is 1°C/s to 100°C/s. Cooling rapidly is beneficial to obtain a smaller Si microcrystalline size.

In some embodiments, the cooling process is cooling by a gas. Further, the gas is a protective gas.

Still further, the protective gas includes at least one of nitrogen, argon, neon, krypton, and helium.

In Step S440, a carbonization treatment is performed on the spherical intermediate to obtain a negative electrode material.

In some embodiments, the carbonization treatment is performed under a protective atmosphere.

Further, the gas of the protective atmosphere includes at least one of nitrogen, argon, neon, krypton, and helium.

In some embodiments, the temperature of carbonization treatment ranges from 600°C to 1000°C for 1 hour to 24 hours.

In some embodiments, the method further includes: adding a carbon source gas into the raw materials for preparing the silicon oxygen material, and performing a secondary granulation.

In a specific embodiment, a carbon source gas and silicon oxygen material are fed into the plasma stream to perform secondary granulation and cooled to obtain a negative electrode material containing silicon oxide and the carbon material, in which the negative electrode material is secondary particles, the silicon oxide has a chemical formula of SiOₓ, 0 < x < 2, and the negative electrode material has a Wadell sphericity greater than 0.91.

In the above solution, by performing the secondary granulation for the silicon oxide, the product formed has a high sphericity, the stress of the internal structure is increased, the strength of the material is increased, thereby improving the cycling performance and the rate performance.

In some embodiments, the silicon oxygen material is silicon oxide primary particles.

In some embodiments, a volume of powders of the silicon oxide having a particle size below 1.0 µm accounts for below 15% of a total of the silicon oxide.

In some embodiments, the silicon oxide has a particle size of D₉₀<25.0 µm, D₁₀>0.5 µm, and 1 µm≤D₅₀≤10 µm.

In some embodiments, the silicon oxide has a Si microcrystalline size of 1.0 nm to 20 nm.

In some embodiments, the step of feeding the carbon source gas into the plasma stream to perform secondary granulation further includes: adding a carbonaceous binder to the plasma stream.

In some embodiments, the carbonaceous binder includes at least one of a saccharide, an ester, a hydrocarbon, an organic acid, and a high-molecular polymer.

In some embodiments, the carbonaceous binder includes at least one of polyvinyl chloride, polyvinyl butyral, polyacrylonitrile, polyacrylic acid, polyethylene glycol, polypyrrole, polyaniline, sucrose, glucose, maltose, citric acid, asphalt, furfural resin, epoxy resin, and phenolic resin.

In some embodiments, a mass ratio of the carbonaceous binder to the silicon oxide is 5:95 to 50:50.

In some embodiments, the carbon source gas includes a hydrocarbon.

In some embodiments, the carbon source gas includes at least one of methane, acetylene, ethylene, ethane, propane, propylene, methylacetylene, acetone, and benzene.

In some embodiments, the particle size D₅₀ of the negative electrode material is 2 to 10 times as big as the particle size D₅₀ of the silicon oxide.

In some embodiments, the particle size of the negative electrode material satisfies a relationship followed: 20 µm≤D₉₀≤50 µm, 5 µm<D₅₀<20 µm, and 2 µm≤D₁₀≤5 µm.

In some embodiments, the carbon element in the negative electrode material has a mass content of 2% to 20%.

In some embodiments, the negative electrode material has a porosity of 1% to 50%.

In another embodiment, a method for preparing a negative electrode material includes following steps:

Step S 130, carbon coating the silicon oxygen material to obtain the negative electrode material.

The silicon oxygen material can be prepared by using steps S 110 to S 120.

The negative electrode material obtained by this preparation method includes a silicon oxygen material and a carbon layer coating on the surface of the silicon oxygen material. The silicon oxygen material including silicon oxide. The silicon oxide has a chemical formula of SiOₓ, where 0<x<2, the silicon oxygen material is primary particles, and the silicon oxygen material has a Wadell sphericity greater than 0.92.

In an embodiment, the carbon-coating is specifically as at least one of a solid phase carbon-coating, a liquid phase carbon-coating, and a vapor phase carbon coating.

In particular, the vapor phase carbon coating is specifically that: placing the cooled product in a chemical vapor deposition apparatus, feeding a carbon source gas to perform thermal cracking, so that amorphous carbon is deposited on material surface.

In some embodiments, the carbon source gas used for the vapor phase carbon coating includes a hydrocarbon.

In some embodiments, the carbon source gas includes at least one of methane, acetylene, ethylene, ethane, propane, propylene, methylacetylene, acetone, and benzene.

In some embodiments, the chemical vapor deposition apparatus includes at least one of a rotary chemical vapor deposition reaction furnace, a plasma enhanced chemical vapor deposition reaction furnace, a chemical vapor deposition tube furnace, and a fluidized bed. In particular, the chemical vapor deposition apparatus is at least one of a rotary furnace and a box furnace.

In some embodiments, the temperature of the thermal cracking is 600°C to 1000°C.

In some embodiments, the silicon oxygen material has a heating temperature between 500°C and 1200°C and a heat preservation period between 0.5 hour and 20 hours.

In some embodiments, a reaction gas pressure of the carbonization treatment is 1.0 atm to 10.0 atm.

In some embodiments, an auxiliary gas is further fed when feeding the protective gas and the carbon source gas, the auxiliary gas includes H₂. A molar ratio of the carbon source gas to the auxiliary gas is (2 to 10):1.

In some embodiments, protective gas includes at least one of nitrogen, helium, neon, argon, krypton and xenon.

In some embodiments, the solid phase carbon-coating process is specifically that: carbonizing a mixture obtained by mixing the silicon oxygen material with the solid carbon source to obtain a negative electrode material.

In some embodiments, the carbon source used in the solid phase carbon-coating includes at least one of a saccharide, an ester, a hydrocarbon, an organic acid, and a high-molecular polymer. Specifically, it can be at least one of polyvinyl chloride, polyvinyl butyral, polyacrylonitrile, polyacrylic acid, polyethylene glycol, polypyrrole, polyaniline, sucrose, glucose, maltose, citric acid, asphalt, furfural resin, epoxy resin, and phenolic resin.

In some embodiments, the manners of mixing the cooled product with the carbon source can be VC mixing, fusion, ball milling, three dimensional mixing, fluidized bed mixing, etc.

In some embodiments, the mixing is performed in a fusion machine with a fusion time of 0.5 hour to 2 hours, and a rotational rate of 500r/min to 5000r/min.

In some embodiments, a mass ratio of the solid carbon source to the silicon oxygen material is 5:(5 to 95).

In some embodiments, the carbonization treatment is performed at a temperature of 500°C to 1000°C for 2 hours to 20 hours.

In some embodiments, the apparatus used by solid phase carbon coating is at least one of a rotary furnace, a box furnace, a roller kiln, a tunnel kiln, a pusher kiln.

In some embodiments, the protective gas can be at least one of nitrogen, argon, helium, neon, krypton, and xenon.

The liquid phase carbon-coating process is specifically that mixing uniformly the cooled product with a carbon source, then placing them in a furnace, feeding a protective gas, and heat treating so that the carbon source is cracked to coat on the surface of the cooled product.

In some embodiments, the carbon source used for the liquid phase carbon-coating is an organic carbon source, specifically, it can be a low temperature liquid phase asphalt, furfuryl alcohol, glycidyl methacrylate, triethylene glycol dimethacrylate, and the like.

In some embodiments, the protective gas can be at least one of nitrogen, argon, helium, neon, krypton, and xenon.

In some embodiments, the temperature of heat treating is 600°C to 1000°C.

In another embodiments, a method for preparing a negative electrode material further includes:
coating the silicon oxygen material by using a coating liquid containing a flexible polymer, to obtain the negative electrode material.

In the above solution of the present disclosure, coating liquid with the polymer is used to coat the silicon oxygen material, the polymer is precipitated to coat on the surface of the silicon oxygen material. Through traction and bundling of the polymer, it is beneficial to maintain electrical connection during the cycling expansion process of the silicon oxygen material, so that it can effectively inhibit the expansion of the silicon-based active material, significantly improving the inhibition of cycle expansion performance of the silicon-based active material, and extending the service life of the lithium ion battery.

In some embodiments, the flexible polymer includes a natural flexible polymer and/or a synthetic flexible polymer.

In some embodiments, the flexible polymer includes at least one of a polyolefin and its derivatives, a polyvinyl alcohol and its derivatives, a polyacrylic acid and its derivatives, a polyamide and its derivatives, a carboxymethyl cellulose and its derivatives, or alginic acid and its derivatives.

The "natural flexible polymer and/or synthetic flexible polymer" of the present disclosure can be a natural flexible polymer, a synthetic flexible polymer, or a mixture of the natural flexible polymer and the synthetic flexible polymer.

Typical but non-limiting examples of combination of flexible polymers are: a combination of a polyolefin and polyvinyl alcohol; a combination of polyvinyl alcohol and carboxymethyl cellulose; a combination of carboxymethyl cellulose and alginic acid; a combination of a polyamide and a derivative of carboxymethyl cellulose; a combination of a polyolefin, a derivative of the polyolefin and a polyacrylic acid; a combination of a polyvinyl alcohol, a derivative of a polyamide, and alginic acid; a combination of a polyolefin, a polyvinyl alcohol, a derivative of a polyacrylic acid, a polyamide and alginic acid, and the like.

In some embodiments, the flexible polymer includes a polyolefin and its derivatives, and a combination of the polyolefin and its derivatives with alginic acid and its derivatives.

In some embodiments, the flexible polymer includes a polycarbonate.

In some embodiments, the flexible polymer has a weight average molecular weight of 2000 to 1000000, e. g., 2000, 5000, 10000, 15000, 20000, 30000, 40000, 50000, 60000, 75000, 100000, 200000, 300000, 350000, 400000, 500000, 600000, 650000, 700000, 800000, 900000, or 1000000, etc., preferably 100000 to 500000.

In some embodiments, the flexible polymer contains thermally crosslinking functional groups (also known as thermally cross-linkable functional groups). The thermally crosslinking functional group includes at least one of an epoxy group, a carboxyl group, a hydroxyl group, an amino group, a double bond, or an triple bond. It will be appreciated that the thermally crosslinking functional group performs a cross-linking reaction upon heating to a certain temperature. It can be understood that crosslinking (which can also be referred to as a crosslinking reaction) refers to two or more molecules are bonded with one another to crosslink into a more stable molecule (three-dimensional molecule) with a network structure, the crosslinking reaction can be classified as physical crosslinking, chemical crosslinking, and the like, depending on the triggering factors, which are not limited herein.

In some embodiments, the coating liquid includes a solvent. The solvent includes at least one of water, methanol, ethanol, polypyrrolidone, isopropanol, acetone, petroleum ether, tetrahydrofuran, ethyl acetate, N,N-dimethylacetamide, N,N-dimethylformamide, n-hexane, or a halogenated hydrocarbon.

In some embodiments, the coating liquid includes an anti-solvent. The anti-solvent includes a poor solvent for the flexible polymer.

In some embodiments, the anti-solvent includes at least one of methanol, ethanol, polypyrrolidone, isopropanol, acetone, petroleum ether, tetrahydrofuran, ethyl acetate, N,N-dimethylacetamide, N,N-dimethylformamide, n-hexane, or a halogenated hydrocarbon.

In some embodiments, the step of coating the silicon oxygen material with the flexible polymer-containing coating liquid includes:
adding the silicon oxygen material to the flexible polymer-containing coating liquid, stirring, separating to obtain a negative electrode material precursor, and heat treating the negative electrode material precursor.

In some embodiments, the temperature of the heat treatment is 100°C to 400°C, specifically 100°C, 125°C, 150°C, 170°C, 200°C, 220°C, 240°C, 260°C, 300°C, 350°C or 400°C, and the like, preferably 150°C to 250°C.

In some embodiments, the duration of the heat treatment is 2 hours to 12 hours; specifically can be 2 hours, 4 hours, 5 hours, 6.5 hours, 8 hours, 10 hours, 11 hours or 12 hours, and the like.

In some embodiments, the stirring temperature is 20°C to 100°C, the time of stirring is 1 hour to 24 hours; the temperature of stirring can be 20°C, 30°C, 40°C, 45°C, 50°C, 60°C, 70°C, 80°C, or 100°C, etc.; the time of stirring can be 1 hour, 2 hours, 2.5 hours, 3 hours, 3.5 hours, 4 hours, 5 hours, 6 hours, 7 hours, 12 hours, 18 hours, or 24 hours, or the like.

In some embodiments, the coating liquid further includes a conductive material.

In some embodiments, the conductive material includes a flake graphite and a carbon nanomaterial.

In some embodiments, the flake graphite is attached to the surface of the silicon oxygen material; the flexible polymer is coated on the surfaces of the silicon oxygen material and flake graphite; the carbon nanomaterial is filled in a region where the surface of the silicon oxygen material is not attached by flake graphite, and/or the carbon nanomaterial is filled in a region where the surface of the silicon oxygen material is not coated by the flexible polymer. In a combined action of the flake graphite attached to the surface of the silicon oxygen material, the flexible polymer and the lithium silicate coated on the surfaces of the silicon oxygen material and the flake graphite, and the carbon nanomaterial filled in the void region, the expansion of the silicon oxygen material can be effectively inhibited. Meanwhile, since the flake graphite is attached and the void region of the carbon nanomaterial is filled, the obtained negative electrode material coated has an excellent performance, can effectivly inhibit cycling expansion performance, and extend the service life of lithium ion battery.

In some embodiments, the flake graphene includes a natural flake graphite and/or an artificial flake graphite. The present disclosure "natural flake graphite and/or artificial flake graphite" refers to a natural flake graphite, an artificial flake graphite, or a mixture of the natural flake graphite and the artificial flake graphite.

In some embodiments, the conductive material includes a combination of flake graphite and a carbon nanomaterial. When the conductive material is just a mixture of these two materials, these two materials can better cooperate with silicon-based composite material to inhibit expansion of the silicon-based material, further improving conductivity and conductive stability.

In some embodiments, the carbon nanomaterial includes at least one of conductive graphite, graphene, carbon nanotubes, or carbon nanofibers.

In one feasible embodiment, the conductive material can also include a conductive metal, a conductive alloy, or the like. The conductive metal can be, for example, copper, aluminum, silver, gold, or the like. The conductive alloy can be, for example, a copper-zinc alloy, a copper-aluminum alloy, a titanium-zinc alloy, an aluminum-copper-zinc alloy, or the like. It can be understood that when these metals are included in the conductive material, the metals can also be doped within the coating layer of the surface of the silicon oxygen material, thereby further improving the conductivity.

In some embodiments, the coating layer further includes a non-water-soluble lithium silicate. The non-water-soluble lithium silicate can effectively prevent moisture in the electrolyte from contacting the silicon oxygen material to generate basicity, so that the coated silicon oxygen material does not affect the water processing performance of the material even if it is soluble in water or exhibits strong basicity.

In some embodiments, the non-water-soluble lithium silicate includes at least one of Li₂SiO₃ and Li₂Si₂O₅.

In some embodiments, the thickness of the coating layer is 10 nm to 5000 nm; the thickness of the coating layer can be, for example, 10 nm, 20 nm, 30 nm, 50 nm, 60 nm, 70 nm, 80 nm, 100 nm, 200 nm, 300 nm, 500 nm, 1000 nm, or 5000 nm, etc., which are not limited herein.

In some embodiments, a mass proportion of the coating layer in negative electrode material ranges from 0% to 20% and 0 is excluded%; e. g., 0.5%, 1%, 3%, 3.5%, 5%, 6%, 8%, 10%, 12%, 13%, 15%, 16%, 18% or 20%, etc., preferably 2% to 10%.

The present disclosure also provides a lithium ion battery that includes a negative electrode material as described above or a negative electrode material obtained by the preparation method.

A pole piece includes a negative electrode material as described above or a negative electrode material obtained by the preparation method above.

The following several Examples further illustrate the embodiments of the present disclosure. The Examples herein are not limited to the specific examples described below. The Examples can be appropriately changed to implement within the scope of protection.

### Example 1

A method for preparing a negative electrode material of the present embodiment included following steps.
(1) The plasma generator was controlled to adopt a DC power of 8.5 kW, a radiofrequency power of 95 kW, argon being the plasma-generating gas, a DC argon flow rate of 0.6 m³/h, a pressure of 450 Torr, a plasma-generating gas at a radial rate of 8.4 m³/h and a tangential rate of 1.8 m³/h, and a high temperature gas stream limited within an axial range.
(2) By using argon as a carrier gas, SiO raw materials with D50 of 5 µm after mechanical ball milling, air jet pulverization and grading were fed into a plasma stream to react; the carrier gas had a flow rate of 0.5 m³/h and a feeding rate of 5 g/min.
(3) The product obtained from the reaction of step (2) was cooled in a water-cooling device at the tail of the plasma stream, and the cured spherical SiO product after cooling was attached to a wall of the water-cooling device, and collected to obtain a silicon oxygen material.

The silicon oxygen material of this Example was spherical SiO, the spherical SiO was primary particles.

SEM images of spherical SiO prepared in this example are shown in FIGS. 2a and 2b. It can be seen from FIGS. 2a and 2b that the spherical SiO particle produced by this Example has a smooth and round surface, and a better sphericity. The cross-section view shows a uniform structure inside of the sphere.

Further, (4) the SiO was placed in a CVD rotary furnace in which acetylene was fed as a carbon source, and nitrogen was fed as a protective gas, it was deposited at 800°C for 60 min, and cooled to obtain a negative electrode material in which SiO was coated with a carbon material.

Negative electrode material of this Example included the spherical SiO and a carbon layer coated on the surface of the spherical SiO, the spherical SiO was primary particles. The carbon layer had a maximum thickness of 120 nm and a minimum thickness of 80 nm, and the negative electrode material has an average particle size D50 of 20 µm.

### Example 2

A method for preparing a negative electrode material of the present embodiment included following steps.
(1) The plasma generator was controlled to adopt a DC power of 100 kW, a radiofrequency power of 1000 kW, argon being the plasma-generating gas, a DC argon flow rate of 0.2 m³/h, a pressure of 1000 Torr, a plasma-generating gas at a radial rate of 20 m³/h and a tangential rate of 5 m³/h, and a high temperature gas stream limited within an axial range; and was fed with a reducing atmosphere H₂ at a radial rate of 5 m³/h.
(2) By using nitrogen as a carrier gas, SiO and Si raw materials with D50 of 5 µm after mechanical ball milling, air jet pulverization and grading were fed into a plasma jet, a mole ratio of SiO and Si was 1:1, the carrier gas had a flow rate of 0.4m³/h and a feeding rate of 60 g/min.
(3) The product obtained from step (2) was cooled in a water-cooling device at the tail of the plasma stream, and the cured spherical SiO_{0.5} product after cooling was attached to a wall of the water-cooling device, and collected to obtain a silicon oxygen material.
(4) The SiO_{0.5} was placed in a CVD rotary furnace in which methane was fed as a carbon source, and nitrogen was fed as a protective gas, was deposited at 600°C for 120 min, and cooled to obtain a negative electrode material in which SiO_{0.5} was coated with a carbon material.

The silicon oxygen material of this Example was spherical SiO_{0.5}, the spherical SiO_{0.5} was primary particles.

SEM images of spherical SiO_{0.5} prepared in this example is shown in FIG. 3. It can be seen from FIG. 3 that the spherical SiO particle produced by this Example had a smooth and round surface, and a better sphericity.

Further, (4) SiO_{0.5} is placed in a CVD rotary furnace in which methane was fed as a carbon source, and nitrogen was fed as a protective gas, it was deposited at 600°C for 120 min, and cooled to obtain a negative electrode material in which SiO_{0.5} was coated with a carbon material.

Negative electrode material of this Example included the spherical SiO_{0.5} and a carbon layer coated on the surface of the spherical SiO_{0.5}, the spherical SiO_{0.5} is primary particles. The carbon layer had a maximum thickness of 90 nm and a minimum thickness of 70 nm, and the negative electrode material has an average particle size D50 of 15 µm.

### Example 3

A method for preparing a negative electrode material of the present embodiment included following steps.
(1) The plasma generator was controlled to adopt a DC power of 200 kW, a radiofrequency power of 5000 kW, argon being the plasma-generating gas, a DC argon flow rate of 2 m³/h, a pressure of 8000 Torr, a plasma-generating gas at a radial rate of 50 m³/h and a tangential rate of 10 m³/h, and a high temperature gas stream limited within an axial range.
(2) By using argon as a carrier gas, SiO and SiO₂ raw materials with D50 of 5 µm after mechanical ball milling, air jet pulverization and grading were fed into a plasma stream to react; a mass ratio of SiO to SiO₂ is 1:1, the carrier gas had a flow rate of 1 m³/h and a feeding rate of 40 g/min.
(3) The product obtained from the reaction of step (2) was cooled in a water-cooling device at the tail of the plasma stream, and the cured spherical SiO_{1.5} product after cooling was attached to a wall of the water-cooling device, and collected to obtain a silicon oxygen material.

The silicon oxygen material of this Example is spherical SiO_{1.5}, the spherical SiO_{1.5} is primary particles.

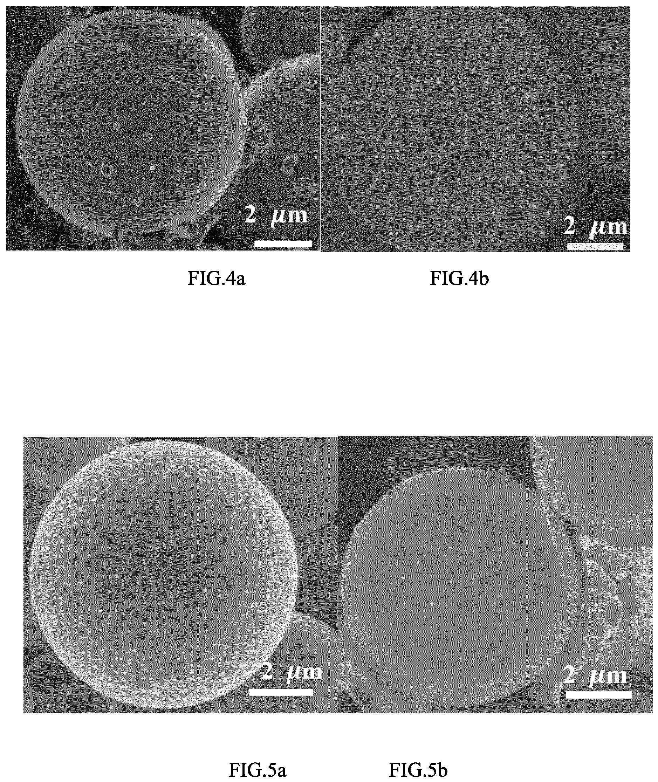

SEM images of spherical SiO_{1.5} prepared in this example are shown in FIGS. 4a and 4b. It can be seen from FIGS. 4a and 4b that the spherical SiO_{1.5} particle produced by this Example was not much smoother than the spheres of Example 1 and Example 2, and had a better sphericity. The cross-section view shows a uniform structure inside of the sphere, where the rough material of the surface is confirmed by EDS as a structure of uniform dispersion of Si and O.

Further, (4) the SiO_{1.5} was placed in a CVD rotary furnace in which acetylene was fed as a carbon source, and nitrogen was fed as a protective gas, it was deposited at 1000°C for 30 min, and cooled to obtain a negative electrode material in which SiO_{1.5} was coated with a carbon material.

Negative electrode material of this Example included the spherical SiO_{1.5} and a carbon layer coated on the surface of the spherical SiO_{1.5}, the spherical SiO_{1.5} was primary particles. The carbon layer had a maximum thickness of 100 nm and a minimum thickness of 75 nm, and the negative electrode material has an average particle size D50 of 12 µm.

### Example 4

A method for preparing a negative electrode material of the present embodiment included following steps.
(1) The plasma generator was controlled to adopt a DC power of 1000 kW, a radiofrequency power of 20000 kW, argon being the plasma-generating gas, a DC argon flow rate of 1 m³/h, a pressure of 4000 Torr, a plasma-generating gas at a radial rate of 25 m³/h and a tangential rate of 8 m³/h, and a high temperature gas stream limited within an axial range; a reducing atmosphere CH₄ was fed with a radial rate of 2 m³/h.
(2) By using argon as a carrier gas, Si and SiO₂ raw materials with D50 of 5 µm after mechanical ball milling, air jet pulverization and grading were fed into a plasma stream to react; a mass ratio of Si to SiO₂ is 1:1, the carrier gas had a flow rate of 0.5 m³/h and a feeding rate of 20 g/min.
(3) The product obtained from the reaction of step (2) was cooled in a water-cooling device at the tail of the plasma stream, and the cured spherical SiO product after cooling was attached to a wall of the water-cooling device, and collected to obtain a silicon oxygen material.

The silicon oxygen material of this Example is spherical SiO, the spherical SiO is primary particles.

SEM images of spherical SiO prepared in this example are shown in FIGS. 5a and 5b. It can be seen from FIGS. 5a and 5b that the spherical silicon oxide particle produced by this Example has a better sphericity, but its surface has a net structure since its surface topography is affected by the heat release of the process involved in the chemical reaction. After confirmed by EDS, the sphere surface remained a uniform distribution of Si and O, whose net topography did not affect the elemental distribution of the material.

Further, (4) the SiO was placed in a CVD rotary furnace in which ethane was fed as a carbon source, and nitrogen was fed as a protective gas, it is deposited at 1000°C for 90 min, and cooled to obtain a SiO-coating carbon material.

Negative electrode material of this Example included the spherical SiO and a carbon layer coated on the surface of the spherical SiO, the spherical SiO is primary particles. The carbon layer had a maximum thickness of 80 nm and a minimum thickness of 50 nm, and the negative electrode material has an average particle size D50 of 15 µm.

### Example 5

A method for preparing a negative electrode material of the present embodiment included following steps.
(1) The plasma generator was controlled to adopt a DC power of 2000 kW, a radiofrequency power of 50000 kW, nitrogen being the plasma-generating gas, a DC nitrogen flow rate of 0.5 m³/h, a pressure of 2000 Torr, a radial rate of 80 m³/h and a tangential rate of 15 m³/h, and a high temperature gas stream limited within an axial range.
(2) By using argon as a carrier gas, SiH₄ and O₂ as raw materials are fed into a plasma with D50 of 5 µm after mechanical ball milling, air jet pulverization and grading were fed into a plasma jet, a mass ratio of SiH4 to O₂ is 2:3, the SiH4 had a flow rate of 2.5 m³/h, and the O₂ has a feeding rate of 4 m³/h.
(3) The product obtained from the reaction of step (2) was cooled in a water-cooling device at the tail of the plasma stream, and the cured spherical SiO product after cooling was attached to a wall of the water-cooling device, and collected to obtain a silicon oxygen material.

The silicon oxygen material of this Example is spherical SiO, the spherical SiO is primary particles.

Further, (4) the SiO was placed in a CVD rotary furnace in which propane was fed as a carbon source, and nitrogen was fed as a protective gas, it was deposited at 900°C for 300 min, and cooled to obtain a SiO-coating carbon material.

Negative electrode material of this Example included the spherical SiO and a carbon layer coated on the surface of the spherical SiO, the spherical SiO is primary particles. The carbon layer had a maximum thickness of 150 nm and a minimum thickness of 120 nm, and the negative electrode material had an average particle size D50 of 8 µm.

### Example 6

A method for preparing a negative electrode material of the present embodiment included following steps.
(1) 1 kg of SiO was placed in a smelting crucible, heated to 1750°C and heat preserved until it became a melt.
(2) The melt was directed to an atomizing nozzle in an atomizing device, and was blown into small droplets by using 2 MPa of N₂. Meanwhile, liquid nitrogen was fed into the atomizing device, and the temperature of the melt was dropped to 50°C at a rate of 5°C/s to discharge.
(3) A silicon oxygen material was collected. The silicon oxygen material was spherical SiO, and the spherical SiO was primary particles.
(4) The spherical powder was placed in a rotary furnace to coat under 1000°C while feeding ethane gas, obtaining a negative electrode material.

The negative electrode material included the spherical SiO and a carbon layer coated on the surface of the spherical SiO, the spherical SiO is primary particles. The oxygen element in the negative electrode material had a mass content of 36.5%, the carbon element in the negative electrode material had a mass content of 5.1%; the carbon layer had a thickness of 100 nm; and the D₅₀ of the negative electrode material was 5 µm.

### Example 7

A method for preparing a negative electrode material of the present embodiment included following steps.
(1) 1 kg of SiO was placed in a smelting crucible, heated to 1750°C and heat preserved until it became a melt.
(2) The melt was directed to an atomizing nozzle in an atomizing device, and was blown into small droplets by using 40 MPa of N₂. Meanwhile, liquid nitrogen was fed into the atomizing device, and the temperature of the melt was dropped to 50°C at a rate of 100°C/s to discharge.
(3) A silicon oxygen material was collected. The silicon oxygen material was spherical SiO, and the spherical SiO was primary particles.
(4) The silicon oxygen material was placed in a rotary furnace to preheat to 1000°C, and performed a vapor phase carbon coating treatment under 1000°C while feeding ethane gas, and the carbon-coating treatment had a reaction gas pressure of 5 atm.

The negative electrode material of this Example included the spherical SiO and a carbon layer coated on the surface of the spherical SiO, the spherical SiO is primary particles. The oxygen element in the negative electrode material had a mass content of 36.3%, the carbon element in the negative electrode material had a mass content of 4.7%.

### Example 8

A method for preparing a negative electrode material of the present embodiment included following steps.
(1) 800 g of Si and 200 g of SiO were placed in a smelting crucible, heated to 1600°C and heat preserved until it became a melt.
(2) The melt was directed to an atomizing nozzle in an atomizing device, and was blown into small droplets by using 2 MPa of N₂. Meanwhile, liquid nitrogen was fed into the atomizing device, and the temperature of the melt was dropped to 50°C at a rate of 20°C/s to discharge.
(3) A silicon oxygen material was collected. The silicon oxygen material was spherical SiO_{0.137}, and the spherical SiO_{0.137} was primary particles.
(4) The silicon oxygen material was placed in a rotary furnace and performed a vapor phase carbon coating treatment under 1000°C while feeding ethane gas, and the carbon-coating treatment had a reaction gas pressure of 8 atm.

The negative electrode material of this Example included the spherical SiO_{0.137} and a carbon layer coated on the surface of the spherical SiO_{0.137}, the spherical SiO_{0.137} was primary particles. The oxygen element in the negative electrode material had a mass content of 7.3%, the carbon element in the negative electrode material had a mass content of 4.8%, and the negative electrode material had a specific surface area of 5 m²/g.

### Example 9

A method for preparing a negative electrode material of the present embodiment included following steps.
(1) 800 g of SiO and 200 g of SiO₂ were placed in a smelting crucible, heated to 1750°C and heat preserved until it became a melt.
(2) The melt was directed to an atomizing nozzle in an atomizing device, and was blown into small droplets by using 2 MPa of N₂. Meanwhile, liquid nitrogen was fed into the atomizing device, and the temperature of the melt was dropped to 50°C at a rate of 50°C/s to discharge.
(3) A silicon oxygen material was collected. The silicon oxygen material was spherical SiO_{1.155}, and the spherical SiO_{1.155} was primary particles.
(4) The spherical powder was placed in a rotary furnace to coat under 1000°C while feeding ethane gas.

The negative electrode material of this Example included the spherical SiO_{1.155} and a carbon layer coated on the surface of the spherical SiO_{1.155}, the spherical SiO_{1.155} was primary particles. The oxygen element in the negative electrode material had a mass content of 39.9%, the carbon element in the negative electrode material had a mass content of 4.8%, and the negative electrode material had a specific surface area of 6.7 m²/g.

### Example 10

A method for preparing a negative electrode material of the present embodiment included following steps.
(1) 1 kg of SiO_{0.5} and 670g of citric acid were heat treated in argon under 200°C, so that citric acid was melted.
(2) SiO_{0.5} and molten citric acid were atomized into droplets using nitrogen gas with pressure of 2 Mpa;
(3) The droplets were allowed to cool down to 50°C at a rate of 2°C/s under liquid nitrogen conditions and discharged to obtain a spherical intermediate.
(4) The spherical intermediate was carbonized with a carbonization temperature of 900°C, a time of 12 hours, and a gas N₂ of carbonized atmosphere, to obtain a spherical negative electrode material.

The negative electrode material of this Example included the SiO_{0.5} and amorphous carbon, and had a Wadell sphericity of 0.91. SiO_{0.5} is uniformly dispersed in amorphous carbon, SiO_{0.5} accounts for 60% of the negative electrode material, and the porosity of the negative electrode material is 55.3%.

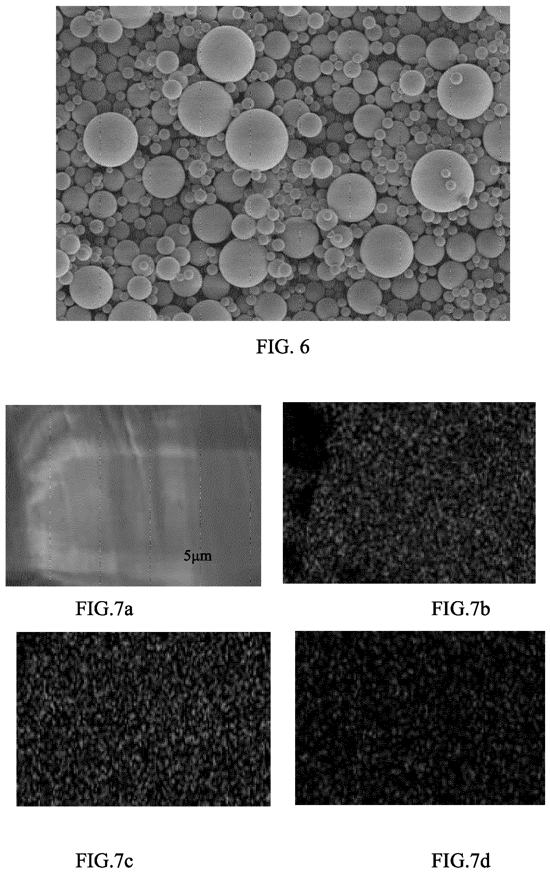

SEM images of the negative electrode material prepared in this example are shown in FIG. 6. It can be seen from FIG. 6 that the spherical SiO negative electrode material produced by this Example has a smooth and round surface, and a better sphericity. The cross-section view shows a uniform structure inside of the sphere.

### Example 11

A method for preparing a negative electrode material of the present embodiment included following steps.
(1) 1kg of SiO_{1.5}, 166g of artificial graphite and 1.25 kg of glucose were heat treated in nitrogen at 250°C, so that the glucose was melted.
(2) SiO_{1.5}, artificial graphite and molten glucose are dispersed into droplets using nitrogen with gas pressure of 40 Mpa.
(3) The droplets were allowed to cool down to 50°C at a rate of 5°C/s under liquid argon conditions and discharged to obtain a spherical intermediate.
(4) The spherical intermediate was carbonized with a carbonization temperature of 900°C, a time of 6 hours, and a gas N₂ of carbonized atmosphere, to obtain a spherical negative electrode material.

The negative electrode material prepared in this example included SiO_{1.5}, artificial graphite, and amorphous carbon. The negative electrode material had a Wadell sphericity of 0.93. SiO_{1.5} is uniformly dispersed in amorphous carbon. The negative electrode material had porosity of 50.5%, the artificial graphite accounts for 10% by mass of the negative electrode material, and SiO_{1.5} accounts for 50% by mass of the negative electrode material.

### Comparative Example 1

SiO was placed in a CVD rotary furnace in which the acetylene was fed as a carbon source and nitrogen was fed as a protective gas, and was deposited under 800°C for 60 min, and is cooled to discharge, obtaining a negative electrode material of carbon material -coating SiO.

Negative electrode material of this Example included spherical SiO and a carbon layer coated on the spherical SiO surface, the spherical SiO was primary particles, the SiO powder material had a Wadell sphericity of 0.87. The maximum thickness of the carbon layer is 100 nm, the minimum thickness of the carbon layer is 80 nm, and the average particle size D50 of the negative electrode material is 20 µm.

### Testing of Performance Parameters

Particle size is measured by using a Mastersizer 3000 laser diffraction technique. Measurement of particle size is done by measuring the intensity of the scattered light when the laser beam passes through the dispersed particle sample. The data is then used for analysis and calculate the particle size distribution for forming the scatter spectrum map. D50 means that a corresponding particle size when a percentage of cumulative particle size distribution of one sample reaches 50%. The physical meaning of D50 is that particles having a particle size greater than D50 accounts for 50%, and particles having a particle size smaller than D50 accounts for 50%, D50 is also known as a median diameter or median particle size. The D90 particle size, D50 particle size, D10 particle size are the equivalent diameters (average particle size) of the largest particles when the cumulative distribution in the distribution curve is 90%, 50%, 10%, respectively.

A specific surface area of powder sample is tested by gas adsorption process at low temperature controlled by liquid nitrogen cooling, using a McTristar 3000&3020 specific surface area and aperture analyzer. The gas adsorption method (BET method) is based on a single molecular layer adsorption theory of Langnuir, promoted by Brunauer, Emmett, and Teller, resulting in a multimolecular layer adsorption theory (BET theory) method, hence also referred to as BET method.

XRD is measured in a scanning range of 9.749° to 41.157° using the X'pert PRO X-ray diffractometer of Paris. Scan step: 0.013°, scan rate: 6.60 °/min, voltage: 40 kV, current: 40 mA. Open a file with Jade 6, remove the background & smooth, and fit the Si peak in a range of 26° to 30°. Using the Scherrer equation, D = kλ/βcosθ, where D is average particle size of crystal grains perpendicular to a Si reflection plane, β (radians) is the broadening degree of the half-height width of the diffraction peak of the crystal plane = FWHM ^{∗} π/180. K is a Scherrer constant, taking 0.89; θ is a diffraction angle; λ is wavelength of incident X-ray, which is 0.15406 nm. Full Width at Half Maximum is FWHM for short. The full width at half maximum is also referred to as the half width, half peak width, region width, region half width, which is a term for chromatographic analysis, referring to the peak width at one half peak height of the chromatogram, that is, making a straight line parallel to the peak bottom through the midpoint of the peak height, and obtaining a distance between two points on both sides of the peak that intersect with the straight line. Here, both FHWM and θ can be obtained by XRD.
1. Particle size distribution: D50, D90, and D10 are measured using a laser particle size analyzer, and calculated to obtain a value of (D90-D10)/D50.
2. Specific surface area: specific surface area is measured with a specific surface area and aperture analyzer by using the Mike TriStar 3000 from America.
3. Wadell Sphericity test: particle size distribution is measured using a laser particle size analyzer, resulting in an equivalent volume diameter within each particle size range. The equivalent volume diameter is used as particle size of all spheres within the very small particle size distribution range, and all particles within the range are equivalent to ideal spheres, the specific surface area is calculated for each particle size distribution range, then the specific surface area of the sphere with the same volume of all the particles is obtained using volume ratio% weighting, so as to obtain the sphericity of the plasma prepared spherical particle = the calculated surface area of the sphere equal in volume to the particles/specific surface area of the particle tested by specific surface area tester.
4. Si microcrystalline size: XRD peaks are measured using a PANalytical X'pert Pro X-Ray diffractometer, then the Si peak in XRD is fitted using Jade 6.5 software, resulting in a Si microcrystalline size.
5. Electrical performance test:

An anode slurry was modulated by composite materials (the materials of Examples 1 to 11), conductive carbon black, a PAA glue in a mass ratio of 75:15:10, and then was coated on a copper foil, and then dried to prepare a negative electrode plate. Metallic lithium sheet was used as a counter electrode to assemble a coin battery in a glove box filled with argon. Charge and discharge tests were performed at a current density of 0.1C and with a charge and discharge interval of 0.01-1.5V. A first reversible specific capacity and first efficiency of the battery were obtained after the test.

An anode slurry was modulated by composite materials (the materials of Examples 1 to 11):Super-P:KS-6:CMC:SBR = 92:2:2:2:2, and then was coated on a copper foil, and then dried to prepare a negative electrode plate. Metallic lithium sheet was used as a counter electrode to assemble a coin battery in a glove box filled with argon. Charge and discharge tests were performed at a current density of 0.1C and with a charge and discharge interval of 0.01-1.5V. A volume expansion rate and a capacity retention rate after 50 cycles of the battery were obtained after the test.

The test results of Examples 1-19 were shown in Table 1.

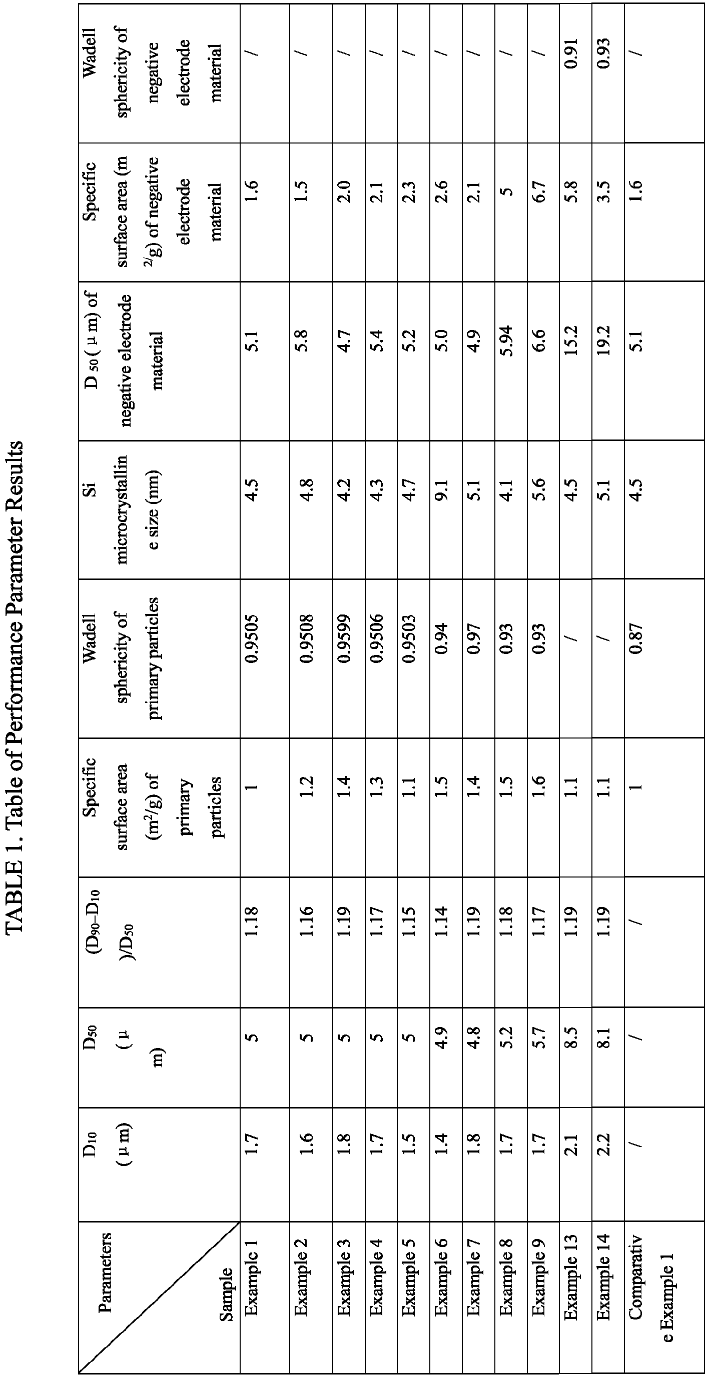

**TABLE 2. Table of Performance Comparison Results of Lithium Ion Battery**

| Sample | First Reversible Capacity (mAh/g) | Initial Coulombic efficiency (%) | Capacity retention rate (%) after 50 cycles | Volume expansion rate (%) after 50 cycles |
|---|---|---|---|---|
| Example 1 | 1584.7 | 77.43 | 92.9 | 31.5 |
| Example 2 | 1567.3 | 76.96 | 8 | 32.2 |
| Example 3 | 1547.6 | 74.34 | 86.9 | 33.5 |
| Example 4 | 1552.4 | 75.12 | 82.7 | 35.3 |
| Example 5 | 1563 | 75.96 | 87.6 | 33.1 |
| Example 6 | 1645 | 77.2 | 90.1 | 32 |
| Example 7 | 1615 | 77 | 92.3 | 30.2 |
| Example 8 | 2138 | 83.2 | 93.3 | 37.7 |
| Example 9 | 1122 | 70.2 | 87.2 | 28.3 |
| Example 13 | 1451.6 | 85.6 | 90.3 | 35.2 |
| Example 14 | 839.7 | 74.1 | 94.4 | 28.5 |
| Comparative Example 1 | 1580.9 | 77.41 | 89.7 | 35.4 |

As can be seen from the test data of Examples 1-11, the silicon oxide was spherical silicon oxide primary particles having a Wadell sphericity greater than 0.92, the spherical particles had isotropic characteristics so that they are uniformly contracted to expand radially outward during the cycling process. They were able to maintain stability of the structure due to isotropic stresses, and did not suffer from "weak spots" of stress due to non-uniform shape, thereby greatly reducing the possibility of electrolyte permeating into the interior of the material due to collapse of particle structure and cracking of SEI film, effectively avoiding infiltration of electrolyte into the interior of the material to generate new SEI films continuously, avoiding repeated crushing and generation of SEI films, reducing the volume expansion of the materials, and improving cycling performance of the materials.

The Wadell sphericity of SiO employed in Comparative Example 1 is only 0.87, at this time, the material had a poor sphericity, there is still corners resulting in weak points of stress, at this time, there is an increasing possibility of electrolyte permeating into the interior of the material due to the collapse of the particle structure and cracking the SEI film, and partial permeation of electrolyte can occur, resulting in the thickening degree of SEI film higher than the sample having a Wadell sphericity greater than 0.92, and the capacity retention rate and expansion rate of the material have a certain degree of deterioration.

### Example 12

A method for preparing a negative electrode material of the present embodiment included following steps.
(1) The plasma generator was controlled to adopt a DC power of 8.5 kW, a radiofrequency power of 95 kW, argon being the plasma-generating gas, a DC argon flow rate of 0.6 m³/h, a pressure of 450 Torr, a plasma-generating gas at a radial rate of 8.4 m³/h and a tangential rate of 1.8 m³/h, and a high temperature gas stream limited within an axial range.
(2) By using argon as a carrier gas, SiO raw materials with D50 of 5 µm after mechanical ball milling, air jet pulverization and grading and metal Mg were fed into a plasma stream to react, in which a molar ratio of Si to Mg is 20:1; the carrier gas had a flow rate of 0.5 m³/h and a feeding rate of 5 g/min.
(3) The product obtained from the reaction of step (2) was cooled in a water-cooling device at the tail of the plasma stream, and the cured spherical SiO product containing MgSiO₃ silicate after cooling was attached to a wall of the water-cooling device, and collected to obtain a silicon oxygen material.

The silicon oxygen material produced in this example was spherical primary particles, the silicon oxygen material included silicon oxide SiO and magnesium silicate, the oxygen element in the silicon oxygen material has a mass content of 30%, the Mg element in the silicon oxygen material has a mass content of 15%; and the silicate in the silicon oxygen material has a mass content of 20%. FIG. 7a shows that the elemental distribution spectrum obtained with the SEM section of the primary particles of the X-ray scanning silicon oxygen material, as shown in FIG. 7b, the Si element distribution plane is a uniform dispersion state, as shown in FIG. 7c, the distributed plane of the O element is a uniform dispersion state, as shown in FIG. 7d, and the distributed plane of the Mg element is a uniform dispersion state.

Further, (4) the SiO was placed in a CVD rotary furnace in which acetylene was fed as a carbon source, and nitrogen was fed as a protective gas, it was deposited at 800°C for 60 min, and cooled to obtain a negative electrode material.

The negative electrode material produced by this Example of the present disclosure included a silicon oxygen material and a carbon layer coated on the surface of the silicon oxygen material, the carbon layer had a thickness of 50 nm.

### Example 13

A method for preparing a negative electrode material of the present embodiment included following steps.
(1) SiO raw material was placed into one end of a vacuum furnace close to the tail of the furnace;
(2) 1 kg of dolomite and 500g of silicon iron powder were placed into a VC mixer to mix for 30 min, and then 1.5 kg of a mixture of dolomite and silicon iron powder was obtained. The mixture was used as a raw material to produce Mg to put it near one end of the furnace.
(3) A collector was placed into a collection chamber, heated to 1350°C under a negative pressure having a vacuum level of 3 Pa and heat preserved for 24 hours, to produce SiO₂ steam and Mg steam in the furnace, a molar ratio of Si to Mg was 20:1, the mixed homogeneous gaseous mixture was rapidly coagulated (at a coagulating temperature of 900°C) to generate a SiO-Mg material, after the reaction, the apparatus was cooled and the product was collected.
(4) The collected product was acid-washed with nitric acid and hydrofluoric acid at a mass ratio of 1:1 for 1 hour, and the washed product was washed with deionized water to neutral, filtered and dried at 100°C to obtain a silicon oxygen material.

The silicon oxygen material produced in this example was spherical primary particles, the silicon oxygen material included silicon oxide SiO and magnesium silicate, the oxygen element in the silicon oxygen material has a mass content of 30%, the Mg element in the silicon oxygen material has a mass content of 15%; and the silicate in the silicon oxygen material has a mass content of 20%.

Further, (5) the silicon oxygen material was placed into a CVD rotary furnace in which acetylene is fed as a carbon source, nitrogen is fed as a protective gas. The silicon oxygen material was deposited under 800°C for 60 min, and was cooled to discharge, obtaining a negative electrode material.

The negative electrode material produced by this Example of the present disclosure included a silicon oxygen material and a carbon layer coated on the surface of the silicon oxygen material, the carbon layer had a thickness of 50 nm.

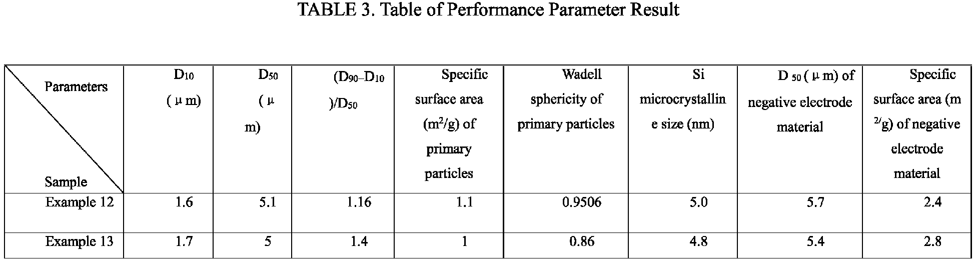

**TABLE 4. Table of Performance Comparison Result of Lithium Ion Battery**

| Sample | First Reversible Capacity (mAh/g) | Initial Coulombic efficiency (% ) | Capacity retention rate (%) after 50 cycles | Volume expansion rate (%) after 50 cycles |
|---|---|---|---|---|
| Example 12 | 1456.8 | 83.29 | 89.7 | 34.0 |
| Example 13 | 1446.2 | 82.86 | 86.6 | 35.9 |

By comparing Examples 12 and 13, the negative electrode material included a silicon oxygen material and a carbon layer formed on the surface of the silicon oxygen material, the silicon oxygen material had an increased sphericity, the spherical particles had isotropic characteristics so that they are uniformly contracted to expand radially outward during the cycling process. They were able to maintain stability of the structure due to isotropic stresses. The silicon oxygen material having a high sphericity and the carbon layer on the top layer act synergistically, capable of inhibiting side reactions between negative electrode material and the electrolyte, capable of increasing the electrical conductivity and cycling stability of the negative electrode material while further mitigating the volume expansion of the negative electrode material, and having a significant improvement in cycling performance.

### Example 14

A method for preparing a negative electrode material of the present embodiment included following steps.
(1) The plasma generator was controlled to adopt a DC power of 10 kW, a radiofrequency power of 200 kW, argon being the plasma-generating gas, a DC argon flow rate of 0.6 m³/h, a pressure of 450 Torr, a plasma-generating gas at a radial rate of 8.4 m³/h and a tangential rate of 1.8 m³/h, and a high temperature gas stream limited within an axial range.
(2) By using argon as a carrier gas, SiO raw materials with D50 of 5 µm after mechanical ball milling, air jet pulverization and grading and metal Mg were fed into a plasma stream to react, in which a molar ratio of Si to Mg is 20:1; the carrier gas had a flow rate of 0.5 m³/h and a feeding rate of 5 g/min.
(3) The product obtained from the reaction of step (2) was cooled in a water-cooling device at the tail of the plasma stream, and the cured spherical SiO product containing MgSiO₃ silicate after cooling was attached to a wall of the water-cooling device, and collected to obtain a silicon oxygen material.

The silicon oxygen material produced in this example was spherical primary particles, the silicon oxygen material included silicon oxide SiO and magnesium silicate, the oxygen element in the silicon oxygen material has a mass content of 30%, the Mg element in the silicon oxygen material has a mass content of 15%; and the silicate in the silicon oxygen material has a mass content of 20%.

Further, (4) the SiO was placed in a CVD rotary furnace in which acetylene was fed as a carbon source, and nitrogen was fed as a protective gas, it was deposited at 800°C for 60 min, and cooled to obtain a negative electrode material.

The negative electrode material produced by this Example of the present disclosure included a silicon oxygen material and a carbon layer coated on the surface of the silicon oxygen material, the carbon layer had a thickness of 50 nm.

### Example 15

A method for preparing a negative electrode material of the present embodiment included following steps.
(1) The plasma generator was controlled to adopt a DC power of 20 kW, a radiofrequency power of 500 kW, argon being the plasma-generating gas, a DC argon flow rate of 0.6 m³/h, a pressure of 450 Torr, a plasma-generating gas at a radial rate of 8.4 m³/h and a tangential rate of 1.8 m³/h, and a high temperature gas stream limited within an axial range.
(2) By using argon as a carrier gas, SiO raw materials with D50 of 5 µm after mechanical ball milling, air jet pulverization and grading and metal Mg were fed into a plasma stream to react, in which a molar ratio of Si to Mg is 20:1; the carrier gas had a flow rate of 0.5 m³/h and a feeding rate of 5 g/min.
(3) The product obtained from the reaction of step (2) was cooled in a water-cooling device at the tail of the plasma stream, and the cured spherical SiO product containing MgSiO₃ silicate after cooling was attached to a wall of the water-cooling device, and collected to obtain a silicon oxygen material.

The silicon oxygen material produced in this example was spherical primary particles, the silicon oxygen material included silicon oxide SiO and magnesium silicate, the oxygen element in the silicon oxygen material has a mass content of 30%, the Mg element in the silicon oxygen material has a mass content of 15%; and the silicate in the silicon oxygen material has a mass content of 20%.

Further, (4) the SiO was placed in a CVD rotary furnace in which acetylene was fed as a carbon source, and nitrogen was fed as a protective gas, it was deposited at 800°C for 60 min, and cooled to obtain a negative electrode material.

The negative electrode material produced by this Example of the present disclosure included a silicon oxygen material and a carbon layer coated on the surface of the silicon oxygen material, the carbon layer had a thickness of 50 nm.

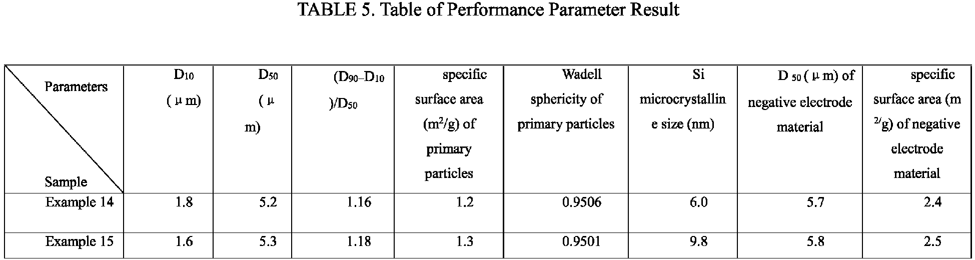

**TABLE 6. Table of Performance Comparison Result of Lithium Ion Battery**

| Sample | First Reversible Capacity (mAh/g) | Initial Coulombic efficiency (% ) | capacity retention rate (%) after 50 cycles | volume expansion rate (%) after 50 cycles |
|---|---|---|---|---|
| Example 14 | 1459.6 | 83.38 | 90.1 | 31.9 |
| Example 15 | 1456.9 | 83.86 | 85.9 | 33.6 |

By comparing Examples 14 and 15, it has been found that the DC power and RF power of the plasma were adjusted so that the sizes of Si crystal grains in the resulting silicon oxygen material were different, the materials with oversized Si grain size were crystallized significantly, exhibiting a greater expansion rate during cycling, thereby, the particles are easy to be broken and the cycling performance decreases.

### Example 16

A method for preparing a negative electrode material of the present embodiment included following steps.
(1) The plasma generator was controlled to adopt a DC power of 8.5 kW, a radiofrequency power of 95 kW, argon being the plasma-generating gas, a DC argon flow rate of 0.6 m³/h, a pressure of 450 Torr, a plasma-generating gas at a radial rate of 8.4 m³/h and a tangential rate of 1.8 m³/h, and a high temperature gas stream limited within an axial range.
(2) By using argon as a carrier gas, SiO raw materials with D50 of 5 µm after mechanical ball milling, air jet pulverization and grading and metal Li were fed into a plasma stream to react, the carrier gas had a flow rate of 0.5 m³/h and a feeding rate of 5 g/min, a molar ratio of Si to Li in the raw materials for preparing the silicon oxygen material is 20:1.
(3) The product obtained from the reaction of step (2) was cooled in a water-cooling device at the tail of the plasma stream, and the cured spherical SiO product containing LiSiOs and LiSiOs silicate after cooling was attached to a wall of the water-cooling device, and collected to obtain a silicon oxygen material. The silicon oxygen material was spherical primary particles, the silicon oxygen material included silicon oxide SiO and lithium silicate, the lithium silicate included LiSiOs and LiSiOs, and the lithium silicate was uniformly dispersed in the SiO.
(4) The product after reaction was water-washed and acid-washed. Acid washing adopts a mixture liquid nitric acid and hydrofluoric acid at a mass ratio of 1:1 for 1000 minutes, and the washed product was washed to neutral, centrifuged and dried at high temperature.
(5) The silicon oxygen material was placed in a CVD rotary furnace in which acetylene was fed as a carbon source, and nitrogen was fed as a protective gas, it was deposited at 800°C for 60 min, and cooled to obtain a negative electrode material.

The negative electrode material produced by this Example of the present disclosure included a silicon oxygen material and a carbon layer coated on the surface of the silicon oxygen material, the carbon element in negative electrode material had a mass content of 10%, and the carbon layer had a thickness of 200 nm.

### Example 17

A method for preparing a negative electrode material of the present embodiment included following steps.
(1) The plasma generator was controlled to adopt a DC power of 8.5 kW, a radiofrequency power of 95 kW, argon being the plasma-generating gas, a DC argon flow rate of 0.6 m³/h, a pressure of 450 Torr, a plasma-generating gas at a radial rate of 8.4 m³/h and a tangential rate of 1.8 m³/h, and a high temperature gas stream limited within an axial range.
(2) By using argon as a carrier gas, SiO raw materials with D50 of 5 µm after mechanical ball milling, air jet pulverization and grading and metal Li were fed into a plasma stream to react, the carrier gas had a flow rate of 0.5 m³/h and a feeding rate of 10 g/min, a molar ratio of Si to Li in the raw materials for preparing the silicon oxygen material is 1:2.
(3) The product obtained from the reaction of step (2) was cooled in a water-cooling device at the tail of the plasma stream, and the cured spherical SiO product containing LiSiOs and LiSiOs silicate after cooling was attached to a wall of the water-cooling device, and collected to obtain a silicon oxygen material. The silicon oxygen material was spherical primary particles, the silicon oxygen material included silicon oxide SiO and lithium silicate, the lithium silicate included LiSiOs and LiSiOs, and the lithium silicate was uniformly dispersed in the SiO.
(4) The product after reaction was water-washed and acid-washed. Acid washing adopts a mixture liquid nitric acid and hydrofluoric acid at a mass ratio of 1:2 for 1000 minutes, and the washed product was washed to neutral, centrifuged and dried at high temperature.
(5) The silicon oxygen material was placed in a CVD rotary furnace in which acetylene was fed as a carbon source, and nitrogen was fed as a protective gas, it was deposited at 800°C for 60 min, and cooled to obtain a negative electrode material.

The negative electrode material produced by this Example of the present disclosure included a silicon oxygen material and a carbon layer coated on the surface of the silicon oxygen material, the carbon element in negative electrode material had a mass content of 10%, and the carbon layer had a thickness of 200 nm.

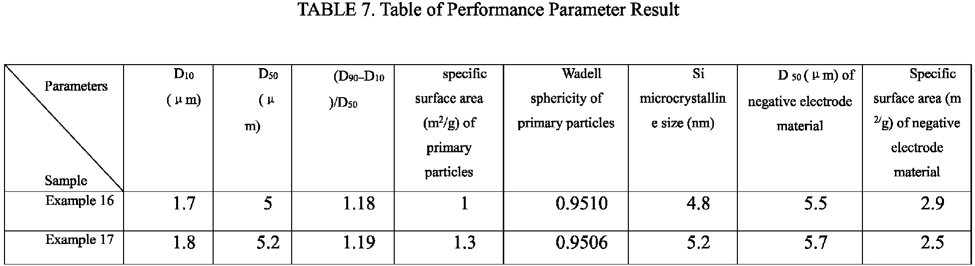

**TABLE 8. Table of Performance Comparison Result of Lithium Ion Battery**

| Sample | First Reversible Capacity (mAh/g) | Initial Coulombic efficiency (% ) | Capacity retention rate (%) after 50 cycles | Volume expansion rate (%) after 50 cycles |
|---|---|---|---|---|
| Example 16 | 1407.6 | 90.34 | 90.9 | 34.8 |
| Example 17 | 1356.9 | 91.87 | 86.2 | 35.8 |

By comparing Examples 16 and 17, the content of silicate in the silicon oxygen material increases, so that the reversible specific capacity of the negative electrode material decreases, the first effect increases, the increase of content of silicate generally results in an increase of size of Si crystal grain in the silicon oxygen material, while the volume expansion effect of the increased silicon crystal grain is more significant during the cycling process, and thus cycling performance of the negative electrode material may also degrade to some degree.

### Example 18

A method for preparing a negative electrode material of the present embodiment included following steps.
(1) The plasma generator was controlled to adopt a DC power of 10 kW, a radiofrequency power of 100 kW, argon being the plasma-generating gas, a DC argon flow rate of 0.6 m³/h, a pressure of 450 Torr, a plasma-generating gas at a radial rate of 8.4 m³/h and a tangential rate of 1.8 m³/h, and a high temperature gas stream limited within an axial range.
(2) By using argon as a carrier gas, SiO raw materials with D50 of 5 µm after mechanical ball milling, air jet pulverization and grading and metal Li were fed into a plasma stream to react, the carrier gas had a flow rate of 0.5 m³/h and a feeding rate of 5 g/min, a molar ratio of Si to Li in the raw materials for preparing the silicon oxygen material is 20:1.
(3) The product obtained from the reaction of step (2) was cooled in a water-cooling device at the tail of the plasma stream, and the cured spherical SiO product containing LiSiOs and LiSiOs silicate after cooling was attached to a wall of the water-cooling device, and collected to obtain a silicon oxygen material. The silicon oxygen material was spherical primary particles, the silicon oxygen material included silicon oxide SiO and lithium silicate, the lithium silicate included LiSiOs and LiSiOs, and the lithium silicate was uniformly dispersed in the SiO.
(4) The product after reaction was water-washed and acid-washed. Acid washing adopts a mixture liquid nitric acid and hydrofluoric acid at a mass ratio of 1:2 for 1000 minutes, and the washed product was washed to neutral, centrifuged and dried at high temperature.
(5) The silicon oxygen material was placed in a CVD rotary furnace in which acetylene was fed as a carbon source, and nitrogen was fed as a protective gas, it was deposited at 800°C for 60 min, and cooled to obtain a negative electrode material.

The negative electrode material produced by this Example of the present disclosure included a silicon oxygen material and a carbon layer coated on the surface of the silicon oxygen material, the carbon element in negative electrode material had a mass content of 10%, and the carbon layer had a thickness of 200 nm.

### Example 19

A method for preparing a negative electrode material of the present embodiment included following steps.
(1) The plasma generator was controlled to adopt a DC power of 10 kW, a radiofrequency power of 100 kW, argon being the plasma-generating gas, a DC argon flow rate of 5 m³/h, a pressure of 20000 Torr, a plasma-generating gas at a radial rate of 8.4 m³/h and a tangential rate of 1.8 m³/h, and a high temperature gas stream limited within an axial range.
(2) By using argon as a carrier gas, SiO raw materials with D50 of 5 µm after mechanical ball milling, air jet pulverization and grading and metal Li were fed into a plasma stream to react, the carrier gas had a flow rate of 5 m³/h and a feeding rate of 5 g/min, a molar ratio of Si to Li in the raw materials for preparing the silicon oxygen material is 20:1.
(3) The product obtained from the reaction of step (2) was cooled in a water-cooling device at the tail of the plasma stream, and the cured spherical SiO product containing LiSiO₃ and LiSiOs silicate after cooling was attached to a wall of the water-cooling device, and collected to obtain a silicon oxygen material. The silicon oxygen material was spherical primary particles, the silicon oxygen material included silicon oxide SiO and lithium silicate, the lithium silicate included LiSiO₃ and LiSiOs, and the lithium silicate was dispersed in the SiO.
(4) The product after reaction was water-washed and acid-washed. Acid washing adopts a mixture liquid nitric acid and hydrofluoric acid at a mass ratio of 1:2 for 1000 minutes, and the washed product was washed to neutral, centrifuged and dried at high temperature.
(5) The silicon oxygen material was placed in a CVD rotary furnace in which acetylene was fed as a carbon source, and nitrogen was fed as a protective gas, it was deposited at 800°C for 60 min, and cooled to obtain a negative electrode material.

The negative electrode material produced by this Example of the present disclosure included a silicon oxygen material and a carbon layer coated on the surface of the silicon oxygen material, the carbon element in negative electrode material had a mass content of 10%, and the carbon layer had a thickness of 200 nm.

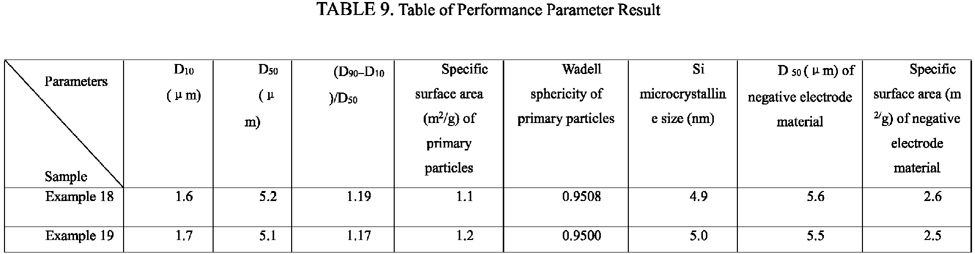

**TABLE 10. Table of Performance Comparison Result of Lithium Ion Battery**

| Sample | First Reversible Capacity (mAh/g) | Initial Coulombic efficiency (% ) | Capacity retention rate (%) after 50 cycles | Volume expansion rate (%) after 50 cycles |
|---|---|---|---|---|
| Example 18 | 1416.2 | 90.12 | 91.2 | 32.8 |
| Example 19 | 1398.7 | 88.34 | 88.9 | 33.9 |

By comparing Examples 18 and 19, it can be found that in Example 18, the lithium silicate was diffusely distributed in SiO, in Example 19, the carrier gas flow and pressure were excessively large so that the metal element cannot be uniformly doped into the silicon based material, lithium silicate cannot be uniformly distributed in SiO, therefore, there were weak points of stress when charging and discharging in the material, resulting in decreased electrochemical performance.

### Example 20

A method for preparing a negative electrode material of the present embodiment included following steps.
(1) The plasma generator was controlled to adopt a DC power of 8.5 kW, a radiofrequency power of 95 kW, argon being the plasma-generating gas, a DC argon flow rate of 0.6 m³/h, a pressure of 450 Torr, a plasma-generating gas at a radial rate of 8.4 m³/h and a tangential rate of 1.8 m³/h, and a high temperature gas stream limited within an axial range.
(2) By using argon as a carrier gas, SiO raw materials with D50 of 5 µm after mechanical ball milling, air jet pulverization and grading were fed into a plasma stream to react, the carrier gas had a flow rate of 0.5 m³/h and a feeding rate of 5 g/min.
(3) The product obtained from the reaction of step (2) was cooled in a water-cooling device at the tail of the plasma stream, and the cured spherical SiO product after cooling was attached to a wall of the water-cooling device, and collected to obtain a silicon oxygen material. The silicon oxygen material was spherical SiO, and the spherical SiO was primary particles.
(4) The resulting spherical SiO was coated, 100g of SiO powder was placed in a rotary furnace, then nitrogen was put into the furnace for atmosphere replacement, when the oxygen content in the discharged gas is smaller than 200 ppm, the temperature was raised to 600°C in 2°C/min, then an acetylene gas was fed in a flow rate of 0.2L/min, an N₂ protective atmosphere is fed into the furnace in the entire reaction process, a gas flow rate was controlled to be 0.1L/min, a reaction gas pressure was preserved to be 1 atm, and after continuous reaction for 10h, the acetylene gas was turned off, starting to naturally cool down, resulting in a composite negative electrode material.

The negative electrode material prepared in this example included a SiO core and a carbon layer coated on the SiO core, the carbon element in negative electrode material had a mass content of 2.85%. In the Raman spectrum of the negative electrode material prepared in this Example, silicon characteristic peak A is at 504 cm⁻¹, carbon characteristic peak D is at 1352 cm⁻¹, the carbon characteristic peak G is at 1601 cm⁻¹, the graphene characteristic peak B is at 2695 cm⁻¹, the peak intensity I_{A} = 90.6, I_{D} = 110, I_{G} = 106, I_{B} = 56.4, I_{A}/I_{B} is 1.61, I_{B}/I_{D} is 0.51, I_{D}/I_{G} is 1.04.

### Example 21

A method for preparing a negative electrode material of the present embodiment included following steps.
(1) The plasma generator was controlled to adopt a DC power of 8.5 kW, a radiofrequency power of 95 kW, argon being the plasma-generating gas, a DC argon flow rate of 0.6 m³/h, a pressure of 450 Torr, a plasma-generating gas at a radial rate of 8.4 m³/h and a tangential rate of 1.8 m³/h, and a high temperature gas stream limited within an axial range.
(2) By using argon as a carrier gas, SiO raw materials with D50 of 5 µm after mechanical ball milling, air jet pulverization and grading were fed into a plasma stream to react, the carrier gas had a flow rate of 0.5 m³/h and a feeding rate of 5 g/min.
(3) The product obtained from the reaction of step (2) was cooled in a water-cooling device at the tail of the plasma stream, and the cured spherical SiO product after cooling was attached to a wall of the water-cooling device, and collected to obtain a silicon oxygen material. The silicon oxygen material was spherical SiO, and the spherical SiO was primary particles.
(4) The resulting spherical SiO was coated, 100g of SiO powder was placed in a rotary furnace, then nitrogen was put into the furnace for atmosphere replacement, when the oxygen content in the discharged gas is smaller than 200 ppm, the temperature was raised to 600°C in 2°C/min, then an acetylene gas was fed in a flow rate of 0.5L/min, an N₂ protective atmosphere is fed into the furnace in the entire reaction process, a gas flow rate was controlled to be 1L/min, a reaction gas pressure was preserved to be 2 atm, and after continuous reaction for 10h, the acetylene gas was turned off, starting to naturally cool down, resulting in a composite negative electrode material.

The negative electrode material prepared in this example included a SiO core and a carbon layer coated on the SiO core, the carbon element in negative electrode material had a mass content of 3.96%. In the Raman spectrum of the negative electrode material prepared in this Example, silicon characteristic peak A is at 504 cm⁻¹, carbon characteristic peak D is at 1352 cm⁻¹, the carbon characteristic peak G is at 1601 cm⁻¹, the graphene characteristic peak B is at 2695 cm⁻¹, the peak intensity I_{A} = 90.6, I_{D} = 110, I_{G}= 106, I_{B} = 112.3, I_{A}/I_{B} is 1.61, I_{B}/I_{D} is 1.02, I_{D}/I_{G} is 1.04.

### Example 22

A method for preparing a negative electrode material of the present embodiment included following steps.
(1) The plasma generator was controlled to adopt a DC power of 8.5 kW, a radiofrequency power of 95 kW, argon being the plasma-generating gas, a DC argon flow rate of 0.6 m³/h, a pressure of 450 Torr, a plasma-generating gas at a radial rate of 8.4 m³/h and a tangential rate of 1.8 m³/h, and a high temperature gas stream limited within an axial range.
(2) By using argon as a carrier gas, SiO raw materials with D50 of 5 µm after mechanical ball milling, air jet pulverization and grading were fed into a plasma stream to react, the carrier gas had a flow rate of 0.5 m³/h and a feeding rate of 5 g/min.
(3) The product obtained from the reaction of step (2) was cooled in a water-cooling device at the tail of the plasma stream, and the cured spherical SiO product after cooling was attached to a wall of the water-cooling device, and collected to obtain a silicon oxygen material. The silicon oxygen material was spherical SiO, and the spherical SiO was primary particles.
(4) The resulting spherical SiO was coated, 100g of SiO powder was placed in a rotary furnace, then nitrogen was put into the furnace for atmosphere replacement, when the oxygen content in the discharged gas is smaller than 200 ppm, the temperature was raised to 900°C in 2°C/min, then an acetylene gas was fed in a flow rate of 0.5L/min, an N₂ protective atmosphere is fed into the furnace in the entire reaction process, a gas flow rate was controlled to be 1L/min, a reaction gas pressure was preserved to be 2 atm, and after continuous reaction for 10h, the acetylene gas was turned off, starting to naturally cool down, resulting in a composite negative electrode material.

The negative electrode material prepared in this example included a SiO core and a carbon layer coated on the SiO core, the carbon element in negative electrode material had a mass content of 4.68%. In the Raman spectrum of the negative electrode material prepared in this Example, silicon characteristic peak A is at 504 cm⁻¹, carbon characteristic peak D is at 1352 cm⁻¹, the carbon characteristic peak G is at 1352 cm⁻¹, the graphene characteristic peak B is at 2695 cm⁻¹, the peak intensity I_{A} = 10.6, I_{D} = 110, I_{G} = 106, I_{B} = 112.3, I_{A}/I_{B} is 0.09, I_{B}/I_{D} is 1.02, I_{D}/I_{G} is 1.04.

### Example 23

A method for preparing a negative electrode material of the present embodiment included following steps.
(1) The plasma generator was controlled to adopt a DC power of 8.5 kW, a radiofrequency power of 95 kW, argon being the plasma-generating gas, a DC argon flow rate of 0.6 m³/h, a pressure of 450 Torr, a plasma-generating gas at a radial rate of 8.4 m³/h and a tangential rate of 1.8 m³/h, and a high temperature gas stream limited within an axial range.
(2) By using argon as a carrier gas, SiO raw materials with D50 of 5 µm after mechanical ball milling, air jet pulverization and grading were fed into a plasma stream to react, the carrier gas had a flow rate of 0.5 m³/h and a feeding rate of 5 g/min.
(3) The product obtained from the reaction of step (2) was cooled in a water-cooling device at the tail of the plasma stream, and the cured spherical SiO product after cooling was attached to a wall of the water-cooling device, and collected to obtain a silicon oxygen material. The silicon oxygen material was spherical SiO, and the spherical SiO was primary particles.
(4) The resulting spherical SiO was coated, 100g of SiO powder was placed in a rotary furnace, then nitrogen was put into the furnace for atmosphere replacement, when the oxygen content in the discharged gas is smaller than 200 ppm, the temperature was raised to 700°C in 2°C/min, then an acetylene gas was fed in a flow rate of 1L/min, an N₂ protective atmosphere is fed into the furnace in the entire reaction process, a gas flow rate was controlled to be 1.5L/min, a reaction gas pressure was preserved to be 2 atm, and after continuous reaction for 10h, the acetylene gas was turned off, starting to naturally cool down, resulting in a composite negative electrode material.

The negative electrode material prepared in this example included a SiO core and a carbon layer coated on the SiO core, the carbon element in negative electrode material had a mass content of 4.38%. In the Raman spectrum of the negative electrode material prepared in this Example, silicon characteristic peak A is at 504 cm⁻¹, carbon characteristic peak D is at 1352 cm⁻¹, the carbon characteristic peak G is at 1352 cm⁻¹, the graphene characteristic peak B is at 2695 cm⁻¹, the peak intensity I_{A} = 10.6, I_{D} = 110, I_{G} = 50, I_{B} = 112.3, I_{A}/I_{B} is 0.09, I_{B}/I_{D} is 1.02, I_{D}/I_{G} is 2.2.

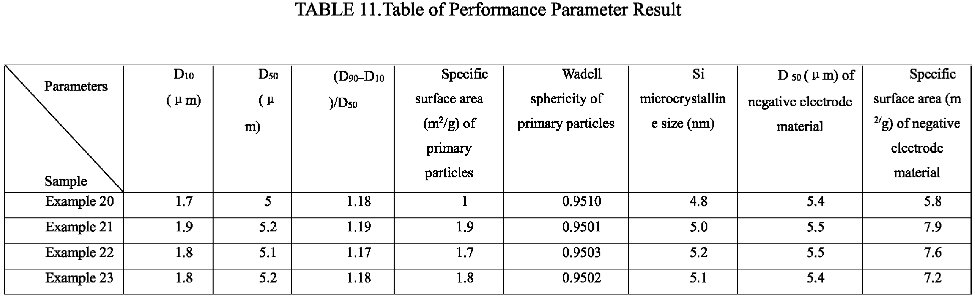

**TABLE 12. Table of Performance Comparison Result of Lithium Ion Battery**

| Sample | First Reversible Capacity (mAh/g) | Initial Coulombic efficiency (% ) | Capacity retention rate (%) after 50 cycles | Volume expansion rate (%) after 50 cycles |
|---|---|---|---|---|
| Example 20 | 1576.2 | 76.86 | 92.6 | 31.5 |
| Example 21 | 1550.6 | 77.01 | 90.5 | 33.9 |
| Example 22 | 1568.4 | 76.98 | 90.1 | 33.6 |
| Example 23 | 1570.1 | 76.89 | 91.0 | 32.9 |

By contrast to the test data of Examples 20 to 23, it can be found that it is required to control the carbon feature peak, silicon feature peak, and graphite feature peak of the silicon oxygen material of the carbon coated surface to be within a suitable range to achieve good electrochemical performance of the material. Excessive large layered structure of graphene can result in increased specific surface area and increased mass content of the carbon element in negative electrode material, which is not conducive to increasing the first reversible capacity and initial Coulombic efficiency of the material.

### Example 24

A method for preparing a negative electrode material of the present embodiment included following steps.
(1) The plasma generator was controlled to adopt a DC power of 8.5 kW, a radiofrequency power of 95 kW, argon being the plasma-generating gas, a DC argon flow rate of 0.6 m³/h, a pressure of 450 Torr, a plasma-generating gas at a radial rate of 8.4 m³/h and a tangential rate of 1.8 m³/h, and a high temperature gas stream limited within an axial range.
(2) By using argon as a carrier gas, SiO raw materials with D50 of 5 µm after mechanical ball milling, air jet pulverization and grading were fed into a plasma stream to react, the carrier gas had a flow rate of 0.5 m³/h and a feeding rate of 5 g/min.
(3) The product obtained from the reaction of step (2) was cooled in a water-cooling device at the tail of the plasma stream, and the cured spherical SiO product after cooling was attached to a wall of the water-cooling device, and collected to obtain a silicon oxygen material. The silicon oxygen material was spherical SiO, and the spherical SiO was primary particles.
(4) 5g of vinylene carbonate was dissolved in 100 ml of ethyl acetate, heated to 50°C, 0.2g of ammonium persulfate was then added, after stirring for 1 hour, 100g of SiO, 0.2g of ammonium persulfate and 5g of water were added, cooled after reacting 5 hours, and a solid material was separated by filtration and then placed in a drying oven under 100°C for 10 hours, cooled to obtain a negative electrode material.

The negative electrode material produced by this Example of the present disclosure included a silicon oxygen material and a carbon layer located on the surface of the silicon oxygen material, the coating layer had a thickness of 500 nm, the coating layer had a mass ratio of 8% in negative electrode material, and the coating layer was a polycarbonate.

### Example 25

A method for preparing a negative electrode material of the present embodiment included following steps.
(1) The plasma generator was controlled to adopt a DC power of 8.5 kW, a radiofrequency power of 95 kW, argon being the plasma-generating gas, a DC argon flow rate of 0.6 m³/h, a pressure of 450 Torr, a plasma-generating gas at a radial rate of 8.4 m³/h and a tangential rate of 1.8 m³/h, and a high temperature gas stream limited within an axial range.
(2) By using argon as a carrier gas, SiO raw materials with D50 of 5 µm after mechanical ball milling, air jet pulverization and grading were fed into a plasma stream to react, the carrier gas had a flow rate of 0.5 m³/h and a feeding rate of 5 g/min.
(3) The product obtained from the reaction of step (2) was cooled in a water-cooling device at the tail of the plasma stream, and the cured spherical SiO product after cooling was attached to a wall of the water-cooling device, and collected to obtain a silicon oxygen material. The silicon oxygen material was spherical SiO, and the spherical SiO was primary particles.
(4) 4g of polyacrylic acid was dissolved in 100 ml of distilled water, heated to 40°C for 2 hours after stirring, 100g of SiO and 5g of water were added, cooled after reacting for 2 hours at a temperature of 60°C, and a solid material was separated by filtration and then placed in a drying oven under 180°C for 4 hours, cooled to obtain a negative electrode material.

The negative electrode material produced by this Example of the present disclosure included a silicon oxygen material and a carbon layer located on the surface of the silicon oxygen material, the coating layer had a thickness of 500 nm, the coating layer had a mass ratio of 6.5% in negative electrode material, and the coating layer was polyacrylic acid.

### Example 26

A method for preparing a negative electrode material of the present embodiment included following steps.
(1) The plasma generator was controlled to adopt a DC power of 8.5 kW, a radiofrequency power of 95 kW, argon being the plasma-generating gas, a DC argon flow rate of 0.6 m³/h, a pressure of 450 Torr, a plasma-generating gas at a radial rate of 8.4 m³/h and a tangential rate of 1.8 m³/h, and a high temperature gas stream limited within an axial range.
(2) By using argon as a carrier gas, SiO raw materials with D50 of 5 µm after mechanical ball milling, air jet pulverization and grading and metal Mg were fed into a plasma stream to react, in which a molar ratio of Si to Mg is 20:1; the carrier gas had a flow rate of 0.5 m³/h and a feeding rate of 5 g/min.
(3) The product obtained from the reaction of step (2) was cooled in a water-cooling device at the tail of the plasma stream, and the cured spherical SiO product containing MgSiO₃ silicate after cooling was attached to a wall of the water-cooling device, and collected to obtain a silicon oxygen material.

The silicon oxygen material produced in this example was spherical primary particles, the silicon oxygen material included silicon oxide SiO and magnesium silicate, the oxygen element in the silicon oxygen material has a mass content of 30%, the Mg element in the silicon oxygen material has a mass content of 15%; and the silicate in the silicon oxygen material has a mass content of 20%. In the elemental distribution spectrum obtained with X-ray scanning SEM facets of the silicon oxygen material primary particles, Si element distribution plane is a uniform dispersion state, the distributed plane of O element is a uniform dispersion state, and the distributed plane of Mg element is a uniform dispersion state.

5g of vinylene carbonate was dissolved in 100 ml of ethyl acetate, heated to 50°C, 0.2g of ammonium persulfate was then added, after stirring for 1 hour, 100g of SiO, 0.2g of ammonium persulfate and 5g of water were added, cooled after reacting 5 hours, and a solid material was separated by filtration and then placed in a drying oven under 100°C for 10 hours, cooled to obtain a negative electrode material.

The negative electrode material produced by this Example of the present disclosure included a silicon oxygen material and a carbon layer coated on the surface of the silicon oxygen material, the coating layer had a thickness of 500 nm, the coating layer had a mass radio of 8% in negative electrode material, and the coating layer was a polycarbonate.

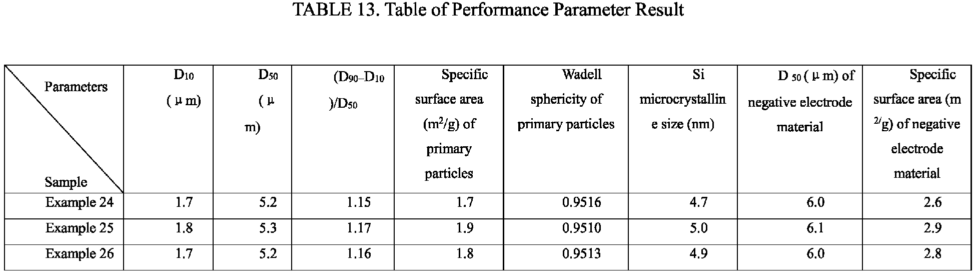

**TABLE 14. Table of Performance Comparison Result of Lithium Ion Battery**

| Sample | First Reversible Capacity (mAh/g) | Initial Coulombic efficiency (% ) | Capacity retention rate (%) after 50 cycles | Volume expansion rate (%) after 50 cycles |
|---|---|---|---|---|
| Example 24 | 1546.8 | 76.98 | 90.4 | 32.5 |
| Example 25 | 1569.8 | 77.01 | 90.0 | 33.0 |
| Example 26 | 1458.2 | 83.24 | 89.9 | 32.6 |

By comparing Examples 24 and 25, it can be found that coating by different polymers can help to improve the cycling performance of the material, while the mass content of polymers in negative electrode material may affect the rate performance of the material.

### Example 27

A method for preparing a negative electrode material of the present embodiment included following steps.
(1) The plasma generator was controlled to adopt a DC power of 8.5 kW, a radiofrequency power of 95 kW, argon being the plasma-generating gas, a DC argon flow rate of 0.6 m³/h, a pressure of 450 Torr, a plasma-generating gas at a radial rate of 8.4 m³/h and a tangential rate of 1.8 m³/h, and a high temperature gas stream limited within an axial range.
(2) By using argon as a carrier gas, SiO raw materials with D50 of 5 µm after mechanical ball milling, air jet pulverization and grading were fed into a plasma stream to react, the carrier gas had a flow rate of 0.5 m³/h and a feeding rate of 5 g/min.
(3) The product obtained from the reaction of step (2) was cooled in a water-cooling device at the tail of the plasma stream, and the cured spherical SiO product after cooling was attached to a wall of the water-cooling device, and collected to obtain a silicon oxygen material. The silicon oxygen material was spherical SiO, and the spherical SiO was primary particles.
(4) 4g of vinylene carbonate was dissolved in 100 g of distilled water, after dissolved sufficiently at a temperature of 40°C, 1g of carbon nanofibers and 5g flake graphite CSG-3 were added under stirring condition, 200g of ethanol was added after stirring for 2 hours, stirring was continued for 0.5h, and 90g of spherical SiO was added under stirring, where temperature is reduced to room temperature after stirring at 60°C for 2 hours, a material was filtered out, was then placed into a drying oven at 180°C for heating 4 hours, and cooled to obtain a negative electrode material.

The negative electrode material produced by this Example of the present disclosure included a silicon oxygen material and a carbon layer located on the surface of the silicon oxygen material, the coating layer had a thickness of 300 nm, the coating layer had a mass ratio of 5% in negative electrode material, and the coating layer included polyacrylic acid, flake graphite, and carbon nanofibers. Flake graphite was attached to the surface of the silicon oxygen material, and the polyacrylic acid was coated on the surface of the silicon oxygen material and flake graphite.

### Example 28

Example 28 differs from Example 27 that:
(4) 4g of polyacrylic acid was dissolved in 100g of distilled water, after dissolved sufficiently at a temperature of 40°C, 1g of carbon nanofibers and 5g flake graphite CSG-3 were added under stirring condition, 200g of ethanol was added after stirring for 2 hours, stirring was continued for 0.5h, and 90g of spherical SiO was added under stirring, where temperature is reduced to room temperature after stirring at 60°C for 2 hours, a material was filtered out, was then placed into a drying oven at 180°C for heating 4 hours, and cooled to obtain a negative electrode material.

The negative electrode material produced by this Example of the present disclosure included a silicon oxygen material and a carbon layer located on the surface of the silicon oxygen material, the coating layer had a thickness of 300 nm, the coating layer had a mass ratio of 5% in negative electrode material, and the coating layer included polyacrylic acid, flake graphite, and carbon nanofibers. Flake graphite was attached to the surface of the silicon oxygen material, and the polyacrylic acid was coated on the surface of the silicon oxygen material and flake graphite.

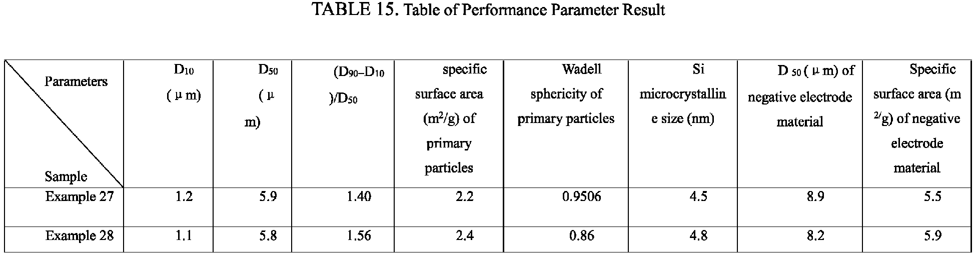

**TABLE 16. Table of Performance Comparison Result of Lithium Ion Battery**

| Sample | First Reversible Capacity (mAh/g) | Initial Coulombic efficiency (% ) | Capacity retention rate (%) after 50 cycles | Volume expansion rate (%) after 50 cycles |
|---|---|---|---|---|
| Example 27 | 1412.3 | 80.12 | 89.1 | 32.9 |
| Example 28 | 1409.2 | 80.31 | 83.4 | 34.9 |

By comparing Examples 27 and 28, it can be found that the negative electrode material was obtained after the polymer coating process, since the silicon oxygen material at the core had a higher sphericity, it uniformly contracted and expanded radially along the radial direction outward during the cycling process, which can maintain stability of the structure due to isotropic stress, and cycling performance of the negative electrode material was significantly improved.

### Example 29

A method for preparing a negative electrode material of the present embodiment included following steps.
(1) The plasma generator was controlled to adopt a DC power of 8.5 kW, a radiofrequency power of 95 kW, argon being the plasma-generating gas, a DC argon flow rate of 0.6 m³/h, a pressure of 450 Torr, a plasma-generating gas at a radial rate of 8.4 m³/h and a tangential rate of 1.8 m³/h, and a high temperature gas stream limited within an axial range.
(2) By using argon as a carrier gas, SiO raw materials with D50 of 5 µm after mechanical ball milling, air jet pulverization and grading were fed into a plasma stream to react, and cooled to obtain silicon oxide SiO, in which the carrier gas had a flow rate of 0.5 m³/h and a feeding rate of 5 g/min.
(3) Methane gas and polyacrylonitrile were fed into a plasma generator using argon as the carrier gas for reaction, a mass ratio of polyacrylonitrile to SiO was 1:4, a volume ratio of argon to methane gas was 10:2; in which a flow rate of the carrier gas was 0.5m³/h, a feeding rate was 5 g/min.
(4) The product obtained from the reaction of step (3) was cooled in a water-cooling device at the tail of the plasma stream, and the cured spherical SiO product after cooling was attached to a wall of the water-cooling device, and collected to obtain a silicon oxygen material.

The negative electrode material of this Example was a spherical SiO-C composite material, the negative electrode material was secondary particles, the negative electrode material included a carbon material and a silicon oxide distributed in the carbon material, the carbon element in the negative electrode material has a mass content of 10%, in which, the volume of the powder with particle size below 1.0 µm in the silicon oxide accounts for 9% of the total silicon oxide; particle size of the negative electrode material satisfied following relationship: D₉₀ is about 31 µm, D₅₀ is about 20.3 µm, and D₁₀ is about 8.9 µm.

### Example 30

Example 30 differs from Example 29 that:
in step (2), the reaction is carried out by feeding methane gas into the plasma generator.

The negative electrode material of this Example was a spherical SiO-C composite material, the negative electrode material was secondary particles, the negative electrode material included a carbon material and a silicon oxide distributed in the carbon material, the carbon element in the negative electrode material has a mass content of 5%, in which, the volume of the powder with particle size below 1.0 µm in the silicon oxide accounts for 9% of the total silicon oxide; particle size of the negative electrode material satisfied following relationship: D₉₀ is about 36 µm, D₅₀ is about 19 µm, and D₁₀ is about 11 µm.

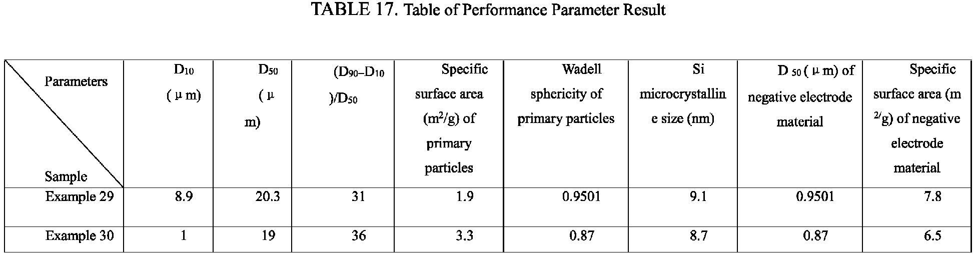

**TABLE 16. Table of Performance Comparison Result of Lithium Ion Battery**

| Sample | First Reversible Capacity (mAh/g) | Initial Coulombic efficiency (% ) | Capacity retention rate (%) after 50 cycles | Volume expansion rate (%) after 50 cycles |
|---|---|---|---|---|
| Example 29 | 1442.6 | 77.14 | 91.2 | 33.2 |
| Example 30 | 1439.2 | 77.09 | 89.1 | 35.0 |

By contrast with Examples 29 and 30, it can be found that the higher sphericity of the resulting negative electrode material, the higher the cycling performance of the negative electrode material.

### Example 31

A method for preparing a negative electrode material of the present embodiment included following steps.
(1) The plasma generator was controlled to adopt a DC power of 8.5 kW, a radiofrequency power of 95 kW, argon being the plasma-generating gas, a DC argon flow rate of 0.6 m³/h, a pressure of 450 Torr, a plasma-generating gas at a radial rate of 8.4 m³/h and a tangential rate of 1.8 m³/h, and a high temperature gas stream limited within an axial range.
(2) By using argon as a carrier gas, SiO raw materials with D50 of 5 µm after mechanical ball milling, air jet pulverization and grading were fed into a plasma stream to react, and cooled to obtain silicon oxide SiO, in which the carrier gas had a flow rate of 1 m³/h and a feeding rate of 5 g/min.
(3) Methane gas and polyacrylonitrile were fed into a plasma generator using argon as the carrier gas for reaction, a mass ratio of polyacrylonitrile to SiO was 1:4, a volume ratio of argon to acetylene gas was 10:2; in which a flow rate of the carrier gas was 1m³/h, a feeding rate was 5 g/min.
(4) The product obtained from the reaction of step (3) was cooled in a water-cooling device at the tail of the plasma stream, and the cured spherical SiO product after cooling was attached to a wall of the water-cooling device, and collected to obtain a silicon oxygen material.

The negative electrode material of this Example was a spherical SiO-C composite material, the negative electrode material was secondary particles, the negative electrode material included a carbon material and a silicon oxide distributed in the carbon material, the carbon element in the negative electrode material has a mass content of 12%, in which, the volume of the powder with particle size below 1.0 µm in the silicon oxide accounts for 8.5% of the total silicon oxide; particle size of the negative electrode material satisfied following relationship: D₉₀ is about 30 µm, D₅₀ is about 15 µm, and D₁₀ is about 5 µm.

### Example 32

A method for preparing a negative electrode material of the present embodiment included following steps.
(1) The plasma generator was controlled to adopt a DC power of 8.5 kW, a radiofrequency power of 95 kW, argon being the plasma-generating gas, a DC argon flow rate of 0.6 m³/h, a pressure of 450 Torr, a plasma-generating gas at a radial rate of 8.4 m³/h and a tangential rate of 1.8 m³/h, and a high temperature gas stream limited within an axial range.
(2) By using argon as a carrier gas, SiO raw materials with D50 of 5 µm after mechanical ball milling, air jet pulverization and grading were fed into a plasma stream to react, and cooled to obtain silicon oxide SiO, in which the carrier gas had a flow rate of 1 m³/h and a feeding rate of 5 g/min.
(3) Methane gas and polyacrylonitrile were fed into a plasma generator using argon as the carrier gas for reaction, a mass ratio of polyacrylonitrile to SiO was 1:6, a volume ratio of argon to acetylene gas was 10:3; in which a flow rate of the carrier gas was 1m³/h, a feeding rate was 5 g/min.
(4) The product obtained from the reaction of step (3) was cooled in a water-cooling device at the tail of the plasma stream, and the cured spherical SiO product after cooling was attached to a wall of the water-cooling device, and collected to obtain a silicon oxygen material.

The negative electrode material of this Example was a spherical SiO-C composite material, the negative electrode material was secondary particles, the negative electrode material included a carbon material and a silicon oxide distributed in the carbon material, the carbon element in the negative electrode material has a mass content of 10%, in which, the volume of the powder with particle size below 1.0 µm in the silicon oxide accounts for 10% of the total silicon oxide; particle size of the negative electrode material satisfied following relationship: D₉₀ is about 55 µm, D₅₀ is about 22 µm, and D₁₀ is about 11 µm.

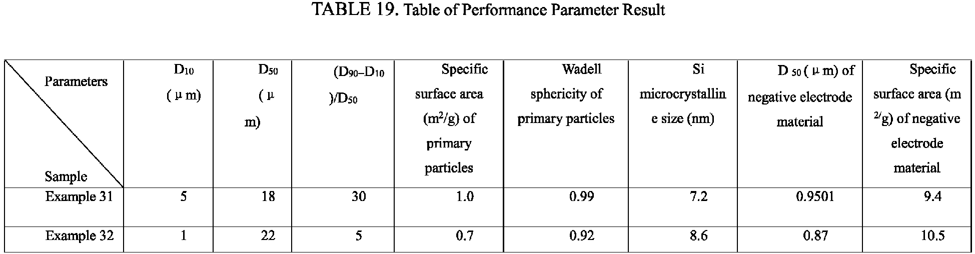

**TABLE 20. Table of Performance Comparison Result of Lithium Ion Battery**

| Sample | First Reversible Capacity (mAh/g) | Initial Coulombic efficiency (% ) | Capacity retention rate (%) after 50 cycles | Volume expansion rate (%) after 50 cycles |
|---|---|---|---|---|
| Example 31 | 1446.9 | 77.26 | 91.2 | 33.1 |
| Example 32 | 1440.1 | 77.18 | 90.6 | 36.0 |

By contrast with the test data of Examples 31 and 32, it can be found that when the contents of the carbonaceous binder and the carbon source gas were increased, the particle size of the negative electrode material was significantly increased, so that it leads to poor cycling performance during the cycling process due to excessive stress concentration in the particles.

While preferred Examples has been disclosed in the present disclosure, they are not used to limit the claims, those skilled in the art can make various changes and modifications without departing from the concepts of the present disclosure, and the scope of the present disclosure shall be determined by following claims.

## Claims

1. A silicon oxygen material, comprising a silicon oxide having a chemical formula SiOₓ, where 0<x<2, wherein the silicon oxygen material is primary particles having a Wadell sphericity greater than 0.92.

2. The silicon oxygen material according to claim 1, further comprising at least one of a reducing metal or a reducing metal compound.

3. The silicon oxygen material according to claim 2, wherein the silicon oxygen material has at least one of following features (1) to (14):
(1) the reducing metal comprises at least one of an alkali metal, an alkaline earth metal, or a transition metal;
(2) the reducing metal comprises at least one of Li, K, Mg, Al, Ca, Zn, Na, or Ti;
(3) an oxygen element in the silicon oxygen material has a mass content of 10% to 50%;
(4) a reducing metal element in the silicon oxygen material has a mass content of 0.5% to 50%;
(5) distributed faces of Si, O and reducing metal elements have a uniformly dispersion state in an elemental distribution spectrum obtained by scanning SEM facets of the primary particles of the silicon oxygen material with X-rays;
(6) the reducing metal compound comprises at least one of a reducing metal oxide, a reducing metal silicide, or a reducing metal silicate;
(7) the reducing metal compound comprises a reducing metal silicate uniformly distributed within the primary particles;
(8) the reducing metal compound comprises a reducing metal silicate, a mass content of the reducing metal silicate in the silicon oxygen material is 10% to 80%;
(9) the reducing metal compound comprises a reducing metal silicate comprising lithium silicate;
(10) the reducing metal compound comprises a reducing metal silicate comprising a lithium silicate, and the lithium silicate comprises at least one of Li₂SiO₃, Li₄SiO₄, Li₂Si₂O₅ or Li₂Si₃O₇;
(11) the reducing metal compound comprises a reducing metal silicate comprising a lithium silicate, the lithium silicate is Li₂Si₂O₅;
(12) the reducing metal compound comprises a reducing metal silicate comprising a crystalline Li₂Si₂O₅, the crystalline Li₂Si₂O₅ has a crystal grain size smaller than 20 nm;
(13) the reducing metal compound comprises a reducing metal silicate comprising a crystalline Li₂Si₂O₅, a mass content of Li₂Si₂O₅ in the silicon oxygen material is 20% to 80%; and
(14) the reducing metal compound comprises a reducing metal silicate comprising a lithium silicate, a molar ratio of Si to Li in the silicon oxygen material is (1 to 50):1.

4. The silicon oxygen material according to any one of claims 1 to 3, comprising at least one of following features (1) to (7):
(1) the Wadell sphericity of the primary particles is greater than 0.95;
(2) a Si microcrystalline size in the silicon oxygen material is smaller than or equal to 20 nm;
(3) a Si microcrystalline size in the silicon oxygen material is smaller than or equal to 10 nm;
(4) a D₅₀ of the silicon oxygen material is smaller than or equal to 50 µm;
(5) a particle size distribution of the silicon oxygen material satisfies: 3 µm<D₅₀<10 µm, 2 µm≤D₁₀≤5 µm, and 0.8≤(D₉₀₋D₉₀)/D₅₀≤1.2;
(6) the silicon oxygen material has a specific surface area smaller than 10 m²/g; and
(7) the silicon oxygen material further comprises a non-metal doping element.

5. A negative electrode material comprising the silicon oxygen material of any one of claims 1 to 4.

6. The negative electrode material according to claim 5, wherein the negative electrode material comprises at least one of following features (1) to (4):
(1) the negative electrode material further comprises a carbon layer coated on a surface of the silicon oxygen material;
(2) a difference between a maximum value and a minimum value of a thickness of the carbon layer is smaller than the minimum value; and
(3) the carbon layer has a thickness of 10 nm to 500 nm; and
(4) a D₅₀ of the negative electrode material is smaller than or equal to 100 µm.

7. The negative electrode material according to claim 5, wherein the negative electrode material comprises at least one of following features (1) to (14):
(1) the negative electrode material further comprises a carbon material, the silicon oxygen material is dispersed in the carbon material, the negative electrode material is spherical particles, the negative electrode material has a Wadell sphericity greater than 0.3;
(2) the negative electrode material has a Wadell sphericity greater than 0.5;
(3) the negative electrode material has a Wadell sphericity greater than 0.92;
(4) in the silicon oxygen material, a mass of the oxygen element accounts for 0% to 67% of a total mass of the silicon element and the oxygen element, wherein 0% is excluded;
(5) a D₅₀ of the negative electrode material is smaller than or equal to 40 µm;
(6) the negative electrode material has a porosity smaller than 20%;
(7) the silicon oxygen material accounts for 40% to 95% of the mass of the negative electrode material;
(8) the negative electrode material further comprises a carbon material, the silicon oxygen material is dispersed in the carbon material, and the carbon material comprises amorphous carbon;
(9) the negative electrode material further comprises a graphite;
(10) the negative electrode material further comprises a graphite comprising at least one of natural graphite, artificial graphite, and mesocarbon microbeads;
(11) the negative electrode material further comprises a graphite, the graphite has a mass fraction of 0% to 40%, the silicon oxygen material has a mass fraction of 40% to 95%, the carbon material has a mass fraction of 5% to 60%, based on a total mass 100% of the negative electrode material;
(12) the negative electrode material further comprises a carbon material formed on a surface of the silicon oxygen material, and the carbon material has a graphene structure;
(13) in a Raman spectrum, the negative electrode material has a carbon characteristic peak D, a carbon characteristic peak G, a silicon characteristic peak A, and a graphene characteristic peak B; and
(14) a ratio I_{A}/I_{B} of a peak intensity Ia of the silicon characteristic peak A to a peak intensity I_{B} of the graphene characteristic peak B is 0.1 to 50, and a ratio I_{D}/I_{G} of a peak intensity I_{D} of the carbon characteristic peak D to a peak intensity I_{G} of the carbon characteristic peak G is 0.5 to 2.0, and a ratio I_{B}/I_{D} of the peak intensity I_{B} of the graphene characteristic peak B to the peak intensity In of the carbon characteristic peak D is 0 to 1.

8. The negative electrode material according to claim 5, further comprising a carbon material, wherein the silicon oxygen material is dispersed in the carbon material, the negative electrode material is secondary particles, and the negative electrode material has a Wadell sphericity greater than 0.91.

9. The negative electrode material according to claim 8, wherein the negative electrode material comprises at least one of following features (1) to (10):
(1) the silicon oxygen material is silicon oxide primary particles;
(2) a volume of powders of the silicon oxide having a particle size below 1.0 µm accounts for below 15% of a total volume of the silicon oxide;
(3) the silicon oxide has particle sizes of D90<25.0 µm, D₁₀>0.5 µm, and 1 µm≤D₅₀≤10 µm;
(4) the silicon oxide has a Si microcrystalline size of 1.0 nm to 20 nm;
(5) the negative electrode material has a specific surface area of 0.5m²/g to 50m²/g;
(6) the negative electrode material has a compaction density of 0.5g/cm³ to 5.0g/cm³;
(7) the particle size D₅₀ of the negative electrode material is 2 to 10 times as big as a particle size D₅₀ of the silicon oxide;
(8) a particle size of the negative electrode material satisfies a relationship followed: 20 µm≤D₉₀≤50 µm, 5 µm<D₅₀<20 µm, and 2 µm≤D₁₀≤5 µm;
(9) the carbon element in the negative electrode material has a mass content of 2% to 20%; and
(10) the negative electrode material has a porosity of 1% to 50%.

10. The negative electrode material according to claim 5, further comprising a coating layer located on a surface of the silicon oxygen material, wherein the coating layer comprises a flexible polymer.

11. The negative electrode material according to claim 10, wherein the negative electrode material comprises at least one of following features (1) to (17):
(1) the flexible polymer comprises a natural flexible polymer and/or a synthetic flexible polymer;
(2) the flexible polymer comprises at least one of a polyolefin and its derivatives, a polyvinyl alcohol and its derivatives, a polyacrylic acid and its derivatives, a polyamide and its derivatives, a carboxymethyl cellulose and its derivatives, or alginic acid and its derivatives;
(3) the flexible polymer has a weight average molecular weight of 2000 to 1000000;
(4) the flexible polymer comprises a thermally crosslinking functional group comprising at least one of an epoxy group, a carboxyl group, a hydroxyl group, an amino group, a double bond, or an triple bond;
(5) the coating layer further comprises a conductive material;
(6) the conductive material comprises a flake graphite and a carbon nanomaterial;
(7) the flake graphite comprises a natural flake graphite and/or an artificial flake graphite;
(8) the carbon nanomaterial comprises at least one of conductive graphite, graphene, carbon nanotubes, or carbon nanofibers;
(9) the coating layer further comprises a non-water-soluble lithium silicate;
(10) the non-water-soluble lithium silicate comprises at least one of Li₂SiO₃ and LizSizOs;
(11) a mass percentage of the flexible polymer is 0 to 10%, in which 0 is excluded, based on the total mass 100% of the silicon oxygen material;
(12) the mass percentage of the flake graphite is 0 to 20%, in which 0 is excluded, based on the total mass 100% of the silicon oxygen material;
(13) the mass percentage of the carbon nanomaterial is 0 to 5%, in which 0 is excluded, based on a total mass 100% of the silicon oxygen material;
(14) the flexible polymer comprises a polycarbonate;
(15) the coating layer has a thickness of 10 nm to 5000 nm;
(16) the coating layer in the negative electrode material has a mass percentage of 0% to 20% where 0 is excluded; and
(17) the coating layer in the negative electrode material has a mass percentage of 2% to 10%.

12. A method for preparing a negative electrode material, comprising following steps: heat treating raw materials for preparing a silicon oxygen material, and cooling to obtain a silicon oxygen material comprising a silicon oxide, wherein the silicon oxide has a chemical formula of SiOₓ, where 0<x<2, and the silicon oxygen material has a Wadell sphericity greater than 0.92.

13. The method according to claim 12, wherein the method comprises at least one of following features (1) to (24):
(1) the step of heat treating the raw materials for preparing the silicon oxygen material comprises: plasma-reacting the raw materials for preparing the silicon oxygen material;
(2) the step of heat treating the raw materials for preparing the silicon oxygen material comprises: feeding raw materials for preparing the silicon oxygen material to a plasma stream for a plasma-reaction;
(3) the raw materials for preparing the silicon oxygen material comprise at least one of a mixture of Si, SiO_{y} and SiO₂; a mixture of SiO_{y} and Si; and a mixture of Si and SiO₂, where 0<y<2;
(4) the raw materials for preparing the silicon oxygen material comprise SiH₄ and O₂;
(5) the step of heat treating the raw materials for preparing the silicon oxygen material comprises: feeding raw materials for preparing the silicon oxygen material to a plasma stream for a plasma-reaction, the temperature of the plasma stream is 1400°C to 2400°C;
(6) the step of heat treating the raw materials for preparing the silicon oxygen material comprises: feeding raw materials for preparing the silicon oxygen material to a plasma stream for a plasma-reaction, a feeding rate of the raw materials is 2.0 g/min to 80 g/min;
(7) the step of heat treating the raw materials for preparing the silicon oxygen material comprises: using a carrier gas to feed raw materials for preparing the silicon oxide to a plasma stream for a plasma-reaction;
(8) the step of heat treating the raw materials for preparing the silicon oxygen material comprises: using a carrier gas to feed raw materials for preparing the silicon oxide to a plasma stream for a plasma-reaction, while feeding a reducing gas;
(9) the step of heat treating the raw materials for preparing the silicon oxygen material comprises: using a carrier gas to feed raw materials for preparing the silicon oxide to a plasma stream for a plasma-reaction, while feeding a reducing gas, wherein the reducing gas comprises at least one of methane and hydrogen;
(10) the step of heat treating the raw materials for preparing the silicon oxygen material comprises: using a carrier gas to feed raw materials for preparing the silicon oxide to a plasma stream for a plasma-reaction, while feeding a reducing gas, wherein a molar ratio of the reducing gas to the silicon oxide is 0 to 0.25, in which 0 is excluded;
(11) the step of heat treating the raw materials for preparing the silicon oxygen material comprises: using a carrier gas to feed raw materials for preparing the silicon oxide to a plasma stream for a plasma-reaction, while feeding a reducing gas, wherein the reducing gas has a radial velocity ranging from 1m³/h to 10m³/h;
(12) the raw materials for preparing the silicon oxygen material further comprises a reducing metal;
(13) the raw materials for preparing the silicon oxygen material further comprises a reducing metal, wherein the reducing metal comprises at least one of an alkali metal, an alkaline earth metal, and a transition metal;
(14) the raw materials for preparing the silicon oxygen material further comprises a reducing metal, wherein the reducing metal comprises at least one of Li, K, Mg, Al, Ca, Zn, Na, and Ti;
(15) the raw materials for preparing the silicon oxygen material further comprises a reducing metal, wherein the reducing metal comprises Li, and a molar ratio of Si to Li in the raw materials for preparing the silicon oxide is (1 to 50):1;
(16) the raw materials for preparing the silicon oxygen material further comprises a reducing metal, wherein the reducing metal comprises Mg, and a molar ratio of Si to Mg in the raw materials for preparing the silicon oxide is (5 to 50):1;
(17) the method further comprises: water-washing and/or acid-washing the heat treated product to be neutral, and performing solid-liquid separation and drying;
(18) the step of heat treating the raw materials for preparing the silicon oxygen material comprises: atomizing the molten raw materials of the silicon oxygen material;
(19) the step of heat treating the raw materials for preparing the silicon oxygen material comprises: atomizing the molten raw materials of the silicon oxygen material by using a pressurized gas;
(20) the step of heat treating the raw materials for preparing the silicon oxygen material comprises: atomizing the molten raw materials of the silicon oxygen material by using a pressurized gas, wherein the pressurized gas is a protective gas, and the protective gas comprises at least one of nitrogen, argon, neon, krypton, and helium;
(21) the step of heat treating the raw materials for preparing the silicon oxygen material comprises: atomizing the molten raw materials of the silicon oxygen material by using a pressurized gas, the pressurized gas has a pressure of 0.2 MPa to 100 Mpa;
(22) the step of cooling is to cool droplets of the raw materials of the silicon oxide to below 100°C;
(23) a cooling rate is 1°C/s to 100°C/s; and
(24) the cooling is performed by using a protective gas, wherein the protective gas comprises at least one of nitrogen, argon, neon, krypton, and helium.

14. The method according to claim 12, wherein the method comprising at least one of following features (1) to (7):
(1) the step of heat treating the raw materials for preparing the silicon oxygen material comprises: heat treating raw materials containing a silicon oxygen material and an organic carbon source, so that the organic carbon source is melted and atomized;
(2) the step of heat treating the raw materials for preparing the silicon oxygen material comprises: heat treating raw materials containing a silicon oxygen material and an organic carbon source, so that the organic carbon source is melted and atomized, wherein the organic carbon source comprises at least one of a saccharide, an ester, a hydrocarbon, an organic acid, and a high-molecular polymer;
(3) the step of heat treating the raw materials for preparing the silicon oxygen material comprises: heat treating raw materials containing a silicon oxygen material and an organic carbon source, so that the organic carbon source is melted and atomized, wherein the organic carbon source comprises at least one of polyvinyl chloride, polyvinyl butyral, polyacrylonitrile, polyacrylic acid, citric acid, polyethylene glycol, polypyrrole, polyaniline, sucrose, glucose, maltose, citric acid, asphalt, furfural resin, epoxy resin, and phenolic resin;
(4) the step of heat treating the raw materials for preparing the silicon oxygen material comprises: heat treating raw materials containing a silicon oxygen material and an organic carbon source, so that the organic carbon source is melted and atomized, wherein a mass ratio of the organic carbon source to the silicon oxide is 5:(5 to 95);
(5) the step of heat treating the raw materials for preparing the silicon oxygen material comprises: heat treating raw materials containing a silicon oxygen material and an organic carbon source, so that the organic carbon source is melted and atomized, wherein the raw materials containing the silicon oxygen material and the organic carbon source further comprises graphite;
(6) the method further comprises: carbonizing the cooled product to obtain a negative electrode material; and
(7) the method further comprises: carbonizing the cooled product to obtain a negative electrode material, wherein a temperature of carbonization treatment is 600°C and 1000°C.

15. The method according to claim 13, further comprising: feeding a carbon source gas and silicon oxygen material into the plasma stream to perform secondary granulation and cooled to obtain a negative electrode material containing silicon oxide and the carbon material, wherein the negative electrode material is secondary particles, the silicon oxide has a chemical formula of SiOₓ, 0 < x < 2, and the negative electrode material has a Wadell sphericity greater than 0.91.

16. The method according to claim 15, wherein the method comprises at least one of following features (1) to (17):
(1) the silicon oxygen material is silicon oxide primary particles;
(2) a volume of powders of the silicon oxide having a particle size below 1.0 µm accounts for below 15% of a total of the silicon oxide;
(3) the silicon oxide has a particle size of D₉₀<25.0 µm, D₁₀>0.5 µm, and 1 µm≤D₅₀≤10 µm;
(4) the silicon oxide has a Si microcrystalline size of 1.0 nm to 20 nm;
(5) the carbon source gas comprises a hydrocarbon;
(6) the carbon source gas comprises at least one of methane, acetylene, ethylene, ethane, propane, propylene, methylacetylene, acetone, and benzene;
(7) a volume ratio of the carrier gas to the carbon source gas is 10:(0.5 to 10);
(8) the step of feeding a carbon source gas and silicon oxygen material into the plasma stream to perform secondary granulation further comprises: adding a carbonaceous binder to the plasma stream;
(9) the step of feeding a carbon source gas and silicon oxygen material into the plasma stream to perform secondary granulation further comprises: adding a carbonaceous binder to the plasma stream, wherein the carbonaceous binder comprises at least one of a saccharide, an ester, a hydrocarbon, an organic acid, and a high-molecular polymer;
(10) the step of feeding a carbon source gas and silicon oxygen material into the plasma stream to perform secondary granulation further comprises: adding a carbonaceous binder to the plasma stream, wherein the carbonaceous binder comprises at least one of polyvinyl chloride, polyvinyl butyral, polyacrylonitrile, polyacrylic acid, polyethylene glycol, polypyrrole, polyaniline, sucrose, glucose, maltose, citric acid, asphalt, furfural resin, epoxy resin, and phenolic resin;
(11) the step of feeding a carbon source gas and silicon oxygen material into the plasma stream to perform secondary granulation further comprises: adding a carbonaceous binder to the plasma stream, wherein a mass ratio of the carbonaceous binder to the silicon oxide is 5:95 to 50:50;
(12) the particle size D₅₀ of the negative electrode material is 2 to 10 times as big as the particle size D₅₀ of the silicon oxide;
(13) the particle size of the negative electrode material satisfies a relationship followed: 20 µm≤D₉₀≤50 µm, 5 µm<D₅₀<20 µm, and 2 µm≤D₁₀≤5 µm;
(14) the carbon element in the negative electrode material has a mass content of 2% to 20%;
(15) the negative electrode material has a porosity of 1% to 50%;
(16) the negative electrode material has a specific surface area of 0.5m²/g to 50m²/g; and
(17) the negative electrode material has a compaction density of 0.5g/cm³ to 5.0g/cm³.

17. The method according to any one of claims 12 to 14, wherein the method comprising at least one of following features (1) to (15):
(1) the method further comprises: carbon-coating the silicon oxygen material to obtain the negative electrode material;
(2) the method further comprises: carbon-coating the silicon oxygen material to obtain the negative electrode material, the carbon-coating comprises at least one of a solid phase carbon-coating, a liquid phase carbon-coating, and a vapor phase carbon coating;
(3) the method further comprises: after heating the silicon oxygen material, feeding a protective gas and a carbon source gas, thermally cracking the carbon source gas to obtain the negative electrode material;
(4) the method further comprises: after heating the silicon oxygen material, feeding a protective gas and a carbon source gas, thermally cracking the carbon source gas to obtain the negative electrode material, wherein the carbon source gas is a hydrocarbon;
(5) the method further comprises: after heating the silicon oxygen material, feeding a protective gas and a carbon source gas, thermally cracking the carbon source gas to obtain the negative electrode material, wherein at least one of methane, ethylene, acetylene, methylacetylene, propylene, propane, toluene, benzene, styrene, or phenol;
(6) the method further comprises: after heating the silicon oxygen material, feeding a protective gas and a carbon source gas, thermally cracking the carbon source gas to obtain the negative electrode material, wherein the temperature of thermal cracking is 600°C to 1000°C;
(7) the method further comprises: after heating the silicon oxygen material, feeding a protective gas and a carbon source gas, thermally cracking the carbon source gas to obtain the negative electrode material, wherein the silicon oxygen material has a heating temperature between 500°C and 1200°C and a heat preservation period between 0.5 hour and 20 hours;
(8) the method further comprises: after heating the silicon oxygen material, feeding a protective gas and a carbon source gas, thermally cracking the carbon source gas to obtain the negative electrode material, wherein a reaction gas pressure of the thermal cracking is from 1.0 atm to 10.0 atm;
(9) the method further comprises: after heating the silicon oxygen material, feeding a protective gas, a carbon source gas and an auxiliary gas, thermally cracking the carbon source gas to obtain the negative electrode material, wherein the auxiliary gas comprises H₂;
(10) the method further comprises: after heating the silicon oxygen material, feeding a protective gas, a carbon source gas, and an auxiliary gas, thermally cracking the carbon source gas to obtain the negative electrode material, wherein a molar ratio of the carbon source gas to the auxiliary gas is (2 to 10):1;
(11) the method further comprises: carbonizing a mixture obtained by mixing the silicon oxygen material and a solid carbon source to obtain the negative electrode material;
(12) the method further comprises: carbonizing a mixture obtained by mixing the silicon oxygen material and a solid carbon source to obtain the negative electrode material, wherein the carbonizing is performed at a temperature of 500°C to 1000°C for 2 hours to 20 hours;
(13) the method further comprises: carbonizing a mixture obtained by mixing the silicon oxygen material and a solid carbon source to obtain the negative electrode material, wherein the solid carbon source comprises at least one of a saccharide, an ester, a hydrocarbon, an organic acid or a high-molecular polymer;
(14) the method further comprises: carbonizing a mixture obtained by mixing the silicon oxygen material and a solid carbon source to obtain the negative electrode material, wherein the solid carbon source comprises at least one of polyvinyl chloride, polyvinyl butyral, polyacrylonitrile, polyacrylic acid, polyethylene glycol, polypyrrole, polyaniline, sucrose, glucose, maltose, citric acid, asphalt, furfural resin, epoxy resin or phenolic resin; and
(15) the method further comprises: carbonizing a mixture obtained by mixing the silicon oxygen material and a solid carbon source to obtain the negative electrode material, wherein a mass ratio of the solid carbon source to the silicon oxygen material is 5:(5 to 95).

18. The method according to any one of claims 12 to 14, further comprising:
coating the silicon oxygen material with a flexible polymer-containing coating liquid to obtain a negative electrode material.

19. The method according to claim 18, wherein the method comprises at least one of following features (1) to (15):
(1) the flexible polymer comprises a natural flexible polymer and/or a synthetic flexible polymer;
(2) the flexible polymer comprises at least one of a polyolefin and its derivatives, a polyvinyl alcohol and its derivatives, a polyacrylic acid and its derivatives, a polyamide and its derivatives, a carboxymethyl cellulose and its derivatives, and alginic acid and its derivatives;
(3) the flexible polymer has a weight average molecular weight of 2000 to 1000000;
(4) the flexible polymer comprises a thermally crosslinking functional group comprising at least one of an epoxy group, carboxyl group, a hydroxyl group, an amino group, a double bond, or an triple bond;
(5) the flexible polymer is a combination of a polyolefin and its derivatives, and a polyolefin and derivatives with alginic acid and its derivatives;
(6) a coating liquid comprises a solvent, the solvent is at least one of water, methanol, ethanol, polypyrrolidone, isopropanol, acetone, petroleum ether, tetrahydrofuran, ethyl acetate, N,N-dimethylacetamide, N,N-dimethylformamide, n-hexane, or a halogenated hydrocarbon;
(7) the coating liquid comprises an anti-solvent, the anti-solvent is a poor solvent for the flexible polymer;
(8) the coating liquid comprises an anti-solvent, the anti-solvent is at least one of methanol, ethanol, polypyrrolidone, isopropanol, acetone, petroleum ether, tetrahydrofuran, ethyl acetate, N,N-dimethylacetamide, N,N-dimethylformamide, n-hexane, or a halogenated hydrocarbon;
(9) the step of coating the silicon oxygen material with the flexible polymer-containing coating liquid comprises: adding the silicon oxygen material to the flexible polymer-containing coating liquid, stirring, separating to obtain a negative electrode material precursor, and heat treating the negative electrode material precursor;
(10) the step of coating the silicon oxygen material with the flexible polymer-containing coating liquid comprises: adding a silicon oxygen material to the flexible polymer-containing coating liquid, stirring, separating to obtain a negative electrode material precursor, and heat treating the negative electrode material precursor; wherein the temperature of the heat treatment is 100°C to 400°C and a duration of the heat treatment is 2 hours to 12 hours;
(11) the step of coating the silicon oxygen material with the flexible polymer-containing coating liquid comprises: adding the silicon oxygen material to the flexible polymer-containing coating liquid, stirring, separating to obtain a negative electrode material precursor, and heat treating the negative electrode material precursor; wherein a stirring temperature is 20°C to 100°C and a stirring time is 1 hour to 24 hours;
(12) the coating liquid further comprises a conductive material;
(13) the coating liquid further comprises a conductive material, wherein the conductive material comprises flake graphite and a carbon nanomaterial;
(14) the coating liquid further comprises a non-water-soluble lithium silicate; and
(15) the coating liquid further comprises the non-water-soluble lithium silicate comprising at least one of Li₂SiO₃ and Li₂Si₂O₅.

20. A lithium ion battery comprising a silicon oxygen material of any one of claims 1 to 4, a negative electrode material of any one of claims 5 to 11, or a negative electrode material obtained from a method of any one of claims 12 to 19.
